# EUROPEAN PATENT APPLICATION

(11) **EP 4 756 080 A1**
(43) Date of publication of application: **10.06.2026**
(21) Application number: 24849237.3
(22) Date of filing: 01.08.2024
(51) Int. Cl.: C25B 9/00, B01J 23/44, B01J 23/52, B01J 23/63, B01J 23/648, B01J 23/652, B01J 27/053, B01J 29/068, C07B 61/00, C07C 68/00, C07C 69/96, C25B 1/23, C25B 3/07, C25B 3/25, C25B 3/26, C25B 9/19, C25B 9/23, C25B 11/054, C25B 11/081, C25B 11/085

(54) **ELECTROCHEMICAL REACTION DEVICE AND METHOD FOR PRODUCING ORGANIC SUBSTANCE**

(30) Priority: 02.08.2023 JP 2023126435; 26.09.2023 JP 2023163731; 22.12.2023 JP 2023217268
(71) Applicant: Sekisui Chemical Co., Ltd., Osaka-shi, Osaka 530-8565 (JP)
(72) Inventor: FUJINUMA, Naohiro, Tsukuba-shi, Ibaraki 300-4292 (JP); IKAWA, Hiroyuki, Tsukuba-shi, Ibaraki 300-4292 (JP); NISHI, Hiroaki, Tsukuba-shi, Ibaraki 300-4292 (JP); MATSUMOTO, Daichi, Tsukuba-shi, Ibaraki 300-4292 (JP); HONG, Dachao, Tsukuba-shi, Ibaraki 300-4292 (JP); OOYAMA, Kouhei, Tsukuba-shi, Ibaraki 300-4292 (JP)
(74) Representative: Ter Meer Steinmeister & Partner
(86) International application number: PCT/JP2024/027475
(87) International publication number: WO 2025/028592

(57) **Abstract**

An electrochemical reaction device 10 includes a first electrode 11, a second electrode 12, a first electrolysis section 21 including the first electrode 11, a reaction section 31, and a first connection path 41 that connects the first electrolysis section 21 and the reaction section 31. The first electrode 11 contains a first catalyst that catalyzes a reaction of reducing carbon dioxide to a first reductant, and the second electrode 12 oxidizes a reductant A of a redox substance to an oxidant B. The first connection path 41 allows the first reductant produced in the first electrolysis section 21 to be discharged to the reaction section 31. The reaction section 31 contains a second catalyst that allows an organic substance to be produced from the first reductant and the oxidant B.

## Description

### Technical Field

The present invention relates to an electrochemical reaction device such as a carbon dioxide reduction device for producing an organic substance such as a carbonyl compound using carbon dioxide as a raw material and a method for producing an organic substance such as a carbonyl compound.

### Background Art

Electrochemical synthesis methods have been attracting attention in recent years because they do not require use of highly toxic substrates or highly explosive oxygen-mixed gases, and can directly utilize electricity from renewable energy. In addition, in recent years, in order to curb global warming and replace fossil fuels, the production of organic substances according to an electrochemical reaction using carbon dioxide or carbon monoxide obtained by reducing carbon dioxide as raw materials has been studied. It is known that carbon dioxide reduction is performed using an electrochemical cell, and in this case, carbon dioxide is generally reduced on the cathode side. In addition, there are many known methods in which an organic compound is oxidized using an anode of an electrochemical cell to obtain a new valuable product.

In recent years, in order to produce a valuable product from carbon dioxide more efficiently, methods for producing a valuable product from carbon dioxide using both a cathode and an anode have been studied. For example, PTL 1 and PTL 2 disclose an electrochemical cell including a cathode compartment in which a cathode is provided, an anode compartment in which an anode is provided and which contains a reactant such as an alcohol compound, an ion transport membrane that demarcates the cathode compartment from the anode compartment, and a connection path that connects the cathode compartment to the anode compartment. In the electrochemical cells of PTL 1 and PTL 2, carbon dioxide is reduced to carbon monoxide at the first electrode, the produced carbon monoxide is discharged to the anode compartment through the connection path, and a valuable product such as a carbonate compound is produced in the anode compartment from carbon monoxide and the reactant.
[PTL 1] WO 2019/182164
[PTL 2] Japanese Translation of PCT Application No. 2021-517608

### Summary

### Technical Problem

In the electrochemical cells described in PTL 1 and PTL 2, a carbonate compound is produced with high reaction efficiency, but further process improvements are desirable. For example, a reactant such as an alcohol compound is easily oxidized in the anode compartment, and therefore it is desirable to inhibit oxidation of such an alcohol compound. In addition, although various improvements have been attempted in conventional devices for producing an organic compound from carbon dioxide, the structure of the electrochemical cell often becomes complicated.

In addition, when a valuable product is produced from carbon dioxide, further improvement in production efficiency is desired for industrial implementation, and in systems that produce a valuable product such as an organic carbonate from carbon monoxide using an electrochemical reaction, it is necessary to efficiently produce a desired valuable product. In addition, it is necessary to increase the selectivity while enhancing productivity.

Therefore, a first aspect of the present invention provides a carbon dioxide reduction device that can produce an organic substance from carbon dioxide using, for example, an existing electrolysis instrument, without complicating the structure of an electrochemical cell while inhibiting oxidation of a reactant such as an alcohol compound.

In addition, a second aspect of the present invention provides an electrochemical system that can produce a desired carbonyl compound with high Faraday efficiency in the system that uses an electrochemical reaction to produce a carbonyl compound such as an organic carbonate from carbon monoxide.

In addition, a third aspect of the present invention provides an electrochemical reaction device that can enhance productivity and increase the selectivity when a desired substance is produced.

### Solution to Problem

A first aspect of the present invention provides the following [1] and [2].
[1] A carbon dioxide reduction device includes a first electrode, a second electrode, a first electrolysis section including the first electrode, a reaction section, and a first connection path that connects the first electrolysis section and the reaction section,
   the first electrode containing a first catalyst that catalyzes a reaction of reducing carbon dioxide to a first reductant,
   the second electrode oxidizing a reductant A of a redox substance to an oxidant B,
   the first connection path allowing the first reductant produced in the first electrolysis section to be discharged to the reaction section,
   the reaction section containing a second catalyst that allows an organic substance to be produced from the first reductant and the oxidant B.
[2] A method of producing an organic substance, including using the carbon dioxide reduction device according to [1], including
   reducing carbon dioxide to a first reductant at the first electrode;
   oxidizing a reductant A of a redox substance to an oxidant B at the second electrode;
   discharging the first reductant produced at the first electrode to the reaction section through the first connection path; and
   producing an organic substance from the first reductant and the oxidant B in the reaction section.

Here, in the above [1] and [2], the carbon dioxide reduction device is an electrochemical reaction device.

A second aspect of the present invention provides the following [3] and [4].
[3] An electrochemical system that electrochemically synthesizes at least one carbonyl compound selected from the group consisting of an organic carbonate and an organic oxalate from carbon monoxide, including
   an electrode (second electrode), a redox species (redox substance) that causes an oxidation reaction at the electrode, and a catalyst (second catalyst) that allows the carbonyl compound to be produced,
   the catalyst containing a catalyst active species and a metal compound that supports the catalyst active species.
[4] A method of producing a carbonyl compound, including electrochemically synthesizing at least one carbonyl compound selected from the group consisting of an organic carbonate and an organic oxalate from carbon monoxide in the electrochemical system according to [3].

Here, in the above [3] and [4], the electrochemical system is also an electrochemical reaction device.

A third aspect of the present invention provides the following [5] and [6].
[5] An electrochemical reaction device, including
   an electrochemical cell including a cathode containing a first catalyst that allows carbon dioxide to be reduced to carbon monoxide, an anode, and an electrolytic solution containing a reactant and an electrolyte; and
   a second catalyst that allows a carbonyl compound to be synthesized from carbon monoxide and the reactant,
   an electrolyte concentration of the electrolytic solution in the electrochemical cell being 0.3 M or less, a density of a current flowing through the electrochemical cell being 20 mA/cm² or more.
[6] A method of producing a carbonyl compound in the electrochemical reaction device according to [5], including
   reducing carbon dioxide to carbon monoxide with the first catalyst, and synthesizing a carbonyl compound from the obtained carbon monoxide and the reactant. Advantageous Effects of Invention

According to the first aspect of the present invention, it is possible to provide a carbon dioxide reduction device that synthesizes an organic substance from carbon dioxide without complicating the structure of the device while inhibiting oxidation of a reactant such as an alcohol compound.

According to the second aspect of the present invention, it is possible to provide an electrochemical system that produces a desired carbonyl compound from carbon monoxide with high Faraday efficiency.

According to the third aspect of the present invention, it is possible to provide an electrochemical reaction device that can enhance productivity and increase the selectivity when a desired substance is produced.

### Brief Description of Drawings

[Fig. 1] Fig. 1 is a schematic view showing a carbon dioxide reduction device according to a first embodiment.
[Fig. 2] Fig. 2 is a schematic view showing a carbon dioxide reduction device according to a second embodiment.
[Fig. 3] Fig. 3 is a schematic view showing a carbon dioxide reduction device according to a third embodiment.
[Fig. 4] Fig. 4 is a schematic view showing a carbon dioxide reduction device according to a fourth embodiment.
[Fig. 5] Fig. 5 is a schematic view showing a carbon dioxide reduction device according to a fifth embodiment.
[Fig. 6] Fig. 6 is a schematic view showing a carbon dioxide reduction device according to a sixth embodiment.
[Fig. 7] Fig. 7 is a schematic view showing a carbon dioxide reduction device according to a seventh embodiment.
[Fig. 8] Fig. 8 is a schematic view showing a carbon dioxide reduction device according to an eighth embodiment.
[Fig. 9] Fig. 9 is a schematic view showing an electrochemical system according to a ninth embodiment.
[Fig. 10] Fig. 10 is a schematic view showing an electrochemical system according to a tenth embodiment.
[Fig. 11] Fig. 11 is a schematic view showing an electrochemical system according to a twelfth embodiment.
[Fig. 12] Fig. 12 is a schematic view showing an electrochemical system according to a modified example of an eleventh embodiment.
[Fig. 13] Fig. 13 is a schematic view showing an electrochemical reaction device according to a thirteenth embodiment.
[Fig. 14] Fig. 14 is a schematic view showing an electrochemical reaction device according to a fourteenth embodiment.
[Fig. 15] Fig. 15 is a schematic view showing an electrochemical reaction device according to a fifteenth embodiment.
[Fig. 16] Fig. 16 is a schematic view showing an electrochemical reaction device according to a sixteenth embodiment.
[Fig. 17] Fig. 17 is a schematic view showing an electrochemical reaction device according to a seventeenth embodiment.
[Fig. 18] Fig. 18 is a schematic view showing an electrochemical reaction device according to an eighteenth embodiment.

### Description of Embodiments

Hereinafter, a carbon dioxide reduction device and a method for producing an organic substance using a carbon dioxide reduction device according to a first aspect of the present invention will be described using embodiments with reference to the drawings. Here, in the following description of the first aspect, elements having the same configuration will be denoted with the same reference numerals. In addition, as will be described below, the carbon dioxide reduction device according to the first aspect is also an electrochemical reaction device for producing an organic substance.

### <First embodiment>

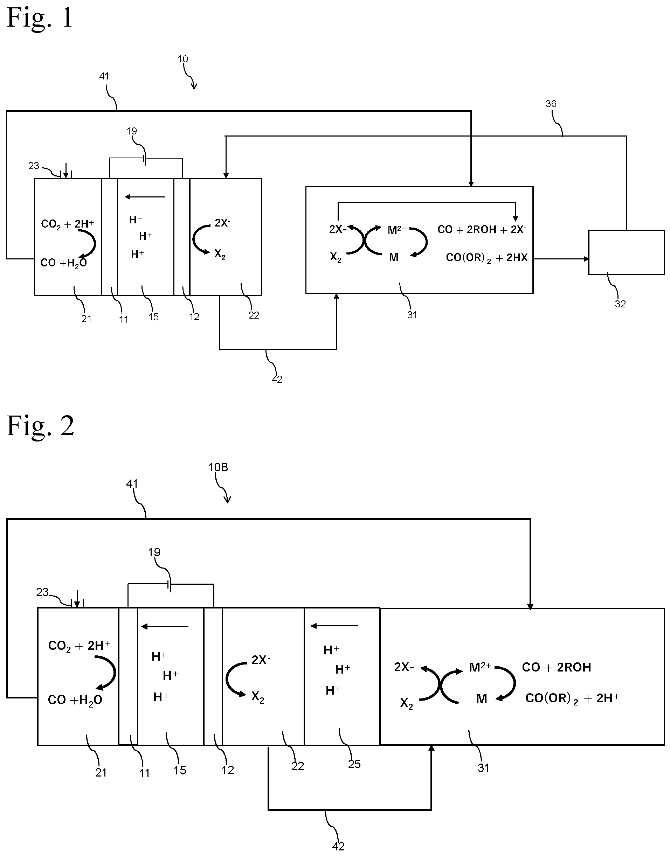

Fig. 1 shows a carbon dioxide reduction device 10 according to a first embodiment of the present invention. The carbon dioxide reduction device 10 according to the first embodiment of the present invention includes a first electrode 11, a second electrode 12, a first ion exchange membrane 15, a first electrolysis section 21 including the first electrode 11, a second electrolysis section 22 including the second electrode 12, and a reaction section 31.

Here, Fig. 1 shows representative examples of electrolysis sections, reactions occurring in reaction section, and behaviors of ions in ion exchange membrane, but the present invention is not limited to the configuration of Fig. 1. In addition, in Fig. 1, X represents a halogen atom, and ROH represents an alcohol compound. The same applies to Fig. 2 and onward.

### (First electrolysis section)

The first electrode 11 is a cathode, and is disposed in the first electrolysis section 21 constituting a cathode compartment. The first electrolysis section 21 is a region where introduced carbon dioxide is electrochemically reduced. The first electrode 11 contains a first catalyst (carbon dioxide reduction catalyst) that catalyzes a reduction reaction of reducing carbon dioxide to a first reductant. The first catalyst and the first electrode 11 will be described in detail later.

In the first electrolysis section 21, an inlet port 23 is provided, and carbon dioxide is supplied through the inlet port 23. Carbon dioxide may be supplied as a gas. The inlet port 23 is connected to a carbon dioxide supply source (not shown), and carbon dioxide is supplied from the carbon dioxide supply source or the like. The inlet port 23 may have an optional mechanism such as a flow rate adjustment mechanism which is used to adjust a flow rate of supplied carbon dioxide. Carbon dioxide may be continuously or intermittently supplied to the first electrolysis section 21.

The carbon dioxide supply source is not particularly limited, and may be a gas cylinder or the like. In addition, carbon dioxide may be obtained from an exhaust gas discharged from any of facilities: a power plant, a steel plant, a cement plant, and a waste incineration plant, and any of these facilities may serve as the carbon dioxide supply source. These facilities generate large amounts of exhaust gas, the exhaust gas generally contains a large amount of carbon dioxide, and thus the exhaust gas generated in these facilities may be supplied to a carbon dioxide reduction device (electrochemical cell).

In the first electrolysis section 21, at the first electrode 11, carbon dioxide is reduced by the first catalyst to produce a reductant (first reductant). Examples of reductants from carbon dioxide produced at the first electrode 11 include CO (carbon monoxide), HCO₃⁻, OH⁻, HCO⁻, H₂CO, (HCO₂)⁻, H₂CO₂, CH₃OH, CH₄, C₂H₄, CH₃CH₂OH, CH₃COO⁻, CH₃COOH, C₂H₆, O₂, (COOH)₂, and (COO⁻)₂, and carbon monoxide is preferable. Here, the reaction at the first electrode when carbon monoxide is produced is represented by the following Formula (i) or Formula (ii). The following Formula (i) is a reaction that generally proceeds under acidic conditions, and the following Formula (ii) is a reaction that generally proceeds under basic conditions.

CO₂+2H⁺+2e⁻ → CO+H₂O (i)

CO₂+H₂O+2e⁻ → CO+2OH⁻ (ii)

In the present embodiment, the first electrolysis section 21 may be filled with neither water nor the other electrolytic solution such as organic solvent, and gaseous carbon dioxide may be brought into contact with the first electrode 11. That is, at the first electrode 11, a reduction reaction may be performed on gaseous carbon dioxide according to a gas-phase reaction. However, gaseous carbon dioxide may contain water. In addition, carbon dioxide may be supplied to the first electrolysis section 21 as carbon dioxide alone, or may be supplied to the first electrolysis section 21 using an inert gas such as helium as a carrier gas, and it is preferable to supply carbon dioxide alone.

Here, in the first electrolysis section 21 not filled with a liquid such as an electrolytic solution, the produced first reductant such as carbon monoxide is mixed with unreacted carbon dioxide in a gas phase and discharged to the reaction section 31 through a first connection path 41, which will be described below. In addition, water produced as a by-product remains in the first electrolysis section 21, and may be discharged when a certain amount is reached. In the first electrolysis section 21, an exhaust port (not shown) for discharging water which is a by-product may be provided.

### (Second electrolysis section)

The second electrode 12 is an anode, and is disposed in a second electrolysis section 22 constituting an anode compartment. The second electrode 12 can oxidize a reductant A of a redox substance to an oxidant B.

The second electrolysis section 22 is filled with an electrolytic solution. In addition, the second electrolysis section 22 contains a redox substance. The electrolytic solution with which the second electrolysis section 22 is filled is an aqueous electrolytic solution or a non-aqueous electrolytic solution. The aqueous electrolytic solution contains a redox substance and water, and the redox substance may be dissolved in water or may be dispersed in water without being dissolved. The non-aqueous electrolytic solution contains a redox substance and an alcohol solvent or a nitrile solvent. In the second electrolysis section 22, the second electrode 12 is in contact with an electrolytic solution. The electrolytic solution in the second electrolysis section 22 is preferably an aqueous electrolytic solution.

The redox substance that can produce halogen ions in the electrolytic solution is used, and specific examples thereof include halide salts and hydrogen halides. In addition, although a combination of halide salts and hydrogen halides may be used, it is preferable to use at least a halide salt or a hydrogen halide. When a halide salt is used, halogen, which is an oxidant B, is easily produced in the second electrolysis section 22, and the produced halogen allows a desired product to be efficiently produced from carbon monoxide and the reactant in the presence of a second catalyst in the reaction section 31.

Examples of halide salts include metal halides, and among these, alkali metal halides are preferable, and specific examples thereof include lithium halides such as lithium chloride and lithium bromide, sodium halides such as sodium chloride and sodium bromide, potassium halides such as potassium chloride and potassium bromide, and cesium halides such as cesium chloride and cesium bromide. In addition, ammonium halides such as ammonium chloride and ammonium bromide may be exemplified.

Halide salts are preferably metal halides, and more preferably alkali metal halides. Among these, lithium chloride, potassium chloride, sodium chloride, potassium chloride, cesium chloride, lithium bromide, potassium bromide, sodium bromide, potassium bromide, and cesium bromide are still more preferable. Among these, in order to increase the selectivity for desired products, lithium chloride, lithium bromide, sodium chloride, sodium bromide, potassium chloride, and potassium bromide are particularly preferable.

In addition, examples of hydrogen halides include hydrogen chloride and hydrogen bromide.

In the second electrolysis section 22, the concentration of the redox substance in the electrolytic solution is not particularly limited, and is, for example, 0.001 to 5.0 M, preferably 0.01 to 1.0 M, and more preferably 0.05 to 0.5 M.

The interior of the second electrolysis section (anode compartment) 22 may be entirely filled with an electrolytic solution or a partial space may be present therein. In addition, components (water, a redox substance, etc.) constituting the electrolytic solution in the second electrolysis section 22 may be supplied to the second electrolysis section 22 in any manner as long as they are introduced into the second electrolysis section 22, and may be introduced, for example, through an inlet port (not shown) of the second electrolysis section 22.

A power source 19 is connected to the first electrode 11 and the second electrode 12, and the power source 19 applies a voltage between the first electrode 11 and the second electrode 12. When a voltage is applied, as described above, a reduction reaction in which carbon dioxide is reduced to a first reductant such as carbon monoxide occurs in the first electrode 11 side, and the redox substance is oxidized from the reductant A to an oxidant B in the second electrolysis section 22. The oxidant B is typically a gas such as a halogen, and the oxidant B obtained by oxidation in the second electrolysis section 22 may be supplied to the reaction section 31 through a second connection path 42 to be described below.

### (First ion exchange membrane)

The first ion exchange membrane 15 is provided between the first electrode 11 and the second electrode 12, and demarcates the first electrolysis section 21 (cathode compartment) from the second electrolysis section 22 (anode compartment). In the present embodiment, the first electrode 11 and the second electrode 12 are disposed on both surfaces of the first ion exchange membrane 15 and bonded together to form a membrane-electrode assembly. Therefore, the first electrolysis section 21 and the second electrolysis section 22 of the carbon dioxide reduction device 10 have a two-compartment type diaphragm cell structure in which an electrochemical cell is divided into two compartments by a membrane-electrode assembly. However, it is not necessary to form a membrane-electrode assembly, and in the present embodiment, any structure in which the first ion exchange membrane 15 demarcates the first electrolysis section 21 from the second electrolysis section 22 may be provided. Here, the first ion exchange membrane 15, and second and third ion exchange membranes 25 and 35 to be described below constitute an isolating membrane that demarcates the interior region of the electrochemical cell.

As the first ion exchange membrane 15, a solid membrane is used, and examples thereof include a cation exchange membrane that allows cations such as protons to pass through, and an anion exchange membrane that allows anions such as hydroxide ions to pass through, and in consideration of ion conductivity and cost, a cation exchange membrane is preferable.

When the first ion exchange membrane 15 is a cation exchange membrane, the electrolyte inside the second electrolysis section 22 may be adjusted to be acidic. When adjusted to be acidic, as shown in Fig. 1, cations such as protons pass from the second electrolysis section 22 side to the first electrolysis section 21 side, and in the first electrolysis section 21 side, the reaction of the above Formula (i) and the like can easily occur.

In addition, when the first ion exchange membrane 15 is an anion exchange membrane, the electrolyte inside the second electrolysis section 22 may be adjusted to be basic. When adjusted to be basic, anions such as hydroxide ions pass from the second electrolysis section 22 side to the first electrolysis section 21 side, and in the first electrolysis section 21 side, the reaction of the above Formula (ii) and the like can easily occur.

Examples of cation exchange membranes include those having at least any of a sulfonyl group, a carboxyl group, a phosphate group, and a silicate group as a functional group. Examples of cation exchange membranes having a sulfonyl group as a functional group include hydrocarbon resin-based polysulfonic acids such as polyethylene sulfonic acid and fullerene-crosslinked polysulfonic acid, and fluorine resin-based sulfonic acids such as perfluoroethylene sulfonic acid. Examples of perfluoroethylene sulfonic acid include copolymers of tetrafluoroethylene and perfluoro[2-(fluorosulfonylethoxy)propyl vinyl ether], and examples of commercially available products include "Nafion" (trademark, commercially available from Du Pont Inc.).

In addition, examples of those having a carboxyl group as a functional group include polycarboxylic acids such as polyacrylic acid. As those having a phosphate group or a silicate group as a functional group, heteropolyacids such as tungstosilicic acid and phosphotungstic acid can be used. In addition, as the cation exchange membrane, phosphate glasses such as SiO₂-P₂O₃, and ceramics such as perovskite oxide can be used.

In addition, examples of anion exchange membranes include resins containing quaternary ammonium salts such as poly(styrylmethyltrimethylammonium chloride), polyethers, and polymers having an imidazolium group. Examples of resins containing ammonium salts include "FAA-3-50" (commercially available from FuMA-Tech GmbH) and "TM1 Durion Grade" (commercially available from Orion). Examples of polymers having an imidazolium group include styrene polymers having an imidazolium group, and specific examples thereof include copolymers (PSMIM) of styrene and 1-(p-vinylbenzyl)-3-methylimidazolium, copolymers (PSTMIM) of styrene and 1-(p-vinylbenzyl)-tetramethyl-imidazolium, and copolymers (PSDMIM) of styrene and 1-(p-vinylbenzyl)-2,3-dimethyl-imidazolium.

### (Reaction section)

The reaction section 31 is constituted of a reactor other than the first electrolysis section 21 and the second electrolysis section 22. That is, the reaction section 31 is a reaction system separate from a reaction system constituted of the first electrolysis section 21 and a reaction system constituted of the second electrolysis section 22. The reaction section 31 is connected to the first electrolysis section 21 through the first connection path 41, and is connected to the second electrolysis section 22 through the second connection path 42.

The first connection path 41 is, for example, a conduit that connects the first electrolysis section 21 and the reaction section 31, and may be provided with a flow rate adjustment mechanism or the like to adjust a flow rate or the like. The second connection path 42 is, for example, a conduit that connects the second electrolysis section 22 and the reaction section 31, and may be provided with a flow rate adjustment mechanism or the like to adjust a flow rate or the like. A check valve or the like may be attached to the conduits constituting the first connection path 41 and the second connection path 42 so that a gas is sent from the first electrolysis section 21 or the second electrolysis section 22 to the reaction section 31 through the first connection path 41 or the second connection path 42 while preventing the gas from being sent in the reverse direction.

The first reductant, such as carbon monoxide produced in the first electrolysis section 21, is discharged as a gas to the reaction section 31 through the first connection path 41. In this case, the first reductant is supplied to the reaction section 31 together with, for example, carbon dioxide that has not reacted in the first electrolysis section 21. In addition, the oxidant B such as a halogen (for example, chlorine or bromine) produced in the second electrolysis section 21 is discharged to the reaction section 31 through the second connection path 42. Preferably, the oxidant B such as a halogen is separated from an electrolytic solution by vaporization or other methods and is discharged as a gas to the reaction section 31 through the second connection path 42. The first reductant and the oxidant B may be supplied to the reaction solution with which the reaction section 31 is filled by bubbling or may be supplied by other methods. By bubbling, a second catalyst and the others are dispersed in the reaction section 31, and the reaction proceeds more easily.

Here, the first connection path 41 is not particularly limited, and may be any means which can transport the first reductant. Similarly, the second connection path 42 is not particularly limited, and may be any means which oxidant B can transport the oxidant B.

The reaction section 31 contains a second catalyst. The second catalyst is a catalyst that catalyzes a reaction in which an organic substance is produced from a first reductant and an oxidant B. The reaction section 31 typically contains a reactant. The second catalyst may be a catalyst that catalyzes a reaction in which an organic substance (desired product) is synthesized from a first reductant and a reactant in the presence of an oxidant B.

In the reaction section 31, the reactant contains a second catalyst, and the reaction section 31 may be filled with the reactant containing a second catalyst as a reaction solution. The second catalyst may be dispersed or dissolved in the reaction solution. In the reaction section 31, the second catalyst may be in the form of a fixed bed. A stirring device for stirring a reaction solution may be attached to the reaction section 31.

In the reaction section 31, as shown in Fig. 1, while the second catalyst allows an oxidant B such as a halogen (X₂) to be reduced to a reductant A (for example, a halogen ion X⁻), a first reductant such as carbon monoxide reacts with a reactant such as an alcohol compound to obtain a desired product such as a carbonyl compound. The reaction temperature in the reaction section 31 when a desired product is produced is not particularly limited, and is, for example, 0 to 300°C, and preferably 10 to 200°C.

### (Reactant)

The reactant contained in the reaction section 31 is a compound that serves as a raw material for obtaining a desired product by reacting with a first reductant such as carbon monoxide. The reactant is changed depending on the type of the desired product to be produced. Examples of desired products include carbonyl compounds such as a carbonate compound, an oxalate compound, and a urea compound, and an isocyanate compound.

For example, when either or both of a carbonate compound (organic carbonate) and an oxalate compound (organic oxalate) are produced, an alcohol compound may be used as the reactant. When a urea compound is produced, an amine compound may be used as the reactant. In addition, in order to produce an isocyanate compound, an amine compound may be used as the reactant. Among the above examples, it is preferable to use an alcohol compound as the reactant.

### (Alcohol compound)

The alcohol compound is a reactant that reacts with carbon monoxide, which is a first reductant, in the reaction section 31 to produce either or both of a carbonate compound and an oxalate compound. The alcohol compound may be in the form of a solid, liquid or gas under the temperature environment of the reaction performed in the reaction section 31, and is preferably a liquid. The reaction section 31 can be easily filled with an alcohol compound which is liquid without using a reaction solvent to be described below.

The alcohol compound is a compound having at least one hydroxyl group, and more specifically, a compound represented by the following General Formula (1). Here, in this specification, the term "alcohol compound" is a concept that also includes an aromatic hydroxy compound such as phenol in which a hydroxyl group is directly bonded to an aromatic ring such as a benzene ring, as will be described below.

ROH (1)

(R is an organic group having 1 to 15 carbon atoms).

The organic group having 1 to 15 carbon atoms represented by R in General Formula (1) is, for example, a hydrocarbon group having 1 to 15 carbon atoms. Examples of hydrocarbon groups include an alkyl group having 1 to 15 carbon atoms, an alkenyl group having 2 to 15 carbon atoms, and an aryl group having 6 to 15 carbon atoms.

Examples of alkyl groups having 1 to 15 carbon atoms include a methyl group, an ethyl group, various propyl groups, various butyl groups, various pentyl groups, various hexyl groups, various heptyl groups, various octyl groups, various nonyl groups, various decyl groups, various dodecyl groups, and various pentadecyl groups.

Examples of alkenyl groups having 2 to 15 carbon atoms include a vinyl group, various propynyl groups, various butynyl groups, various pentynyl groups, various hexenyl groups, various heptenyl groups, various octenyl groups, various nonenyl groups, various decenyl groups, various dodecenyl groups, and various pentadecenyl groups.

Here, the term "various" means various isomers including n-, sec-, tert-, and iso-. In addition, the alkyl group or alkenyl group may be linear, branched or cyclic.

Examples of aryl groups having 6 to 15 carbon atoms include a phenyl group and a naphthyl group. Here, the hydrocarbon group may have a substituent, and in this case, the total number of carbon atoms, including the substituent, is 1 to 15.

In addition, the organic group having 1 to 15 carbon atoms in General Formula (1) may contain heteroatoms such as a nitrogen atom, an oxygen atom, a sulfur atom, a phosphorus atom, and a halogen atom.

Among these, an oxygen atom is preferable. When the organic group contains an oxygen atom, the oxygen atom is preferably an oxygen atom of either a hydroxyl group or an ether bond. Therefore, R is preferably a hydrocarbon group having at least one of a hydroxyl group and an ether bond. In addition, R preferably has one hydroxyl group. That is, the alcohol compound may have two hydroxyl groups.

More specifically, the alcohol compound having two hydroxyl groups is preferably a group represented by the following Formula (1-1).

HO-R¹¹-OH (1-1)

Here, in Formula (1-1), R¹¹ is a divalent saturated hydrocarbon group having 2 to 15 carbon atoms, and the number of carbon atoms for R¹¹ is preferably 2 to 4, and more preferably 2 or 3.

As the compound represented by General Formula (1), among the above examples, a compound in which R is alkyl group having 1 to 8 carbon atoms, an alkenyl group having 2 to 8 carbon atoms, or an aryl group having 6 to 8 carbon atoms is preferable, and a compound represented by General Formula (1-1) and in which the number of carbon atoms for R¹¹ is 2 to 4 is also preferable.

Among these, a compound in which R is an alkyl group or an aryl group is more preferable, and particularly a compound in which R is an alkyl group is still more preferable. In addition, the alkyl group more preferably has 1 to 3 carbon atoms, still more preferably has 1 or 2 carbon atoms, and most preferably has 1 carbon atom.

Specifically, in consideration of reactivity and production efficiency, methanol, ethanol, phenol, 1-propanol, ethylene glycol, propylene glycol and the like are preferable, and among these, methanol is more preferable.

Here, the alcohol compounds may be used alone or two or more thereof may be used in combination.

When an alcohol compound is used as the reactant, a reaction (also referred to as a first reaction) in which a carbonate compound is produced from carbon monoxide and an alcohol compound generally occurs in the reaction section 31. However, a reaction (also referred to as a second reaction) in which an oxalate compound is produced from carbon monoxide and an alcohol compound may be performed, both the first and second reactions may be performed, and at least the first reaction is preferably performed.

The first reaction is a carbonylation reaction in which a carbonate compound is produced, and for example, a carbonate compound ((RO)₂CO) is produced according to the reaction shown in the following Formula (iii).

CO+2ROH+2X⁻ → (RO)₂CO+2HX (iii)

Here, in (iii), X is a halogen atom such as chlorine or bromine. R is the same as above, and R is preferably an alkyl group having 1 to 8 carbon atoms, an alkenyl group having 2 to 8 carbon atoms, or an aryl group having 6 to 8 carbon atoms, more preferably an alkyl group or an aryl group, and still more preferably an alkyl group. The alkyl group more preferably has 1 to 3 carbon atoms, still more preferably has 1 or 2 carbon atoms, and most preferably has 1 carbon atom.

However, as described above, two or more alcohol compounds may be used in combination, and in this case, two R's in one molecule of (RO)₂CO may be different from each other.

In addition, when ROH is represented by General Formula (1-1), for example, a carbonate compound is produced according to the reaction shown in the following Formula (iv).

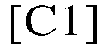

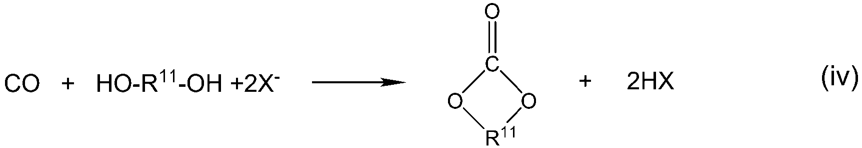

Here, in Formula (iv), X and R¹¹ are the same as above, but the number of carbon atoms for R¹¹ is preferably 2 to 4, more preferably 2 or 3, and still more preferably 2.

Specific preferable examples of carbonate compounds include one or two or more selected from among dimethyl carbonate, diethyl carbonate, ethylene carbonate, dipropyl carbonate, propylene carbonate, diphenyl carbonate, ethyl methyl carbonate, methyl propyl carbonate, and ethyl propyl carbonate, and among these, dimethyl carbonate is more preferable.

The second reaction is a reaction in which an oxalate compound represented by the following Formula (2) is produced from carbon monoxide and an alcohol compound. For example, an oxalate compound represented by Formula (2) may be synthesized according to the reaction shown in the following Formula (v). 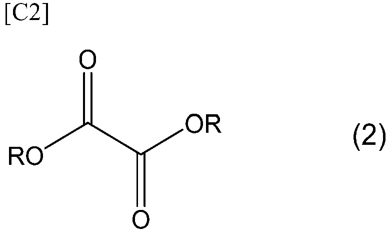 (where, in Formula (2), R is the same as above, but two R's in one molecule may be the same as or different from each other). 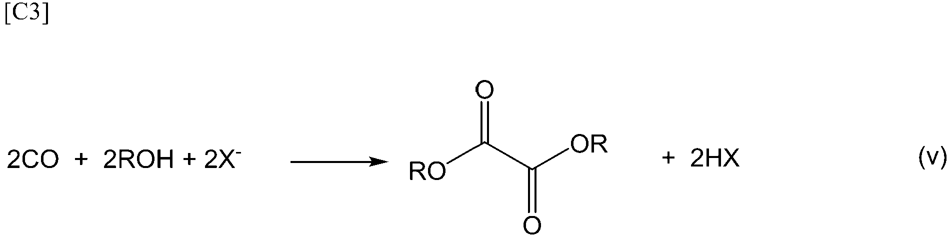 (where, in Formula (v), X and R are the same as above).

In addition, when ROH is represented by General Formula (1-1), an oxalate compound represented by the following Formula (2-1) is produced according to the reaction shown in the following Formula (vi). 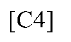 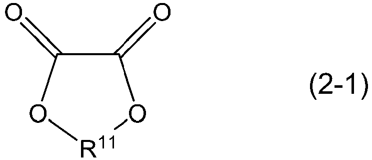 (where, in Formula (2-1), R¹¹ is the same as above). 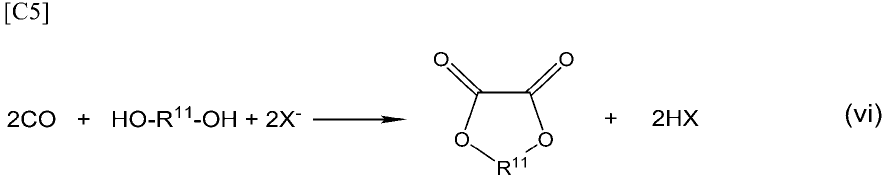 (where, in Formula (vi), X and R¹¹ are the same as above).

Specific preferable examples of oxalate compounds include one or two or more selected from among dimethyl oxalate, diethyl oxalate, ethylene oxalate, dipropyl oxalate, propylene oxalate, diphenyl oxalate, ethyl methyl oxalate, methyl propyl oxalate, and ethyl propyl oxalate. Among these, dimethyl oxalate is more preferable.

### (Amine compound)

The amine compound used as the reactant is an organic compound having at least one amino group, and is preferably a compound represented by the following Formula (3). R²NH₂ (3)

(R² is an organic group having 1 to 15 carbon atoms).

The organic group having 1 to 15 carbon atoms represented by R² in Formula (3) is, for example, a hydrocarbon group having 1 to 15 carbon atoms, and specific description thereof is the same as for the hydrocarbon group for R¹.

In addition, the organic group having 1 to 15 carbon atoms in Formula (3) may contain heteroatoms such as a nitrogen atom, an oxygen atom, a sulfur atom, and a phosphorus atom. Among these, a nitrogen atom is preferable, and the nitrogen atom is preferably a nitrogen atom of an amino group. Therefore, R² is preferably a hydrocarbon group having an amino group. More specifically, an aminoalkyl group having 1 to 15 carbon atoms is preferable.

When an amine compound is used as the reactant, a urea compound having a urea bond (-NH-CO-NH-) can be synthesized.

When the reactant is a solid or gas, or when it is necessary to enhance the solubility of the redox substance, the reactant (reaction solution) with which the reaction section 31 is filled may be diluted with a solvent (hereinafter referred to as a "reaction solvent"). In this case, the reaction section 31 may be filled with the reactant as a mixed solution with a solvent. Of course, even if the reactant is a liquid, it may be filled with a mixed solution with a solvent.

Examples of reaction solvents include nitrile solvents such as acetonitrile, carbonate solvents such as ethylene carbonate, propylene carbonate, butylene carbonate, vinylene carbonate, dimethyl carbonate, ethyl methyl carbonate, and diethyl carbonate, lactone solvents such as γ-butyrolactone, ether solvents such as 1,2-dimethoxyethane, 1-ethoxy-2-methoxyethane, 1,2-diethoxyethane, tetrahydrofuran, and 2-methyltetrahydrofuran, phosphate ester solvents, phosphoric acids, sulfolane solvents, and pyrrolidones. These solvents may be used alone or two or more thereof may be used in combination.

As described above, in the reaction section 31, a by-product is produced from the reductant A together with a desired product. The by-product is a component derived from a redox substance and is typically a hydrogen halide as shown in Formulae (iii) to (vi). The by-product may be removed from the reaction section 31. In addition, the by-product removed from the reaction section 31 may be supplied to the second electrolysis section 22 by a known supply mechanism.

Preferably, by-products derived from the redox substance such as hydrogen halogen are taken out from the reaction section 31 together with a desired product obtained in the reaction section 31 and the unreacted reactant, and purified in a purification device 32 such as a distillation device. Then, the purified by-products such as hydrogen halogen may be supplied to the second electrolysis section 22 through a supply path 36 (supply mechanism).

As described above, when the by-product is supplied to the second electrolysis section 22, since the redox substance is circularly used between the second electrolysis section 22 and the reaction section 31, it is possible to reduce raw material loss.

As described above, in the present embodiment, a first reductant is produced at the first electrode 11, an oxidant B is produced at the second electrode 12, and a second catalyst allows an organic substance to be produced from the first reductant and the oxidant B in the first reaction section 31. Therefore, the reaction of the redox substance is prioritized and thus it is possible to efficiently produce a desired product while inhibiting oxidation of a reactant such as an alcohol compound.

In addition, since the first electrolysis section 21 and the second electrolysis section 22 can be constituted of a general electrochemical cell, it is possible to obtain a desired product from carbon dioxide without complicating the structure of the device. In addition, when an aqueous electrolytic solution is used in the second electrolysis section 22, since there is no need to use a reactant such as an alcohol compound in the electrochemical cell that constitutes the first electrolysis section 21 and the second electrolysis section 22, there is no need to make the electrochemical cell alcohol-resistant, and it is also easy to reuse existing electrolysis instruments.

Furthermore, water produced as a by-product in the first electrolysis section 21 is prevented from entering the reaction section 31 and inhibiting the reaction, and as a result, the reaction efficiency of a desired product is further enhanced.

In addition, in the present embodiment, the reaction section 21 can be made electrolyte-free, and it is easier to separate and purify a desired product that is obtained.

In addition, in the present embodiment, when the first reductant such as carbon monoxide and the oxidant B such as a halogen are both supplied as gases to the reaction section 31, the first reductant and the oxidant B produced in the electrochemical cell are efficiently supplied thereto.

Hereinafter, the first catalyst used in the first electrode 11, the configurations of the first and second electrodes 11 and 12, and the configuration of the second catalyst will be described in more detail.

### (First catalyst)

The first catalyst is a reduction catalyst that allows carbon dioxide to be reduced to a first reductant such as carbon monoxide. The first catalyst is not particularly limited as long as it is a catalyst that allows carbon dioxide to be reduced to a reductant such as carbon monoxide, and may include, for example, a metal element. The metal element may be a metal itself or a metal compound.

The metal element in the above metal is not particularly limited, and examples thereof include V, Cr, Mn, Fe, Co, Ni, Cu, Sn, Zr, Nb, Mo, Ru, Rh, Pd, Ag, Cd, Hf, Ta, W, Re, Ir, Pt, Au, Hg, Al, Si, In, Sn, Tl, Pb, Bi, Sb, Te, U, Sm, Tb, La, Ce, Zn, Os, and Nd.

As the metal compound, metal compounds such as inorganic metal compounds and organic metal compounds of these metals can be used, and specific examples thereof include metal halides, metal oxides, metal hydroxides, metal nitrates, metal sulfates, metal acetates, metal phosphates, metal carbonyls, and metal acetylacetonates.

The metal element used in the first catalyst is preferably a metal element of Groups 7 to 12. Preferable specific examples include Mn, Fe, Ni, Ru, Co, Rh, Cu, Zn, Ag, Au, Pd, Ir, Pt, and Os, and among these, Co, Fe, Ni, Au, and Ag are more preferable, and Co is particularly preferable. When these metal elements are used, it becomes easier to increase the efficiency of converting carbon dioxide into carbon monoxide and the catalytic activity is enhanced. The metals used in the metal derivative may be used alone or two or more thereof may be used in combination.

The first catalyst may contain a carbon compound in addition to the above metal or metal compound. The carbon compound is preferably a conductive carbon compound. More specific examples of carbon compounds include carbon black such as mesoporous carbon, activated carbon, ketjen black and acetylene black, graphite, carbon fibers, graphene, and carbon nanotubes, and among these, carbon black is preferable, and carbon black is more preferably conductive carbon black. In addition, the carbon compound is preferably porous carbon.

When the first catalyst contains a carbon compound, the metal or metal compound may be supported on a carbon compound. In addition, the carbon compound may be mixed with a complex containing the metal element and then heat-treated to form a catalyst powder. The first catalyst in which the metal or metal compound is supported on a carbon compound may be additionally supported on an electrode substrate to be described below.

### <<Nitrogen-containing metal catalyst>>

The first catalyst is preferably a catalyst containing a nitrogen element and a metal element (referred to as a "nitrogen-containing metal catalyst"). Here, the nitrogen element used in the nitrogen-containing metal catalyst is preferably derived from a nitrogen-containing compound to be described below. In addition, specific examples of metal elements used in the nitrogen-containing metal catalyst are as described above, and preferable metal elements are also as described above. When a nitrogen-containing metal catalyst is used, the efficiency of carbon monoxide production increases, and as a result, the selectivity for desired products such as a carbonyl compound to be synthesized also increases.

The nitrogen-containing metal catalyst may be a catalyst obtained by heat-treating a mixture containing a metal derivative and a nitrogen-containing compound (hereinafter referred to as a "first catalyst raw material mixture"), and particularly, a catalyst obtained by heat-treating a first catalyst raw material mixture containing a metal derivative, a nitrogen-containing compound and a carbon compound is preferable. Here, the heat treatment is typically sintering.

The nitrogen-containing metal catalyst is produced by heat-treating the first catalyst raw material mixture and thus metal-nitrogen bonds derived from the metal derivative and the nitrogen-containing compound may be formed in the catalyst. In addition, the carbon compound functions as a support for the catalyst, and components derived from the metal derivative and the nitrogen-containing compound (that is, a metal element and a nitrogen element) are supported on the carbon compound. The nitrogen-containing metal catalyst having the above configuration efficiently reduces carbon dioxide to carbon monoxide, resulting in high conversion efficiency.

The metal element in the metal derivative is as described above. The metal derivative preferably contains metal ions. In addition, for example, the metal derivative may be used in the form of a metal salt. Examples of metal salts include metal nitrates, metal sulfates, metal chlorides, metal bromides, metal iodides, and metal acetates, and among these, metal nitrates are preferable. Specifically, cobalt nitrate (Co(NO₃)₂), nickel nitrate (Ni(NO₃)₂), iron nitrate (Fe(NO₃)₂), manganese nitrate (Mn(NO₃)₂), copper nitrate (Cu(NO₃)₂), and zinc nitrate (Zn(NO₃)₂) are preferable. The metal salts may be used alone or two or more thereof may be used in combination.

The metal content derived from the metal derivative in the first catalyst raw material mixture with respect to a total amount of the first catalyst raw material mixture is for example, 0.1 mass% or more and 50 mass% or less, and preferably 0.1 mass% or more and 10 mass% or less. Within the above range, the metal is contained in the catalyst without aggregating, and an appropriate amount of catalytic active sites is formed. Therefore, it becomes easier to increase the efficiency of conversion to carbon monoxide.

In consideration of conversion efficiency and the like, the metal content described above is more preferably 0.5 mass% or more, still more preferably 1.0 mass% or more, and yet more preferably 1.5 mass% or more, and more preferably 10 mass% or less, and still more preferably 5 mass% or less. Here, the total amount of the first catalyst raw material mixture is the total amount of the solid content in the first catalyst raw material mixture, and when volatile components are added to the first catalyst raw material mixture during the production procedure, it is the amount excluding the volatile components.

### (Nitrogen-containing compound)

The nitrogen-containing compound is a compound containing nitrogen, and the component derived from a nitrogen-containing compound may form a bond such as a coordinate bond with a metal element derived from the metal derivative in the nitrogen-containing metal catalyst. Specific examples of nitrogen-containing compounds include a compound containing a nitrogen-containing aromatic ring including a nitrogen element as a constituent element of an aromatic ring. Specific examples of nitrogen-containing compounds include pyridine derivatives, imidazole derivatives, pyrazole derivatives, and triazole derivatives. These compounds may be used alone or two or more thereof may be used in combination.

Among these, in consideration of conversion efficiency and the like, any one selected from among a pyridine derivative, an imidazole derivative, and a triazole derivative is preferable, and a pyridine derivative is particularly preferable. That is, the nitrogen-containing metal catalyst is particularly preferably a catalyst obtained by heat-treating a mixture containing a metal derivative, a pyridine derivative, and a carbon compound.

### ((Pyridine derivative))

The pyridine derivative is a compound having a pyridine ring. The pyridine derivative may be a compound having one pyridine ring in one molecule, a compound having two pyridine rings in one molecule, a compound having three pyridine rings in one molecule, or a compound having four or more pyridine rings in one molecule.

Examples of pyridine derivatives include 4-aminopyridine, 2,2'-bipyridine, and 4,4'-diamino-2,2'-bipyridine, and also include polymers having a plurality of pyridine rings in one molecule and a weight average molecular weight of 1,000 or more. As specific compounds for the polymer, polypyridines such as poly(2,5-pyridine) and poly(3,5-pyridine), and polyvinylpyridine, which is a vinylpyridine polymer, are preferable, and among these, poly(2,5-pyridine) and poly(4-vinylpyridine) are more preferable, and poly(4-vinylpyridine) is still more preferable. In consideration of conversion efficiency and the like, it is preferable that polyvinylpyridines such as poly(4-vinylpyridine) have a certain molecular weight or more, and the weight average molecular weight thereof is, for example, 1,000 or more, or 10,000 or more, preferably 30,000 or more, and more preferably 50,000 or more, and in consideration of availability and the like, the weight average molecular weight is, for example, 200,000 or less, and preferably 100,000 or less.

It is noted that the weight average molecular weight is a value measured by gel permeation chromatography (GPC), and polystyrene may be used as a standard substance.

The amount of the nitrogen-containing compound blended in the first catalyst raw material mixture is preferably adjusted so that the molar ratio of the nitrogen-containing aromatic ring of the nitrogen-containing compound to the metal element of the metal derivative (nitrogen-containing aromatic ring/metal element) is 2 or more and 20 or less. Within the above range, the occurrence of side reactions is minimized, a catalyst containing an appropriate amount of metal-nitrogen bonds can be produced, and it becomes easier to increase the conversion efficiency and the like. In consideration of conversion efficiency and the like, the molar ratio is more preferably 2 or more, and still more preferably 4 or more, and is more preferably 18 or less, and more preferably 15 or less. Here, the molar ratio is the ratio of the number of nitrogen-containing aromatic rings contained in the nitrogen-containing compound to the number of moles of metal elements contained in the metal derivative.

The carbon compound used in the nitrogen-containing metal catalyst is not particularly limited as long as it can support a heat-treated product (for example, a sintered product) of a metal derivative and a nitrogen-containing compound such as a pyridine derivative, and a conductive carbon compound is preferable. When the conductive carbon compound is used, the electrical conductivity on the cathode increases, and it becomes easier to increase the efficiency of conversion to carbon monoxide. Specific examples of carbon compounds are as described above, and carbon black is preferable, and among these, conductive carbon black represented by ketchen black is more preferable.

The content of the carbon compound in the first catalyst raw material mixture with respect to a total amount of the first catalyst raw material mixture is not particularly limited, and is, for example, 5 mass% or more and 90 mass% or less, preferably 15 mass% or more and 80 mass% or less, more preferably 20 mass% or more and 70 mass% or less. When the content of the carbon compound is within the above range, it is possible to maintain favorable catalytic activity and appropriately support a heat-treated product of a metal derivative and a nitrogen-containing compound.

The nitrogen-containing metal catalyst may be in the form of powder or particles. When the catalyst is in the form of powder or particles, it is easily supported on an electrode substrate to be described below. In addition, it becomes easier to increase the contact area with carbon dioxide, and it becomes easier to enhance efficiency of conversion to carbon monoxide.

As described above, the nitrogen-containing metal catalyst obtained by the heat treatment contains a metal element and a nitrogen element. In consideration of selectivity, ease of production and the like, the metal element is preferably contained in the nitrogen-containing metal catalyst as a metal oxide. As described above, the metal element is preferably cobalt, and therefore, the nitrogen-containing metal catalyst preferably contains a cobalt oxide. In addition, the cobalt oxide particularly preferably contains CoO.

In addition, as described above, the nitrogen-containing metal catalyst preferably contains a component derived from a nitrogen-containing compound and particularly preferably contains a component derived from a pyridine derivative owing to heat treatment. Therefore, it is particularly preferable that the nitrogen-containing metal catalyst contain CoO and a component derived from a pyridine derivative. Thus, the nitrogen atom derived from a nitrogen-containing compound may be coordinated to a metal element such as a cobalt element.

The component derived from a nitrogen-containing compound preferably contains a nitrogen-containing aromatic ring structure, and specific examples thereof include a pyridine ring structure, an imidazole ring structure, a pyrazole ring structure, and a triazole ring structure. Among these, a pyridine ring structure, an imidazole ring structure, and a triazole ring structure are preferable, and a pyridine ring structure is particularly preferable. Coordination of cobalt to nitrogen in the pyridine ring structure is speculated to lower the activation energy of the reaction intermediate, and as a result, conversion efficiency and the like increase.

Here, as described above, the nitrogen-containing metal catalyst is produced by heat-treating a mixture containing a nitrogen-containing compound, and the treatment temperature is low. Therefore, the nitrogen-containing aromatic ring contained in the nitrogen-containing compound can also remain also in the nitrogen-containing metal catalyst.

The presence of a nitrogen-containing aromatic ring structure such as a pyridine ring structure in the nitrogen-containing metal catalyst can be confirmed by X-ray photoelectron spectroscopy (XPS) or the like. In addition, the coordination of a nitrogen element to a metal element such as a cobalt element can also be confirmed by X-ray photoelectron spectroscopy (XPS). In addition, the valence of the metal element, for example, a divalent cobalt oxide, can be confirmed by XPS, X-ray diffraction measurement (XRD) or the like.

In addition, the nitrogen-containing metal catalyst may contain various metal elements as metals in addition to the metal oxides. Therefore, when the metal element is cobalt, it may contain a cobalt metal in addition to a cobalt oxide. The cobalt metal may be, for example, crystalline. When the nitrogen-containing metal catalyst contains a cobalt metal, it preferably has a core-shell structure in which a cobalt metal forms a core, and cobalt oxide is disposed around the core so that it covers the cobalt metal. It is speculated that, when the nitrogen-containing metal catalyst has a core-shell structure, the conductivity of the nitrogen-containing metal catalyst is enhanced, and it becomes easier to enhance the carbon dioxide reduction rate and the like. Here, the core-shell structure may be in the form of particles and supported on a carbon compound.

### <<Method for producing nitrogen-containing metal catalyst>>

The nitrogen-containing metal catalyst can be produced by heat-treating a first catalyst raw material mixture containing a metal derivative and a nitrogen-containing compound such as a pyridine derivative or a metal derivative, a nitrogen-containing compound and a carbon compound. In this case, the first catalyst raw material mixture is preferably subjected to a heat treatment in which it is heated at a heat treatment temperature of 150°C or higher and 550°C or lower. The heat treatment temperature is more preferably 180°C or higher and 500°C or lower, and still more preferably 200°C or higher and 470°C or lower. The heat treatment is preferably performed in an inert gas atmosphere such as argon or nitrogen gas.

The first catalyst raw material mixture is heat-treated at the above heat treatment temperature so that a metal-nitrogen bond can be formed and the components derived from a metal derivative and a nitrogen-containing compound should be supported on a carbon compound, and the time for which the heat treatment is performed (heat treatment time) is not particularly limited, and is, for example, 0.5 hours or longer and 10 hours or shorter, preferably 1 hour or longer and 8 hours or shorter, and more preferably 2 hours or longer and 5 hours or shorter.

The first catalyst raw material mixture to be heat-treated is preferably in the form of powder or particles. When the mixture is in the form of powder or particles, a powder or particle catalyst can be obtained by heat-treating it. In addition, more preferably, the first catalyst raw material mixture to be heat-treated consists of a metal derivative, a nitrogen-containing compound, and a carbon compound.

The first catalyst raw material mixture can be obtained, for example, by preparing a diluted solution of a first catalyst raw material mixture by diluting a metal derivative and a nitrogen-containing compound, or a metal derivative, a nitrogen-containing compound and a carbon compound in a dilution solvent, and drying the diluted solution. The first catalyst raw material mixture may be obtained, for example, in the form of powder or particles.

In addition, in the diluted solution of the first catalyst raw material mixture, the components (a metal derivative, a nitrogen-containing compound, and a carbon compound) are preferably dispersed or dissolved in the dilution solvent. When the components are dispersed or dissolved in the dilution solvent, it is possible to obtain a first catalyst raw material mixture in which the components are uniformly mixed.

The method for obtaining the diluted solution of the first catalyst raw material mixture is not particularly limited, and for example, it may be obtained by first adding a nitrogen-containing compound to a dispersion medium and dispersing it, and additionally adding a metal derivative, and a carbon compound as necessary to the dispersion solution.

As the dilution solvent used to dilute the first catalyst raw material mixture, water and an organic solvent can be used, and an organic solvent is preferable. Examples of organic solvents include ester solvents, ketone solvents, ether solvents, alcohol solvents, glycol ethers, amide solvents, nitrile solvents, carbonate solvents, halogenated hydrocarbon, hydrocarbon, sulfone solvents, sulfoxides, and formamide, but the present invention is not particularly limited. In addition, as the dilution solvent, a mixed solvent of an organic solvent and water may be used. The concentration of the diluted solution in the first catalyst raw material mixture is not particularly limited, and is, for example, 0.01 to 50 g/L, and preferably 1 to 10 g/L.

In addition to the above, the first catalyst may be a carbon compound containing at least any of a heteroatom such as nitrogen and a metal or metal compound. Examples of such carbon compounds include nitrogen-containing graphite, nitrogen-containing carbon nanotubes, nitrogen-containing graphenes, Ni- and nitrogen-containing graphite, Ni- and nitrogen-containing carbon nanotubes, Ni- and nitrogen-containing graphene, Cu- and nitrogen-containing graphite, Cu- and nitrogen-containing carbon nanotubes, Cu- and nitrogen-containing graphene, Co- and nitrogen-containing graphite, Co- and nitrogen-containing carbon nanotubes, and Co- and nitrogen-containing graphene.

In an electrochemical cell 10, the first catalysts may be used alone or two or more thereof may be used in combination.

### (First electrode)

The first electrode 11 may include an electrode substrate (current collector). The electrode substrate is not particularly limited as long as it is a current collector conventionally used in a carbon dioxide reduction electrode, and examples thereof include a carbon substrate, a metal substrate, and a metal oxide substrate, and one having conductivity is preferable. In addition, the electrode substrate may be a porous body. The substrate is a substrate constituting an electrode, and may be, for example, in the form of a sheet or plate, or may be in the form of a layer that is laminated on the wall or the other of the electrolysis section (electrochemical cell).

Examples of carbon substrates include porous carbon such as a carbon nonwoven fabric. The carbon nonwoven fabric is not particularly limited, and any known carbon nonwoven fabric can be used. For example, commercially available carbon nonwoven fabrics for fuel cells can be used, and examples thereof include "Torayca" (registered trademark) carbon paper, Toray 060 (commercially available from Toray Industries, Inc.), "AvCarb 1071HCB" (commercially available from New Metals and Chemicals Co., Ltd.), and BC series (commercially available from SGL).

In addition, examples of metal substrates include metal meshes, and examples of metals used include gold, silver, platinum, nickel, titanium, and chromium. In addition, examples of metal oxides used in the metal oxide substrate include indium oxide, tin oxide, tin-doped indium oxide, and fluorine-doped tin oxide (FTO).

The first catalyst may be supported on an electrode substrate. The method for supporting the first catalyst on the electrode substrate is not particularly limited. The first catalyst may be adhered to the electrode substrate, and particularly preferably, the above nitrogen-containing metal catalyst is adhered to the electrode substrate. Here, the term "adhered" refers to a state in which the catalyst is physically fixed to the electrode substrate, and atoms constituting the electrode substrate are not chemically bonded to atoms constituting the catalyst. Therefore, even if the electrode substrate contains a carbon compound such as porous carbon, the carbon compound itself does not have the above metal-nitrogen bond. In addition, it does not have a metal-carbon element bond. The carbon element here is a carbon element constituting the carbon compound such as porous carbon, and the metal is the metal element derived from the metal derivative. The nitrogen-containing metal catalyst adheres to the electrode substrate without being chemically bonded, and thus the efficiency of conversion to carbon monoxide is easily enhanced, and the production thereof becomes easier.

However, atoms constituting the first catalyst may be chemically bonded to atoms constituting the electrode substrate, and for example, when the electrode substrate contains a carbon compound such as porous carbon, the carbon compound itself may have the above metal-nitrogen bond or metal-carbon element bond.

In addition, the first catalyst may be supported on the electrode substrate together with a catalyst additive or the like. The catalyst additive also functions as a binder when the catalyst is supported on the electrode substrate. In addition, it also functions as an ion conductor, and enhances electrochemical reaction efficiency.

Examples of catalyst additives include cation-conductive compounds, anion-conductive compounds, and fluorine compounds other than cation-conductive compounds and anion-conductive compounds.

Examples of cation-conductive compounds include compounds having a functional group that becomes anionic when hydrogen ions or the like are released, for example a functional group containing a bronsted acid or a salt thereof. Examples of cation-conductive compounds include compounds having at least one functional group such as a sulfonyl group, a phosphate group, a hydroxyl group, and a silicic acid group. Specific examples of commercially available products include "Nafion" (trademark, commercially available from Du Pont Inc.).

Examples of catalyst additives include anion-conductive compounds. Examples of anion-conductive compounds include a compound having a functional group that becomes cationic when a proton is added, for example a compound having a functional group containing a bronsted base or a salt thereof. The anion-conductive compound has excellent conductivity of anions such as hydroxide ions.

Specific examples of anion-conductive compounds include compounds having a functional group such as a pyridinium group, an imidazolium group, an amino group, and an ammonium group. As the anion-conductive compound, commercially available products "Fumion FAA-3-SOLUT-10" (commercially available from FuMA-Tech GmbH) and "PowerMax NXS125 OH" (commercially available from Resintech Co., Ltd.) can also be used.

In addition, examples of fluorine compounds other than cation-conductive compounds and anion-conductive compounds include polytetrafluoroethylene (PTFE), tetrafluoroethylene oligomers (TFEO), graphite fluoride ((CF)n), and fluorinated pitch (FP).

The catalyst additive may be, for example, in the form of powder or particles. When a catalyst additive is used, the first catalyst may be supported on the electrode substrate in the form of a mixture (catalyst composition) prepared by mixing it with the catalyst additive. When the catalyst is supported on the electrode substrate together with the catalyst additive, the content of the catalyst additive with respect to a total amount of the catalyst additive and the catalyst is preferably 10 mass% or more and 50 mass% or less, more preferably 15 mass% or more and 45 mass% or less, and still more preferably 20 mass% or more and 40 mass% or less, in order to increase the conversion efficiency of the catalyst.

The method for supporting the first catalyst on the electrode substrate is not particularly limited, and examples thereof include a method in which the first catalyst and components other than the catalyst such as a catalyst additive added as necessary are diluted in a dilution solvent, and the diluted solution is applied to the electrode substrate using various coating devices or by spray coating or the like and dried, and a method in which an electrode substrate is immersed in the diluted solution and dried.

In the first electrode (cathode), the first catalyst (or the catalyst composition) may be formed as a layer on the surface of the electrode substrate as a catalyst layer by applying a coating solution containing the catalyst. In addition, the catalyst layer may be formed as a layer so that it is partially or completely impregnated into the interior over a part or the whole of the electrode substrate in the thickness direction, and for example, it may be formed as a layer from the surface to the interior of the electrode substrate. Here, the catalyst layer may also have voids appropriately.

In addition, the cathode may have one surface on which a catalyst is supported and a catalyst layer is formed and another surface on which no catalyst is supported and no catalyst layer is formed, but the cathode may have a catalyst supported on both surfaces or may have a catalyst layer formed on both surfaces.

In addition, the diluted solution is preferably a dispersion solution in which a catalyst or a catalyst and a component other than the catalyst are dispersed in a dilution solvent, and as the dilution solvent, water or an organic solvent may be used. The organic solvent is as described above, and preferably, an alcohol solvent, a ketone solvent, a nitrile solvent and the like may be used. The diluted solution may be a mixed solution of an organic solvent and water.

### (Second electrode)

The second electrode 12 may include an electrode substrate (current collector). The electrode substrate is not particularly limited as long as it is a current collector conventionally used in an anode of an electrochemical cell, and examples thereof include a carbon substrate, a metal substrate, and a metal oxide substrate, and one having conductivity is preferable. In addition, the electrode substrate may be a porous body. The substrate is a substrate constituting an electrode, and may be, for example, in the form of a sheet or plate, or may be in the form of a layer that is laminated on the wall or the other of the electrolysis section. The carbon substrate, metal substrate, and metal oxide substrate as the electrode substrate used in the second electrode are as described above.

As described above, the second electrode may not contain a catalyst as long as it can oxidize a reductant A of the redox substance to an oxidant B, or may contain a catalyst (also referred to as a "third catalyst").

As the third catalyst, known catalysts used in the anode in hydrochloric acid electrolysis, chloralkali electrolysis and the like can be used, and specifically, iridium oxide, ruthenium oxide, iridium-ruthenium oxide, platinum and the like can be used.

### (Second catalyst)

The second catalyst used in the present invention is preferably one that catalyzes, in the presence of a redox substance, a chemical reaction in which a desired product such as a carbonyl compound is synthesized from a first reductant such as carbon monoxide, and a reactant, and it may contain a metal element, and it particularly preferably contains a metal element selected from among the elements of Groups 8 to 11. When the element of Groups 8 to 11 is used in the catalyst, it becomes easier to electrochemically synthesize a carbonyl compound, particularly, a carbonate compound from carbon monoxide with high selectivity.

The elements of Groups 8 to 11 used in the second catalyst are as described in a ninth embodiment to be described below. The metal elements used in the second catalyst may be used alone or two or more thereof may be used in combination. The details of use of two or more elements in combination are as described in the ninth embodiment to be described below.

The second catalyst may be an active particle-containing catalyst, a metal salt, or a combination thereof. When an active particle-containing catalyst or a metal salt is used, it is possible to produce a carbonyl compound, particularly a carbonate compound, from carbon monoxide with high conversion efficiency. Among these, it is particularly preferable to use an active particle-containing catalyst.

### <<Active particle-containing catalyst>>

The active particles in the active particle-containing catalyst have catalytic activity to catalyze the reaction when a carbonyl compound is synthesized from carbon monoxide. The active particles are also called a catalyst active species. The active particles containing metal element are not particularly limited as long as they contain metal element, and the active particles may be formed of a metal oxide, a metal itself, or both a metal oxide and a metal. The metal element used in the active particles are as described above.

In the second catalyst, the active particles are, for example, in the form of fine particles, and although not particularly limited, the active particles are preferably nano-order particles, and may have an average particle size of preferably 100 nm or less, and more preferably 1 nm or more and 40 nm or less. When the active particles have the above particle size and are formed into a nanostructure, the active area increases and it becomes easier to enhance various aspects of catalyst performance. The particle size refers to the area-equivalent circle diameter, as will be described in the ninth embodiment to be described below.

In addition, the active particle-containing catalyst further contains a support, and the active particles are preferably supported on a support. The support used in the active particle-containing catalyst is not particularly limited, and examples thereof include carbon, silica, aluminum oxide, and zirconium oxide. Porous carbon, silica and aluminum oxide are preferable because a carbonyl compound can be synthesized from carbon monoxide with high selectivity. Therefore, the active particle-containing catalyst is preferably a catalyst including active particles containing metal element, and at least any of porous carbon, silica, and aluminum oxide supporting the active particles. When the support is porous carbon, silica, or aluminum oxide, the reactant is appropriately diffused in the catalyst, and it becomes easier to enhance the selectivity and reaction efficiency when a carbonyl compound is synthesized. The supports may be used alone or two or more thereof may be used in combination. The support is preferably a porous component such as porous carbon, and silica and aluminum oxide are also preferably a porous component.

As will be described below, the active particle-containing catalyst having a support such as porous carbon can be produced by mixing a metal precursor and a support (for example, porous carbon, silica, or aluminum oxide) and performing a heat treatment. The metal precursor is converted into active particles by the heat treatment, and the active particles are supported on the support.

The porous carbon used in the active particle-containing catalyst is not particularly limited, and is preferably formed of a carbon compound in the form of powder or particles, and as a result, the active particle-containing catalyst may also be in the form of powder or particles. When the active particle-containing catalyst is in the form of powder or particles, it is easily dispersed in the electrolytic solution, it becomes easier to increase the contact area with a first reductant such as carbon monoxide, and it becomes easier to enhance the selectivity and reaction efficiency when an organic substance such as a carbonyl compound is synthesized.

The BET specific surface area of the porous carbon used in the active particle-containing catalyst is, for example, 10 m²/g or more and 3,000 m²/g or less, and preferably 100 m²/g or more and 1,500 m²/g or less. The BET specific surface area can be measured by gas adsorption analysis.

The average primary particle size of the porous carbon used in the active particle-containing catalyst is, for example, 1 nm or more and 1,000 nm or less, and preferably 10 nm or more and 300 nm or less. The average primary particle size of the porous carbon can be measured, for example, by observation using an electron microscope. Specifically, a method for determining an area-equivalent circle diameter, including determining the areas of particles and calculating the diameters from the areas, assuming that each particle is a circle, may be exemplified.

The average pore size of the porous carbon is, for example, 0.5 nm or more and 100 nm or less, and preferably 1 nm or more and 50 nm or less. Here, the average pore size of the porous carbon can be measured by gas adsorption analysis.

The porous carbon used in the active particle-containing catalyst is not particularly limited as long as it can support the active particles, and a conductive carbon compound is preferable. When a conductive carbon compound is used, the electrical conductivity of the electrode increases, and it becomes easier to increase the reaction efficiency.

More specific examples of porous carbon include carbon black such as mesoporous carbon, activated carbon, ketjen black and acetylene black, carbon nanotubes, graphite, and graphene, and among these, carbon black is preferable, and carbon black is conductive carbon black is more preferable.

The active particle-containing catalyst may further contain a component derived from a nitrogen-containing compound. When the active particle-containing catalyst contains a component derived from a nitrogen-containing compound, it is easier to enhance the conversion efficiency and selectivity when a carbonyl compound is synthesized.

The component derived from a nitrogen-containing compound contains a nitrogen element, the nitrogen element may coordinate with a metal element constituting active particles (for example, a metal element constituting a metal oxide), and a metal-nitrogen bond may be formed by a coordinate bond.

The component derived from a nitrogen-containing compound may be supported on a support such as porous carbon, silica, or aluminum oxide. That is, the component derived from a nitrogen-containing compound may coordinate with metal element constituting active particles and supported on a support such as porous carbon. The nitrogen-containing compound preferably has a nitrogen-containing aromatic ring structure in which nitrogen is incorporated into an aromatic ring.

When the active particle-containing catalyst contains a component derived from a nitrogen-containing compound, as will be described below, it can be obtained by heat-treating a mixture of a metal precursor, a support such as porous carbon, silica, or aluminum oxide, and a nitrogen-containing compound. Therefore, the component derived from a nitrogen-containing compound is a component obtained by heat-treating the nitrogen-containing compound.

In the present invention, as will be described below, when the heat treatment temperature is lowered, the nitrogen-containing aromatic ring structure formed by the nitrogen-containing compound remains in the catalyst. Thus, the component derived from a nitrogen-containing compound in the active particle-containing catalyst preferably has a nitrogen-containing aromatic ring structure. Here, the details of the nitrogen-containing compound and the nitrogen-containing aromatic ring structure are as described for the first catalyst.

### <<Method for producing active particle-containing catalyst>>

Next, a method for producing an active particle-containing catalyst will be described. The above active particle-containing catalyst may be obtained by heat-treating at least a metal precursor, or preferably, it can be obtained by mixing a metal precursor and a support such as porous carbon, silica, or aluminum oxide, and heat-treating the mixture containing a metal precursor and a support such as porous carbon. Here, a metal precursor or a mixture containing a metal precursor and a support such as porous carbon, which is a raw material for the active particle-containing catalyst, is hereinafter also referred to as a second catalyst raw material. The heat treatment is typically sintering. In addition, when the active particle-containing catalyst contains a component derived from a nitrogen-containing compound, the nitrogen-containing compound may be additionally mixed with a metal precursor and a support such as porous carbon, and the second catalyst raw material may contain the metal precursor, the support such as porous carbon and the nitrogen-containing compound.

The metal precursor is a compound that is converted into the above active particles by heat treatment. Therefore, the metal precursor is a precursor containing a metal element selected from among the above elements of Groups 8 to 11, and preferable metal elements are also as described above. The metal elements used in the metal precursor may be used alone or two or more thereof may be used in combination. When two or more metal elements are used in combination, the combination of metal elements is as described above.

Here, when two or more metal precursors are used in combination, the active particle-containing catalyst may be obtained by mixing two or more metal precursors or by mixing two or more metal precursors and a support such as porous carbon, silica, or aluminum oxide, and then performing a heat treatment, and thus, the second catalyst raw material may contain two or more metal precursors.

The metal precursor preferably contains metal ions. In addition, the metal precursor may be used, for example, in the form of a metal salt. Examples of metal salts include metal nitrates, metal sulfates, metal chlorides, metal bromides, metal iodides, and metal acetates, and among these, metal chlorides and metal nitrates are preferable, and metal nitrates are more preferable because appropriate active particles can be formed.

Here, specific examples of metal nitrates and metal chlorides used in the metal precursor are the same as the metal salts used as the second catalyst to be described below, and the description thereof will be omitted. In addition, the metal salt may be a hydrate.

In addition, the porous carbon and nitrogen-containing compound used as raw materials in this production method are as described above for the first catalyst.

The metal content derived from the metal precursor in the second catalyst raw material with respect to a total amount of the second catalyst raw material is preferably 0.01 mass% or more and 70 mass% or less and more preferably 0.12 mass% or more and 50 mass% or less. Within the above range, the metal is contained in the catalyst without aggregating, and an appropriate amount of catalytic active sites is formed. Therefore, it becomes easier to increase the selectivity and the like when a carbonyl compound is synthesized, and it also increases the reaction efficiency and the like.

In addition, the content of the support in the second catalyst raw material with respect to a total amount of the second catalyst raw material is not particularly limited, and is, for example, 10 mass% or more and 99.99 mass% or less, preferably 20 mass% or more and 99.9 mass% or less, and more preferably 30 mass% or more and 80 mass% or less. When the content of the support is within the above range, it is possible to maintain favorable catalytic activity and appropriately support the active particles and the component derived from a nitrogen-containing compound.

When a nitrogen-containing compound is used, the amount of the nitrogen-containing compound added in the second catalyst raw material is preferably adjusted so that the molar ratio of the nitrogen-containing aromatic ring of the nitrogen-containing compound to the metal element derived from the metal precursor (nitrogen-containing aromatic ring/metal element) is 0.1 or more and 30 or less and more preferably adjusted so that the molar ratio thereof is 1 or more and 20 or less.

The temperature at which the second catalyst raw material is heat-treated is preferably 150°C or higher and 800°C or lower, more preferably 180°C or higher and 550°C or lower, and still more preferably 200°C or higher and 380°C or lower. In addition, the heat treatment time is not particularly limited, and is, for example, 0.25 hours or longer and 10 hours or shorter, preferably 0.5 hours or longer and 8 hours or shorter, and more preferably 1 hour or longer and 5 hours or shorter.

In addition, the heat treatment may be performed in an inert gas atmosphere such as argon or nitrogen gas or performed in a reducing atmosphere such as hydrogen.

The second catalyst raw material to be heat-treated is preferably in the form of powder or particles or in the form of pellets. When the second catalyst raw material is in the form of powder or particles, the catalyst obtained by heat treatment can also be in the form of powder or particles. In addition, more preferably, the second catalyst raw material to be heat-treated consists of a metal precursor and a support such as porous carbon, or a metal precursor, a support such as porous carbon, and a nitrogen-containing compound.

The second catalyst raw material may be obtained, for example, by preparing a diluted solution of the second catalyst raw material and drying the diluted solution. In the diluted solution of the second catalyst raw material, the components (a metal precursor and a support such as porous carbon, or a metal precursor, a nitrogen-containing compound, and a support such as porous carbon) are preferably dispersed or dissolved in the dilution solvent. When the components are dispersed or dissolved in the dilution solvent, it is possible to obtain a second catalyst raw material in which the components are uniformly mixed.

As the dilution solvent used to dilute the second catalyst raw material, water and an organic solvent can be used, and water is preferable.

### <<Metal salt>>

Examples of metal salts used as the second catalyst include metal nitrates, metal sulfates, metal chlorides, metal bromides, metal iodides, and metal acetates, and among these, metal chlorides and metal nitrates are preferable, and metal chlorides are more preferable. Specific examples of metal nitrates include cobalt nitrate (Co(NO₃)₂), nickel nitrate (Ni(NO₃)₂), copper nitrate (Cu(NO₃)₂), rhodium nitrate (Rh(NO₃)₃), palladium nitrate (Pd(NO₃)₂), silver nitrate (AgNO₃), iridium nitrate (Ir(NO₃)₄), platinum nitrate (Pt(NO₃)₄), gold nitrate (AuNO₃), ruthenium nitrate (Ru(NO₃)₃), iron nitrate (Fe(NO₃)₃), manganese nitrate (Mn(NO₃)₂), zinc nitrate (Zn(NO₃)₂), chromium nitrate (Cr(NO₃)₃),and tin nitrate (Sn(NO₃)₄).

In addition, specific examples of metal chlorides include PdCl₂, RuCl₃, IrCl₃, PtCl₄, and AuCl₃. In addition, HAuCl₄ may be used. Among these, PdCl₂, HAuCl₄, and Ir(III)Cl₃ are preferable.

The metal salt used as the second catalyst may be supported on a support. The support is as described above, and is preferably porous carbon, silica, or aluminum oxide. The metal salt may be supported on a support, for example, by drying a dispersion solution obtained by dispersing a support and a metal salt in a solvent.

The second catalysts may be used alone or two or more thereof may be used in combination.

### <Second embodiment>

Next, a second embodiment of the present invention will be described. Fig. 2 shows a carbon dioxide reduction device 10B according to the second embodiment of the present invention. The carbon dioxide reduction device 10B according to the present embodiment differs from the first embodiment in that the first reaction section 31 and the second electrolysis section 22 are additionally connected with a second ion exchange membrane 25 therebetween. Hereinafter, the second embodiment will be described regarding the differences from the first embodiment.

In the present embodiment, the reaction section 31 is isolated from the second electrolysis section 22 by the second ion exchange membrane 25. Therefore, in the present embodiment, the electrochemical cell is divided into three regions: the first electrolysis section 21, the second electrolysis section 22 and the first reaction section 31, by two ion exchange membranes.

The details of the ion exchange membrane that can be used in the second ion exchange membrane 25 are as described for the first ion exchange membrane 15. However, as the second ion exchange membrane 25, it is preferable to use the same type of ion exchange membrane as the first ion exchange membrane 15. Therefore, when the first ion exchange membrane 15 is a cation exchange membrane, it is preferable that the second ion exchange membrane 25 be a cation exchange membrane. In addition, when the second ion exchange membrane 15 is an anion exchange membrane, it is preferable that the second ion exchange membrane 25 be an anion exchange membrane.

In the present embodiment, as in the first embodiment, a reduction reaction in which carbon dioxide is reduced to a first reductant such as carbon monoxide occurs at the first electrode 11, a redox substance is oxidized from a reductant A to an oxidant B at the second electrode 12, and the first reductant and the oxidant B are supplied to the reaction section 31 through the first connection path 41 and the second connection path 42, respectively. Then, in the reaction section 31, the second catalyst allows an oxidant B such as a halogen (X₂) to be reduced to a reductant A (for example, a halogen ion X⁻), and a first reductant such as carbon monoxide reacts with a reactant such as an alcohol compound to obtain a desired product such as a carbonyl compound.

In addition, in the second embodiment, although not shown in Fig. 2, a purification device, a supply mechanism and the like are provided, and as in the first embodiment, by-products produced in the reaction section 31 may be purified as necessary and then supplied to the second electrolysis section 22. As described above, the purification device may be a distillation device, and as will be described below, it may be a solid-liquid separation device when a solid by-product such as a metal halide is produced.

In addition, in the second embodiment, anions or cations move between the second electrolysis section 22 and the reaction section 31 through the second ion exchange membrane 25, which allows, for example, the reaction in the reaction section 31 to proceed more efficiently.

More specifically, when the first and second ion exchange membranes 15 and 25 are cation exchange membranes, protons (H⁺) generated in the reaction section 31 move to the second electrolysis section 22 through the second ion exchange membrane 25 and further move to the first electrolysis section 21 through the first ion exchange membrane 15. Therefore, the concentration of the protons (H⁺) in the reaction section 31 decreases, and the reaction in the reaction section 31 easily proceeds. In addition, protons (H⁺) are easily supplied to the first electrolysis section 21, and reduction in the first electrolysis section 21 easily proceeds.

In addition, for example, when the first and second ion exchange membranes 15 and 25 are anion exchange membranes, hydroxide ions (OH⁻) generated in the first electrolysis section 21 move to the second electrolysis section 22 through the first ion exchange membrane 15, and further move to the reaction section 31 through the second ion exchange membrane 25. Therefore, protons (H⁺) generated according to the reaction in the reaction section 31 are neutralized, and thus the concentration of the protons (H⁺) decreases therein, and the reaction in the reaction section 31 easily proceeds. In addition, the hydroxide ions (OH⁻) generated in the first electrolysis section 21 move to another reaction system (the second electrolysis section 22 or the reaction section 31), and thus the reduction reaction in the first electrolysis section 21 also easily proceeds.

In addition, when the second ion exchange membrane 25 is a cation exchange membrane, and the redox substance contained in the second electrolysis section 22 is a metal halide, metal ions (preferably alkali metal ions such as sodium and lithium) may move from the second electrolysis section 22 to the reaction section 31, and produce metal hydroxides with hydroxide ions in the reaction section 31. That is, in the present embodiment, a metal hydroxide may be produced as a by-product in the reaction section 31. In addition, a metal halide may be further produced with halogen ions. Therefore, in the present embodiment, a metal halide may be produced as a by-product in the reaction section 31.

In addition, when the second ion exchange membrane 25 is an anion exchange membrane, halogen ions produced in the first reaction section 31 may move to the second electrolysis section 22 through the second ion exchange membrane 25 (anion exchange membrane). Therefore, there is no need to return halogen ions that have once moved to the reaction section 31 to the second electrolysis section 22 through a supply mechanism, and thus the device can be further simplified.

### <Third embodiment>

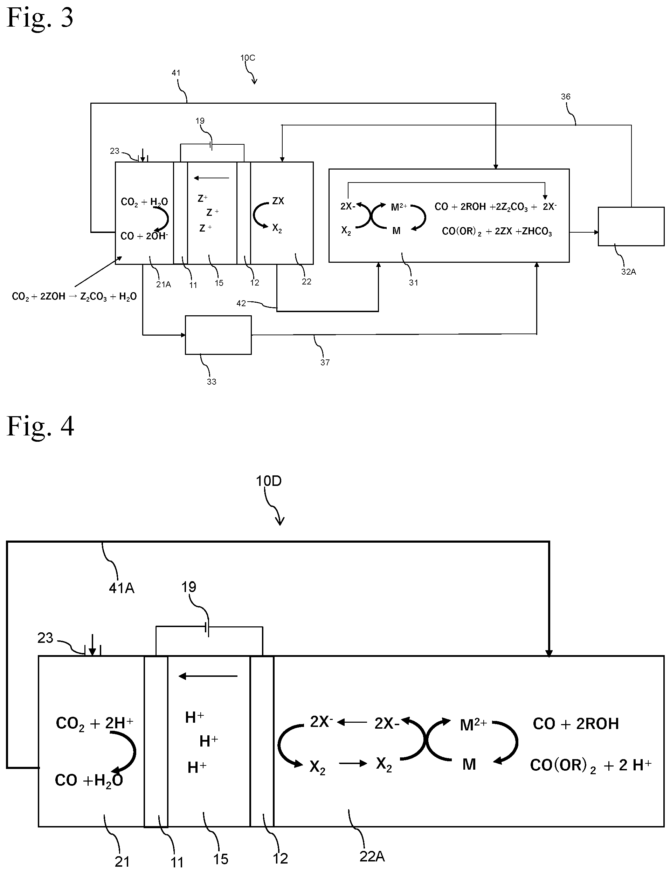

Next, a third embodiment of the present invention will be described. Fig. 3 shows a carbon dioxide reduction device 10C according to the third embodiment of the present invention. Here, in the third embodiment, Z is an alkali metal salt. The third embodiment will be described below, focusing on the differences from the first embodiment.

In the carbon dioxide reduction device 10C according to the third embodiment, a first electrolysis section 21A including the first electrode 11 is filled with an electrolytic solution. Therefore, carbon dioxide introduced from the inlet port 23 which is contained in the electrolytic solution comes into contact with the first electrode 11 and is reduced to a first reductant such as carbon monoxide at the first electrode 11. The electrolytic solution in the first electrolysis section 21A is an aqueous electrolytic solution. The aqueous electrolytic solution may be composed of water alone, or one in which a known electrolyte salt is added to water. Examples of electrolyte salts include metal hydroxides, metal halides, metal perchlorates, metal sulfates, and metal carbonates. In addition, in the present embodiment, the first ion exchange membrane 15 is preferably a cation exchange membrane.

As in the first embodiment, the second electrolysis section 22 may be filled with an aqueous electrolytic solution containing a redox substance and water, but the redox substance may contain a metal halide, and preferably an alkali metal halide. In the second electrolysis section 22, a halogen such as an oxidant B is produced, and metal ions such as alkali metal ions derived from the redox substance move to the first electrolysis section 21A through the first ion exchange membrane 15.

Therefore, in the first electrolysis section 21A, a first reductant such as carbon monoxide is produced, and metal ions moved from the second electrolysis section 22 may react with carbon dioxide to produce a metal carbonate. Here, the electrolytic solution with which the first electrolysis section 21A is filled is preferably basic, and due to a basic state, a metal hydroxide is obtained from hydroxide ions produced according to the reaction of reducing carbon dioxide to carbon monoxide, and metal ions, and a metal carbonate is produced from the metal hydroxide and carbon dioxide.

Here, the type of metal carbonate produced in the first electrolysis section 21A is determined depending on the type of redox substance introduced into the second electrolysis section 22, lithium carbonate, potassium carbonate, and sodium carbonate are preferable, and among these, lithium carbonate and sodium carbonate are more preferable, and sodium carbonate is still more preferable.

The metal carbonate produced in the first electrolysis section 21A may be appropriately removed from the first electrolysis section 21A. In addition, the metal carbonate removed from the first electrolysis section 21A may be supplied to the reaction section 31 through a known supply mechanism.

Preferably, the metal carbonate is, for example, taken out from the first electrolysis section 21A together with the electrolytic solution inside the first electrolysis section 21, and purified in a purification device 33 such as a solid-liquid separation device. Then, the purified metal carbonate may be supplied to the reaction section 31 through a supply path 37 (supply mechanism).

As described above, the metal carbonate produced in the first electrolysis section 21A is supplied to the reaction section 31, and as will be described below, it is possible to incorporate the metal carbonate into the reaction section 31 without preparing a separate raw material.

In the present embodiment, the first reductant such as carbon monoxide produced in the first electrolysis section 21A flows as a gas into the reaction section 31 through the first connection path 41, and the halogen (oxidant B) produced in the second electrolysis section 22 flows as a gas into the reaction section 31 through the second connection path 42.

As in the first embodiment, the reaction section 31 contains a second catalyst, and typically contains a reactant, and the reaction section 31 may be filled with a reactant (reaction solution) containing a second catalyst. In addition, the reaction solution may be diluted with a reaction solvent. In the present embodiment, in the reaction section 31, the reaction solution may further contain a metal carbonate. The concentration of the metal carbonate in the reaction solution is not particularly limited, and is, for example, 0.001 to 1 M or 0.005 to 0.5 M.

Examples of metal carbonates include lithium carbonate, potassium carbonate, sodium carbonate, and cesium carbonate, and among these, lithium carbonate, potassium carbonate, and sodium carbonate are preferable, and among these, sodium carbonate is more preferable.

As described above, the metal carbonate produced in the first electrolysis section 21A may be supplied to the reaction section 31 through a supply mechanism 37, or a metal carbonate other than that produced in the first electrolysis section 21A may be introduced through an inlet port (not shown) of the reaction section 31.

In the present embodiment, in the reaction section 31, as shown in Fig. 3, the second catalyst allows an oxidant B such as a halogen (X₂) to be reduced to a reductant A (for example, a halogen ion X⁻), and a first reductant such as carbon monoxide reacts with a reactant such as an alcohol compound to produce a desired product such as a carbonyl compound.

In addition, in the present embodiment, with the reaction section 31 containing a metal carbonate, protons (H⁺) generated in the reaction through which a desired product is obtained are neutralized, and thus the concentration of the protons (H⁺) decreases, and the reaction in the reaction section 31 easily proceeds.

In addition, in the reaction section 31 of the present embodiment, a salt (for example, metal halide, metal hydrogen carbonate, etc.) produced as by-products by neutralization is produced, and the salt produced as by-products may be removed from the reaction section 31. In addition, the by-product removed from the reaction section 31 may be supplied to the second electrolysis section 22 through a known supply mechanism.

Preferably, the salt produced as by-products is taken out from the reaction section 31 together with a desired product obtained in the reaction section 31 and the unreacted reactants, and purified in a purification device 32A such as a solid-liquid separation device. Then, among the purified by-products, those that can be used as the redox substance (metal halide) are preferably supplied to the second electrolysis section 22 through the supply path 36 (supply mechanism).

As described above, with the by-product being supplied to the second electrolysis section 22, since the redox substance is circularly used between the second electrolysis section 22 and the reaction section 31, it is possible to reduce raw material loss. In addition, in the first reaction section 31, since by-products derived from halogens (redox substances) in the form of salt can be removed, the workability during separation and removal is enhanced.

### <Fourth embodiment>

Next, a fourth embodiment of the present invention will be described. Fig. 4 shows a carbon dioxide reduction device 10D according to the fourth embodiment of the present invention. The fourth embodiment will be described below, focusing on the differences from the first embodiment.

In the first embodiment, the reaction section and the second electrolysis section are constituted of different reaction systems, but in the present embodiment, the reaction section is omitted, and the second electrolysis section also functions as a reaction section. In addition, the second connection path connecting the reaction section 31 and the second electrolysis section 22 is also omitted. Here, in the description of the present embodiment, the second electrolysis section will be described as an "electrolysis and reaction section".

That is, the carbon dioxide reduction device 10D according to the fourth embodiment includes the first electrode 11, the second electrode 12, the first ion exchange membrane 15, and the first electrolysis section 21 including the first electrode 11, which are the same as those in the first embodiment.

In addition, an electrolysis and reaction section (second electrolysis section) 22A includes the second electrode 12, which is an anode, and constitutes an anode compartment. The electrolysis and reaction section 22A is filled with an electrolytic solution. In addition, the first electrolysis section 21 and the electrolysis and reaction section 22A are connected through a first connection path 41A. The configuration of the first connection path 41A is as described in the first embodiment.

The electrolysis and reaction section 22A contains a second catalyst, and typically contains a reactant. In the electrolysis and reaction section 22A, the reactant may contain a second catalyst, and the electrolysis and reaction section 22A may be filled with the reactant containing a second catalyst. In addition, the reactant with which the electrolysis and reaction section 22A is filled may be diluted with the above reaction solvent.

Therefore, the second catalyst may be contained in the reactant or in a mixture of the reactant and the reaction solvent. The second catalyst may be dispersed or dissolved in the reactant or the mixture. Thus, the reactant or the mixture of the reactant and the reaction solvent, containing a second catalyst, may form the electrolytic solution with which the electrolysis and reaction section 22A is filled. The electrolytic solution only needs to be in contact with the second electrode 12, and the interior of the electrolysis and reaction section 22A may be entirely filled with the electrolytic solution, or the interior of the electrolysis and reaction section 22A may be partially filled such that a part of space remains unfilled.

The electrolytic solution with which the electrolysis and reaction section 22A is filled may further contain a redox substance. The redox substance may be dissolved or dispersed in the electrolytic solution. In the electrolytic solution with which the second electrolysis section 22A is filled, the concentration of the redox substance is not particularly limited, and is, for example, 0.001 to 5.0 M, preferably 0.01 to 1.0 M, and more preferably 0.05 to 0.5 M. In addition, in the electrolytic solution with which the second electrolysis section 22A is filled, the content of the second catalyst is not particularly limited, and is, for example, 0.001 to 50 g, preferably 0.005 to 25g, and more preferably 0.01 to 10 g, per 1 L of the electrolytic solution.

In the present embodiment, as in the first embodiment, a reduction reaction in which carbon dioxide is reduced to a first reductant such as carbon monoxide occurs at the first electrode 11, and the first reductant is discharged to the electrolysis and reaction section 22A through the first connection path 41. In addition, a redox substance is oxidized from a reductant A to an oxidant B at the second electrode 12, and the oxidized oxidant B is directly supplied to the electrolysis and reaction section 22A.

Thus, in the electrolysis and reaction section 22A, the second catalyst allows an oxidant B such as a halogen (X₂) to be reduced to a reductant A (for example, a halogen ion X⁻), and a first reductant such as carbon monoxide reacts with a reactant such as an alcohol compound to obtain a desired product such as a carbonyl compound.

As described above, in the present embodiment, a first reductant is produced at the first electrode 11, an oxidant B is produced at the second electrode 12, and these first reductant and oxidant B are used to produce an organic substance in the electrolysis and reaction section 22A with a second catalyst, and therefore, since the reaction of the redox substance is prioritized in the electrolysis section, a desired product can be efficiently produced while inhibiting oxidation of the reactant such as an alcohol compound.

In addition, since the first electrolysis section 21 and the electrolysis and reaction section 22A can be constituted of a general electrochemical cell, it is possible to obtain a desired product from carbon dioxide without complicating the structure of the device. In addition, water produced as a by-product in the first electrolysis section 21 is prevented from entering the electrolysis and reaction section 22A and inhibiting the reaction, and as a result, the reaction efficiency of the desired product is further enhanced.

### <Fifth embodiment>

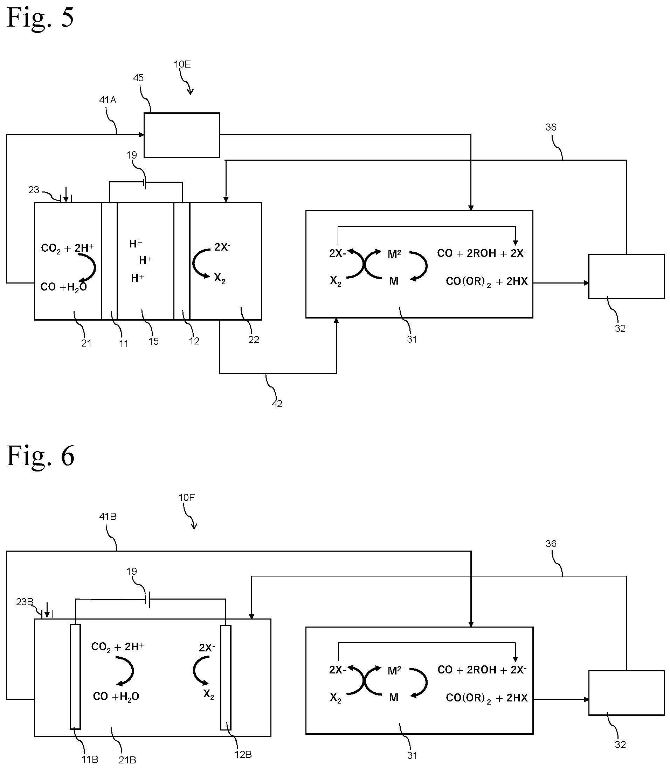

Next, a fifth embodiment of the present invention will be described. Fig. 5 shows a carbon dioxide reduction device 10E according to the fifth embodiment of the present invention. The fifth embodiment differs from the first embodiment in that the first reductant contains carbon monoxide, and a separation mechanism 45 that separates carbon monoxide and carbon dioxide is provided on the first connection path 41A. The fifth embodiment will be described below, focusing on the differences from the first embodiment.

In the present embodiment, as the separation mechanism 45, it is preferable to use a carbon dioxide separation device. The carbon dioxide separation device is a device that separates carbon dioxide and carbon monoxide by absorbing, adsorbing, or selectively passing carbon dioxide.

Examples of carbon dioxide separation devices include a separation device using an amine absorption method, a separation device using a physical adsorption method, and a separation device using a membrane separation method.

Examples of separation devices using an amine absorption method include a separation device including an absorbing solution containing an amine compound or an absorbing material in which an amine compound is applied to the surface of a porous material. Examples of separation devices using a physical adsorption method include those using an adsorbent that physically adsorbs carbon dioxide with a porous component such as zeolite. In addition, examples of separation devices using a membrane separation method include those using a permeable membrane which is also called a molecular gate membrane, and selectively allows carbon dioxide to pass through.

In the present embodiment, when carbon dioxide is separated and removed through the separation mechanism 45, a gas discharged from the first electrolysis section 21 passes through the separation mechanism 45, and thus the concentration of carbon dioxide can be reduced but the concentration of carbon monoxide can be increased. Therefore, it is possible to increase the carbon monoxide concentration in the reaction solution in the reaction section 31 and it is possible to further increase the efficiency of desired product production in the reaction section 31.

Here, Fig. 5 shows a mode in which the separation mechanism 45 is applied to the carbon dioxide reduction device 10 according to the first embodiment, but the separation mechanism 45 can be also applied to any of the carbon dioxide reduction devices according to the second to fourth embodiments.

### <Sixth embodiment>

Next, a sixth embodiment of the present invention will be described. Fig. 6 shows a carbon dioxide reduction device 10F according to the sixth embodiment of the present invention. In the first embodiment, a first ion exchange membrane is provided between the first electrode and the second electrode, but in the present embodiment, the first ion exchange membrane is omitted. In this case, the electrolysis section constituted of the electrochemical cell is not demarcated by the first ion exchange membrane and is constituted of one electrolysis section (a first electrolysis section 21B). That is, a two-compartment type is used in the first embodiment, but in the present embodiment, a one-compartment type is used. Thus, the second connection path is omitted, and the connection path is formed by a first connection path 41B that connects the first electrolysis section 21B and the reaction section 31.

In the present embodiment, the first electrolysis section 21B is filled with an electrolytic solution. The electrolytic solution may be an aqueous electrolytic solution, or water containing a redox substance. The redox substance is as described above, and the concentration of the redox substance in the electrolytic solution is as described for the second electrolysis section 22 according to the first embodiment. A first electrode 11B and a second electrode 12B may be disposed inside the first electrolysis section 21B so that they come into contact with the electrolytic solution.

In the present embodiment, carbon dioxide is introduced into the first electrolysis section 21B through an inlet port 23B, and at the first electrode 11B, carbon dioxide is reduced, and a first reductant such as carbon monoxide is produced. On the other hand, at the second electrode 12B, a reductant A of the redox substance is oxidized to an oxidant B, and the oxidant B such as a halogen is obtained.

The first reductant and oxidant B obtained in the first electrolysis section 21B are both discharged as gases to the reaction section 31 through the first connection path 41B. In the present embodiment, in the reaction section 31, as in the first embodiment, the second catalyst allows an oxidant B such as a halogen (X₂) to be reduced to a reductant A (for example, a halogen ion X⁻), and a first reductant such as carbon monoxide reacts with a reactant such as an alcohol compound to obtain a desired product such as a carbonyl compound.

As described above, in the present embodiment, a first reductant is produced at the first electrode 11B,an oxidant B is produced at the second electrode 12B, and these first reductant and oxidant B are used to produce an organic substance in the reaction section 31 with a second catalyst, and therefore, since the reaction of the redox substance is prioritized in the electrolysis section, a desired product can be efficiently produced while inhibiting oxidation of the reactant such as an alcohol compound. In addition, since the first electrolysis section 21B can be constituted of a general electrochemical cell, it is possible to obtain a desired product from carbon dioxide without complicating the structure of the device. In addition, since an aqueous electrolytic solution can be used in the electrolysis section 21B, it is not necessary to use a reactant such as an alcohol compound in the electrochemical cell constituting the electrolysis section 21B. Therefore, there is no need to make the electrochemical cell alcohol-resistant, and it is also easy to reuse existing electrolysis instruments.

Here, in the present embodiment, both halogen (X₂) such as chlorine and carbon monoxide are supplied to the reaction section 31 through the first connection path 41B. For example, in order to inhibit the reaction between chlorine and carbon monoxide that generates harmful substances such as phosgene, it is preferable for the first connection path 41B not to use a carbon material.

In addition, in the present embodiment a mode in which the first ion exchange membrane is omitted in the carbon dioxide reduction device 10 according to the first embodiment is shown, but a mode in which the first ion exchange membrane is similarly omitted in the second, third and fifth embodiments is also applicable.

### <Seventh embodiment>

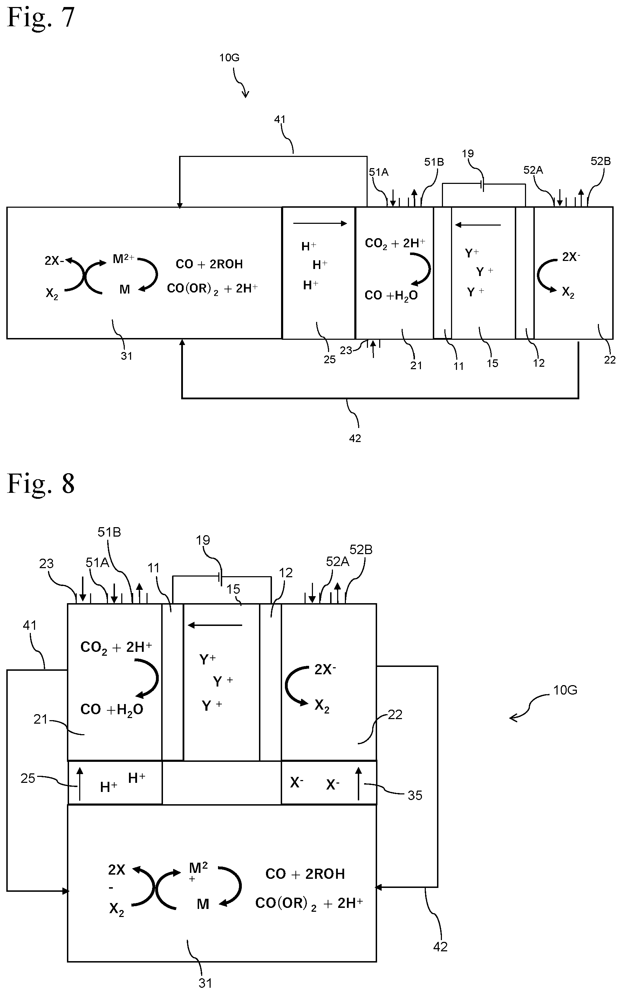

Next, a seventh embodiment of the present invention will be described. The seventh embodiment will be described regarding the differences from the second embodiment, with reference to Fig. 7. In the carbon dioxide reduction device 10B according to the second embodiment, the first reaction section 31 is connected to the second electrolysis section 22 with the second ion exchange membrane 25 therebetween. However, the carbon dioxide reduction device 10G according to the present embodiment differs from that of the second embodiment in that the first reaction section 31 is connected to the first electrolysis section 21 with the second ion exchange membrane 25 therebetween.

In addition, in the seventh embodiment, the first electrolysis section 21 including the first electrode 11 is filled with an electrolytic solution. The electrolytic solution may be an aqueous electrolytic solution. The details of the aqueous electrolytic solution used in the first electrolysis section 21 are as described in the third embodiment. Here, as described in the second embodiment, the second electrolysis section 22 is filled with an electrolytic solution, and the electrolytic solution is preferably an aqueous electrolytic solution.

In addition, in the present embodiment, in the first electrolysis section 21 and the second electrolysis section 22, a first supply port 51A and a second supply port 52A through which an electrolytic solution is supplied, and a first exhaust port 51B and a second exhaust port 52B through which an electrolytic solution is discharged from the first electrolysis section 21 and the second electrolysis section 22, are provided, respectively. Thus, the electrolytic solution is supplied to the first electrolysis section 21 through the first supply port 51A, and the electrolytic solution is discharged through the first exhaust port 51B. Similarly, the electrolytic solution is supplied to the second electrolysis section 22 through the second supply port 52A, and the electrolytic solution is discharged through the second exhaust port 52B. The supply and discharge of the electrolytic solution may be repeated appropriately or may be performed continuously.

As described above, in the electrolysis sections 21 and 22, when the electrolytic solution is supplied and discharged, it is possible to prevent the concentrations of carbon dioxide and redox substances from decreasing according to the reaction and keep them constant, and it is possible to produce a first reductant and an oxidant B with high reaction efficiency.

Here, regarding the electrolytic solution, generally, a part of the electrolytic solution with which each electrolysis section is filled is discharged, and according to the amount of the discharged electrolytic solution, a new electrolytic solution may be supplied to each electrolysis section. In addition, the electrolytic solution may be repeatedly discharged and supplied so that it circulates as the electrolytic solution is discharged and supplied again. In this case, the electrolytic solution discharged from the first and second electrolysis sections may be returned to the first and second electrolysis sections after impurities have been removed or the electrolyte or redox substance has been added.

In the present embodiment, as in the second embodiment, a reduction reaction in which carbon dioxide is reduced to a first reductant such as carbon monoxide occurs at the first electrode 11, a redox substance is oxidized from a reductant A to an oxidant B at the second electrode 12, and the first reductant and the oxidant B are supplied to the reaction section 31 through the first connection path 41 and the second connection path 42, respectively. Then, in the reaction section 31, the second catalyst allows an oxidant B such as a halogen (X₂) to be reduced to a reductant A (for example, a halogen ion X⁻), and a first reductant such as carbon monoxide reacts with a reactant such as an alcohol compound to obtain a desired product such as a carbonyl compound.

In addition, anions or cations move between the first electrolysis section 21 and the reaction section 31 through the second ion exchange membrane 25. In addition, cations (Y⁺) move between the first electrolysis section 21 and the second electrolysis section 22 through the first ion exchange membrane 15, and for example, the reaction in the reaction section 31 can proceed more efficiently.

More specifically, when the first and second ion exchange membranes 15 and 25 are cation exchange membranes, as shown in Fig. 7, protons (H⁺) generated in the reaction section 31 are supplied to the first electrolysis section 21 through the second ion exchange membrane 25. The cations Y⁺ remaining in the second electrolysis section 22 when a halogen is produced from a metal halide are supplied to the first electrolysis section 21 through the first ion exchange membrane 15.

In addition, the second ion exchange membrane 25 may be an anion exchange membrane, and the first ion exchange membrane may be a cation exchange membrane. In this case, hydroxide ions (OH⁻) generated in the first electrolysis section 21 move to the reaction section 31 through the second ion exchange membrane 25. Therefore, for example, protons (H⁺) produced according to the reaction in the reaction section 31 are neutralized, and thus the concentration of the protons (H⁺) decreases, and the reaction in the reaction section 31 easily proceeds.

When this embodiment is used, a hydrogen halide, which is a by-product produced in the first reaction section 31, can be efficiently removed.

### <Eighth embodiment>

Next, an eighth embodiment of the present invention will be described. In the second and seventh embodiments, the reaction section 31 is connected to only one of the first electrolysis section 21 and the second electrolysis section 22 through the ion exchange membrane 25 but in the eighth embodiment, the reaction section 31 is connected to both the first electrolysis section 21 and the second electrolysis section 22 through the ion exchange membrane. Hereinafter, with reference to Fig. 8, the eighth embodiment will be described regarding the differences from the seventh embodiment, and parts that are not described are the same as those of the seventh embodiment.

In the eighth embodiment, a third ion exchange membrane 35 is provided in addition to the first and second ion exchange membranes 15 and 25. Thus, the first reaction section 31 is connected to the first electrolysis section 21 through the second ion exchange membrane 25, and is connected to the second electrolysis section 22 through the third ion exchange membrane 35.

The ion exchange membranes constituting the second ion exchange membrane 25 and the third ion exchange membrane 35 are as described above, and the second ion exchange membrane 25 may be a cation exchange membrane, and the third ion exchange membrane 35 may be an anion exchange membrane. However, the first to third ion exchange membranes 15, 25, and 35 are disposed so that they do not come into contact with each other.

In the present embodiment, as in the seventh embodiment, a reduction reaction in which carbon dioxide is reduced to a first reductant such as carbon monoxide occurs at the first electrode 11, a redox substance is oxidized from a reductant A to an oxidant B at the second electrode 12, and the first reductant and the oxidant B are supplied to the reaction section 31 through the first connection path 41 and the second connection path 42, respectively. Then, in the reaction section 31, the second catalyst allows an oxidant B such as a halogen (X₂) to be reduced to a reductant A (for example, a halogen ion X⁻), and a first reductant such as carbon monoxide reacts with a reactant such as an alcohol compound to obtain a desired product such as a carbonyl compound.

In addition, cations move between the first electrolysis section 21 and the reaction section 31 through the second ion exchange membrane 25. Therefore, protons (H⁺) generated in the reaction section 31 are supplied to the first electrolysis section 21 through the second ion exchange membrane 25. In addition, when the first ion exchange membrane 15 is a cation exchange membrane, the cations Y⁺ remaining in the second electrolysis section 22 when a halogen is produced from a metal halide are supplied to the first electrolysis section 21 through the first ion exchange membrane 15.

In addition, anions move between the second electrolysis section 22 and the reaction section 31 through the third ion exchange membrane 35. Therefore, halogen ions, which are the reductant A of the redox substance, are supplied to the second electrolysis section 22 through the third ion exchange membrane 35.

The above configuration enables the reduction reaction in the first electrolysis section 21 and the chemical reaction in the reaction section 31 to occur efficiently. In addition, a redox substance supplied as an oxidant A to the reaction section 31 through the second connection path 42 can be returned as a reductant B to the second electrolysis section 22 through the third ion exchange membrane 35. Therefore, even if a new redox substance is not added to the second electrolysis section 22, the process of producing a carbonyl compound can be performed over a long period.

### <Other embodiments>

In the above first, second, and fourth embodiments, the first electrolysis section 21 is not filled with an electrolytic solution, and a reduction reaction is performed on gaseous carbon dioxide according to a gas-phase reaction. However, as in the third embodiment, in the first, second, and fourth embodiments, the first electrolysis section 21 is filled with an aqueous electrolytic solution, and carbon dioxide that is contained in the electrolytic solution may come into contact with the first electrode 11 and be reduced to a first reductant. For example, when the ion exchange membrane 15 is a cation exchange membrane, not only protons but also alkali metal cations move from the second electrolysis section 22 to the first electrolysis section 21, and thus an alkali metal carbonate precipitates on the surface of the first electrode 11. However, if the first electrolysis section 21 is filled with an electrolytic solution, it becomes easier to remove the alkali metal carbonate precipitated on the surface of the first electrode, making long-term operation easier. In this case, the electrolytic solutions in the first and second electrolysis sections 21 and 22 are both preferably an aqueous electrolytic solution in consideration of solubility of the alkali metal carbonate.

In addition, in the above embodiments, a mode in which carbon monoxide produced in the first electrolysis section 11 and the oxidant B produced in the second electrolysis section 21 are supplied as gases to the reaction section 31 is shown, but they may be supplied as liquids together with the electrolytic solution.

Hereinafter, an electrochemical system and a method for producing a carbonyl compound using an electrochemical system according to a second aspect of the present invention will be described using embodiments with reference to the drawings. Here, in the following description of the second aspect, elements having the same configuration will be denoted with the same reference numerals. In addition, the electrochemical system according to the second aspect is also an electrochemical reaction device, and typically, it is also a carbon dioxide reduction device.

### <Ninth embodiment>

An electrochemical system 70 according to a ninth embodiment of the present invention is a system that electrochemically synthesizes a carbonyl compound (also referred to as an electrochemical reaction device). The carbonyl compound produced in the electrochemical system 70 is either or both of an organic carbonate and an organic oxalate. As will be described below, the electrochemical system 70 includes a redox species (redox substance), and a carbonyl compound is synthesized using the redox species (redox substance).

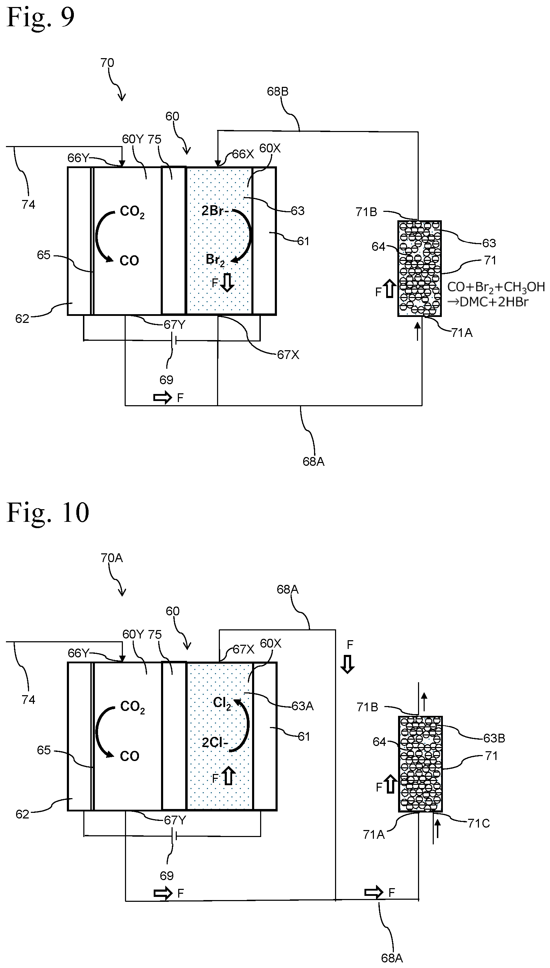

As shown in Fig. 9, the electrochemical system 70 includes an electrochemical cell 60 and a reaction chamber 71 (first reaction section). The electrochemical cell 60 includes an anode (second electrode) 61 and a cathode (first electrode) 62. The anode 61 and the cathode 62 are disposed inside the electrochemical cell 60. A isolating membrane 75 disposed between the anode 61 and the cathode 62 is provided inside the electrochemical cell 60. The isolating membrane 75 demarcates the interior region of the electrochemical cell 60 into a region on the side of the cathode 62 (a cathode compartment 60Y or a first electrolysis section) and a region on the side of the anode 61 (an anode compartment 60X or a second electrolysis section). Thus, the cathode compartment 60Y is a region where a reduction reaction occurs, and the anode compartment 60X is a region where an oxidation reaction occurs.

In the present embodiment, the reaction chamber 71 (first reaction section) contains a second catalyst 64 that allows a carbonyl compound to be synthesized. The second catalyst 64 is loaded into the reaction chamber 71. In addition, the cathode compartment 60Y contains a first catalyst 65 that allows carbon dioxide to be reduced to carbon monoxide. The first catalyst 65 may be contained on the cathode 62.

At the electrochemical cell 60, first and second supply ports 66X and 66Y as supply ports of the electrochemical cell 60, and first and second exhaust ports 67X and 67Y as exhaust ports are provided. The first supply port 66X and the first exhaust port 67X are provided on the anode compartment 60X. The first exhaust port 67X is connected to a supply port 71A of the reaction chamber 71 through a connection path 68A, and the first supply port 66X is connected to an exhaust port 71B of the reaction chamber 71 through a connection path 68B. The connection paths and a supply path 74 to be described below are not particularly limited, and may be constituted of a conduit or the like.

Therefore, in the anode compartment 60X, an oxidized product (oxidant B) of redox species is produced as will be described below, and the anode compartment 60X and the reaction chamber 71 are connected so that the oxidized product (redox species) is supplied from the anode compartment 60X to the reaction chamber 71. In addition, in the reaction chamber 71, the redox species is reduced to form a reduced species (a reductant A), and the anode compartment 60X and the reaction chamber 71 are connected so that the reduced species (redox species) is supplied from the reaction chamber 71 to the anode compartment 60X.

The second supply port 66Y and the second exhaust port 67Y are provided on the cathode compartment 60Y. The second supply port 66Y is connected to a carbon dioxide supply source (not shown) through the supply path 74, and allows carbon dioxide to be supplied to the cathode compartment 60Y. Carbon dioxide may be supplied to the cathode compartment 60Y alone, or together with other gases such as an inert gas such as argon or nitrogen, or oxygen gas. The details of the carbon dioxide supply source are as described above.

The second exhaust port 67Y allows carbon monoxide reduced from carbon dioxide in the cathode compartment 60Y to be discharged from the cathode compartment 60Y, and to be supplied from the supply port 71A to the reaction chamber 71 through the connection path 68A with convection F flow. Therefore, the cathode compartment 60Y and the reaction chamber 71 are connected so that carbon monoxide is supplied from the cathode compartment 60Y to the reaction chamber 71.

In the present embodiment, in the cathode compartment 60Y, carbon dioxide is reduced to carbon monoxide according to a gas-phase reaction. That is, gaseous carbon dioxide comes into contact with the first catalyst 65 on the cathode 62, and carbon monoxide is produced. Therefore, carbon monoxide is supplied as a gas from the cathode compartment 60Y to the reaction chamber 71. Here, the gas supplied from the cathode compartment 60Y to the reaction chamber 71 generally also contains unreacted carbon dioxide.

Here, the first and second exhaust ports 67X and 67Y are connected to the supply port 71A of the reaction chamber 71 through the same connection path 68A, but may be connected through separate connection paths (not shown). In addition, two supply ports are provided on the reaction chamber 71, and the two supply ports may be connected to the exhaust ports 67X and 67Y through separate connection paths.

The electrochemical system 70 contains an electrolytic solution 63. The electrolytic solution 63 contains a reactant and a redox species, and the anode compartment 60X and the reaction chamber 71 are filled with the electrolytic solution 63. The redox species generally serves as an electrolyte. An oxidation reaction in which the redox species is oxidized occurs at the anode 61. The redox species will be described in detail below. Here, the electrolytic solution 63 is a reaction solution for producing a carbonyl compound in the reaction chamber 71.

In the electrochemical system 70, the electrolytic solution 63 flows from the first supply port 66X toward the first exhaust port 67X in the anode compartment 60X, and the electrolytic solution 63 discharged from the first exhaust port 67X is supplied from the supply port 71A to the reaction chamber 71 through the connection path 68A. Thus, the electrolytic solution 63 flows from the supply port 71A toward the exhaust port 71B in the reaction chamber 71 and is discharged from the exhaust port 71B. The electrolytic solution 63 discharged from the exhaust port 71B may be supplied from the first supply port 66X to the anode compartment 60X through the connection path 68B. In this manner, the electrolytic solution 63 is caused to flow by convection F so that it circulates between the anode compartment 60X and the reaction chamber 71. The circulation of the electrolytic solution 63 may be performed repeatedly and continuously.

Although not particularly limited, the electrolytic solution 63 may be caused to flow with convection F by a pump such as a diaphragm pump, a syringe pump, or a peristaltic pump, or may be caused to flow by a known means other than a pump, for example, by utilizing gravity to form convection F. The same applies to a tenth embodiment and subsequent embodiments to be described below.

A voltage is applied between the anode 61 and the cathode 62 by a power source 69. When a voltage is applied, carbon dioxide supplied into the electrochemical cell 60 is reduced in the presence of the first catalyst 65 at the cathode 62 and carbon monoxide is produced. The electrochemical reaction performed at the cathode 62 is typically as shown in Formula (i), but may be performed as shown in (ii).

On the other hand, when a voltage is applied, at the anode 61, the redox species (redox substance) formed by the electrolyte is converted from the reduced species (the reductant A) into an oxidized product (for example, a redox mediator, an oxidant B). When the electrolyte is a brominated salt, the reaction performed in the anode 61 is as shown in the following Formula (B), and bromine is produced as an oxidized product.

2Br⁻ → Br₂+2e⁻ (B)

Carbon monoxide produced at the cathode 62 is supplied to the reaction chamber 71 and the oxidized product (redox species) produced at the anode 61 is supplied to the reaction chamber 71 together with the electrolytic solution 63 by convection F. Then, in the reaction chamber 71, a carbonyl compound is produced from carbon monoxide, an oxidized product (redox species), and a reactant due to the action of the second catalyst 64. The carbonyl compound is at least any of an organic carbonate and an organic oxalate, and is preferably an organic carbonate.

Although not particularly limited, an example of a reaction in which the reactant is methanol and the electrolyte (redox species) is a brominated salt is shown in the following Formula (C). When the reactant is methanol and the redox species is a brominated salt, carbon monoxide reacts with methanol to produce dimethyl carbonate (DMC) in the reaction chamber 71. In addition, bromine is reduced to form bromide ions, for example, hydrogen bromide is produced.

CO+Br₂+CH₃OH → DMC+2HBr (C)

Here, when a carbonyl compound is synthesized, an oxidized product is converted into a reduced species in the reaction chamber 71. The synthesized carbonyl compound and reduced species are returned to the anode compartment 60X together with the electrolytic solution with convection F. This circulation is repeated continuously, and for example, when the concentration of the carbonyl compound in the electrolytic solution 63 reaches a certain level or more, the electrolytic solution may be discharged to the outside through the exhaust port 71B or the other. In addition, the redox species returned to the anode compartment 60X may be oxidized again in the anode compartment 60X.

In the electrochemical system 70, the reaction may be performed in a batch process or in a continuous process. In the case of performing the reaction in a continuous process, while a part of the circulating electrolytic solution is discharged to the outside, for example, through the exhaust port 71B, a new electrolytic solution is supplied from the outside, for example, through the supply port 66X, and thus, the reaction is performed continuously.

Here, the temperatures inside the anode compartment 60X, the cathode compartment 60Y, and the reaction chamber 71 in the electrochemical system 70 are not particularly limited, and are preferably around room temperature, for example, about 0 to 60°C, and preferably about 10 to 40°C.

Hereinafter, components used in the electrochemical system will be described in detail.

### [Cathode]

As described above, the cathode compartment 60Y contains the first catalyst 65 that allows carbon dioxide to be reduced to carbon monoxide. The cathode 62 is disposed inside the cathode compartment 60Y, and the cathode 62 may contain the first catalyst 65. The cathode 62 may include an electrode substrate (current collector). Here, the details of the electrode substrate (current collector) are as described above, and will be omitted. Here, the current collector of the cathode 62 may be made of the same material as the current collector of the anode or may be made of a different material.

### (First catalyst)

The cathode 62 may contain the first catalyst 65. The first catalyst 65 may be supported on an electrode substrate constituting the cathode 62.

The first catalyst is a reduction catalyst that allows carbon dioxide to be reduced to a reductant such as carbon monoxide. The details of the first catalyst and the electrode substrate are as described in the first embodiment. In addition, the first catalyst may also be supported on an electrode substrate as described above, together with a catalyst additive or the other.

### (Second catalyst)

The second catalyst is a catalyst for producing a carbonyl compound from carbon monoxide and a reactant in the presence of an oxidized product of a redox species.

The second catalyst contains a catalyst active species and a metal compound that supports the catalyst active species. In the present invention, when a metal compound is used as a support that supports the catalyst active species, it is possible to efficiency synthesize a carbonyl compound with high Faraday. Although the mechanism behind this is not clear, it is speculated that, when a metal compound is used as a support, an oxidized product such as a halogen is prevented from being adsorbed onto the support, and as a result, the reaction by the second catalyst proceeds appropriately.

The second catalyst contains at least one metal element selected from among the elements of Groups 8 to 11 as a catalyst active species. When the elements of Groups 8 to 11 are used in the second catalyst, it becomes easier to synthesize a carbonyl compound from carbon monoxide with high Faraday efficiency.

Specific examples of elements of Groups 8 to 11 used in the catalyst include Fe, Co, Ni, Cu, Ru, Rh, Pd, Ag, Os, Ir, Pt, and Au. Among these, Co, Ni, Cu, Rh, Pd, Ag, Ir, Au, and Pt are preferable, and among these, Pd, Au, Cu, and Ir are more preferable, Au and Pd are still more preferable, and Pd is particularly preferable. When the above elements are used, it becomes easier to synthesize either or both of an organic carbonate and an organic oxalate from carbon monoxide with high Faraday efficiency. The metal elements contained in the catalyst are still more preferably Au and Pd, and particularly preferably Pd. Here, when Au is used, it becomes easier to produce an organic oxalate with high Faraday efficiency, and when Pd is used, it becomes easier to produce an organic carbonate with high Faraday efficiency.

The metal elements used in the catalyst may be used alone or two or more thereof may be used in combination. When two or more metal elements are used in combination, two or more metal elements selected from among the elements of Groups 8 to 11 may be used in combination, or metal elements of Groups 8 to 11 and metal elements other than the elements of Groups 8 to 11 may be used in combination. Preferable examples of metal elements other than the elements of Groups 8 to 11 include metal elements of the fourth period, but metal elements other than the metal elements of the fourth period may be used.

Specifically, a combination of Au and at least one selected from among Ti, Mn, Fe, Co, Ni, Cu and Zn is preferable. In addition, a combination of Pd and at least one selected from among Ti, Co, Ni, Cr, Mn, Fe, Cu, Zn, Ru, Rh, Ag, Ir, Pt, Au, and Sn is also preferable. In addition, a combination of Ir and at least one selected from among Au, Rh, and Ru is also preferable. According to such combinations, it is possible to reduce the amount of precious metals used and to maintain high Faraday efficiency when a carbonyl compound is synthesized.

Regarding the metal element used in the catalyst, in order to enhance Faraday efficiency, when two or more metal elements are used in combination, it is preferable to contain at least two metal elements selected from among the elements of Groups 8 to 11. Among these, it is more preferable to use either Pd or Ir in combination with at least one selected from among the elements of Groups 8 to 11 other than either Pd or Ir. Specifically, a combination of Pd and at least one selected from among Ag, Au, Pt, Ir, and Cu or a combination of Ir and one element selected from among Au, Rh, and Ru is more preferable.

The catalyst active species may be active particles containing metal element. As will be described below, the second catalyst can be produced by mixing a metal precursor and a metal compound serving as a support and performing a heat treatment. The metal precursor is converted into a catalyst active species (active particle) by the heat treatment, and the catalyst active species is supported on the metal compound serving as a support.

The catalyst active species has catalytic activity to catalyze the reaction when either or both of an organic carbonate and an organic oxalate are synthesized from carbon monoxide. The catalyst active species may be constituted of, for example, a metal itself or may be constituted of a metal oxide. In addition, it may be metal ions whose counter anions are anions derived from a metal salt of a metal precursor to be described below. The catalyst active species may be an appropriate combination of these. Here, the counter anions are not particularly limited, and examples thereof include chloride ions, nitrate ions, sulfate ions, iodide ions, and bromide ions, and chloride ions are preferable.

In the second catalyst, the catalyst active species is active particles in the form of fine particles, and the catalyst active species in the form of fine particles may be supported on a metal compound serving as a support. The active particles are not particularly limited, and are, for example, nano-order or angstrom-order particles, and may be active particles having an average particle size of preferably 0.1 nm or more and 100 nm or less, and more preferably 0.5 nm or more and 40 nm or less. When the active particles have the above particle size and are formed into a nanostructure, the active area increases and it becomes easier to enhance various aspects of catalyst performance. Here, the particle size refers to the area-equivalent circle diameter, which is obtained by determining the areas of particles under image observation using TEM-EDX or the like and calculating the diameters from the areas, assuming that each particle is a circle.

Metal elements in the metal compound constituting the support also include so-called metalloid elements such as silicon. Examples of metal elements in the metal compound constituting the support include metal elements of Groups 1 to 6 and metal elements of Groups 13 and 14, and specific examples thereof include silicon, zirconium, magnesium, titanium, cerium, niobium, tungsten, and aluminum. Examples of metal compounds include metal oxides, metal nitrides, metal borides, and metals, and among these, metal oxides are preferable.

Specific examples of metal compounds include silica, magnesia, titanium oxide, zirconia, alumina, cerium oxide, niobium oxide, silica alumina, silica magnesia, zirconium tungstate, zeolite, sulfated zirconia, and titanosilicate.

Among these, alumina, silica, magnesia, titanium oxide, zirconia, cerium oxide, niobium oxide, silica alumina, silica magnesia, zirconium tungstate, and zeolite are preferable, and among these, alumina, silica alumina, and silica magnesia are preferable. Here, the alumina is not particularly limited, and examples thereof include α-alumina, β-alumina, and γ-alumina, and γ-alumina is preferable. In addition, zeolites are not particularly limited, and mordenite (MOR), FAU(Y), BEA (beta), MFI (ZSM-5) and the other can be used.

The metal compounds may be used alone or two or more thereof may be used in combination.

The metal compound is preferably a porous component so that it can appropriately support a catalyst active species. The BET specific surface area of the metal compound may be, for example, 10 m²/g or more and 1,000 m²/g or less, and is preferably 20 m²/g or more and 500 m²/g or less, and more preferably 40 m²/g or more and 200 m²/g or less. When the surface area of the metal compound is equal to or larger than the lower limit value, an appropriate amount of catalyst active species can be supported on the metal compound. Therefore, the second catalyst has appropriate catalytic activity, and it becomes easier to increase the Faraday efficiency, reaction efficiency and the like when a carbonyl compound is synthesized. In addition, when the surface area is equal to or smaller than the upper limit value, an oxidized product of a redox species such as a halogen is prevented from being adsorbed onto the metal compound, and it becomes easier to increase the reaction efficiency. Here, the BET specific surface area of the catalyst can be measured by gas adsorption analysis.

In addition, the metal compound is not particularly limited, and may be, for example, in the form of powder or particles. In addition, the particle size of the metal compound is not particularly limited as long as it can be used as a support for a catalyst active species.

The amount of the metal of the active catalyst species in the second catalyst with respect to 100 parts by mass of the metal compound is, for example, 0.05 parts by mass or more and 20 parts by mass or less, preferably 0.1 parts by mass or more and 10 parts by mass or less, and more preferably 0.2 parts by mass or more and 4 parts by mass or less. When the content of the metal element constituting the active catalyst species is equal to or larger than the lower limit value, it is possible to appropriately synthesize a carbonyl compound with the second catalyst. In addition, when the content is equal to or smaller than the upper limit value, it becomes easier to obtain the effect corresponding to the content.

In the present embodiment, the catalyst performance can be enhanced by adding, in addition to the metal compound, a second metal different from the metal component of the metal compound to the second catalyst. The second metal may be, for example, any one selected from among alkali metal elements and alkaline earth metal elements. The second metal may be contained in the metal compound. Specifically, the metal compound may be pretreated with a metal salt of the second metal, as will be described below. When the metal compound contains a second metal, the catalyst performance can be enhanced.

As the second metal, specifically, an alkali metal element or an alkaline earth metal element may be pretreated and then added to the metal compound. As will be described below, the pretreatment method can be performed by adding a metal salt to the metal compound and then performing a heat treatment.

Specific examples of second metals include lithium, beryllium, sodium, potassium, magnesium, calcium, and barium, and lithium, magnesium, and sodium are preferable.

The second metals may be used alone or two or more thereof may be used in combination.

### (Method for producing second catalyst)

Next, a method for producing a second catalyst will be described. The second catalyst can be obtained by mixing a metal precursor and a metal compound and heat-treating the mixture containing the metal precursor and the metal compound (hereinafter referred to as a "catalyst raw material mixture").

The metal precursor is a compound that is converted into the above catalyst active species by the heat treatment. Therefore, the metal precursor is a precursor containing a metal element selected from among the above elements of Groups 8 to 11, and preferable metal elements are as described above. The metal elements used in the metal precursor may be used alone or two or more thereof may be used in combination.

In addition, when two or more metal elements are used in combination, it is preferable to use a combination of two or more precursors having a metal element selected from among the above elements of Groups 8 to 11 or a combination of a precursor a having metal element selected from among the elements of Groups 8 to 11 and a precursor having a metal element (for example, a metal element of the fourth period) other than Groups 8 to 11.

Here, when two or more metal precursors are used in combination, the second catalyst may be obtained by obtained by mixing two or more metal precursors and a metal compound, and performing a heat treatment. Therefore, the catalyst raw material mixture may contain two or more metal precursors.

The metal precursor preferably contains metal ions. In addition, the metal precursor may be used, for example, in the form of a metal salt. Examples of metal salts include metal nitrates, metal sulfates, metal chlorides, metal bromides, metal iodides, and metal acetates, and among these, metal chlorides and metal nitrates are preferable, and metal chlorides are more preferable in consideration of enabling to form appropriate active particles. Specific examples of metal nitrates include cobalt nitrate (Co(NO₃)₂), nickel nitrate (Ni(NO₃)₂), copper nitrate (Cu(NO₃)₂), rhodium nitrate (Rh(NO₃)₃), palladium nitrate (Pd(NO₃)₂), silver nitrate (AgNO₃), iridium nitrate (Ir(NO₃)₄), platinum nitrate (Pt(NO₃)₄), gold nitrate (AuNO₃), ruthenium nitrate (Ru(NO₃)₃), iron nitrate (Fe(NO₃)₃), manganese nitrate (Mn(NO₃)₂), zinc nitrate (Zn(NO₃)₂), chromium nitrate (Cr(NO₃)₃), and tin nitrate (Sn(NO₃)₄).

In addition, specific examples of metal chlorides include PdCl₂, RuCl₃, IrCl₃, PtCl₄, and AuCl₃. In addition, HAuCl₄ may be used. Among these, PdCl₂ and HAuCl₄ are preferable.

The metal salts may be used alone or two or more thereof may be used in combination.

The metal compound to be blended to the catalyst raw material mixture is as described above. In addition, the blend ratio of the metal compound and the metal precursor in the catalyst raw material mixture may be adjusted so that the metal amount of the metal elements constituting the active catalyst species relative to the metal compound is as described above.

In addition, as described above, the metal compound blended to the catalyst raw material mixture may be pretreated with a metal salt containing the second metal. Examples of metal salts containing the second metal include metal nitrates, metal sulfates, metal chlorides, metal bromides, metal iodides, and metal acetates, and among these, metal nitrate and metal chloride are preferable. Specific examples of metal nitrates include lithium nitrate (LiNO₃), beryllium nitrate (Be(NO₃)₂), sodium nitrate (NaNO₃), magnesium nitrate (Mg(NO₃)₂), potassium nitrate (KNO₃), calcium nitrate (Ca(NO₃)₂), and barium nitrate (Ba(NO₃)₂). Examples of metal chlorides include lithium chloride (LiCl), sodium chloride (NaCl), and magnesium chloride (MgCl₂). The metal salts containing the second metal may be used alone or two or more thereof may be used in combination. The pretreatment may be performed by adding a metal salt containing the second metal to a metal compound, mixing them, and heat-treating the mixture.

The heat treatment temperature in the pretreatment is preferably 100°C or higher and 1,000°C or lower in consideration of appropriately adhering the metal salt to the metal compound. The heat treatment temperature is more preferably 400°C or higher and 1,000°C or lower and still more preferably 500°C or higher and 900°C or lower. The time for which the heat treatment is performed at the above temperature is not particularly limited, and is, for example, 0.25 hours or longer and 10 hours or shorter, preferably 0.5 hours or longer and 8 hours or shorter, and more preferably 1 hour or longer and 5 hours or shorter.

The temperature at which the above catalyst raw material mixture is heat-treated is preferably 150°C or higher and 1,000°C or lower. When the heat treatment temperature is within the above range, it is possible to appropriately form catalyst active species from metal precursors while minimizing the production of unnecessary by-products. In addition, the catalyst active species can be appropriately supported on the metal compound. In addition, migration of catalyst active species can be prevented, the particle size of catalyst active species can be reduced, and it becomes easier to increase the surface area of the second catalyst.

In view of the above perspectives, the heat treatment temperature is preferably 180°C or higher and 1,000°C or lower, and more preferably 190°C or higher and 500°C or lower.

The heat treatment time is not particularly limited, and is, for example, 0.25 hours or longer and 10 hours or shorter, preferably 0.5 hours or longer and 8 hours or shorter, and more preferably 1 hour or longer and 5 hours or shorter.

The heat treatment may be performed in air, in an inert gas atmosphere such as argon or nitrogen gas, or in a reducing gas atmosphere such as hydrogen or carbon monoxide.

In addition, a reduction treatment may be performed appropriately after the heat treatment, and examples of reduction treatments include a method of performing a reduction treatment using a reducing gas such as hydrogen or carbon monoxide and a method of performing a wet reduction treatment using a reducing compound such as NaBH₄. When a reduction treatment is performed using a reducing gas such as hydrogen or carbon monoxide, it is better to perform the treatment at a high temperature. Specifically, the temperature in this case is preferably 100°C or higher and 300°C or lower, and more preferably 130°C or higher and lower than 200°C. When this reduction treatment is performed, it becomes easier to increase the proportion of zero-valent metal element (that is, metal itself) in the catalyst active species, and it becomes easier to enhance the catalytic activity.

The catalyst raw material mixture to be heat-treated is preferably in the form of powder or particles. When the second catalyst mixture is in the form of powder or particles, the catalyst obtained by heat treatment can also be in the form of powder or particles.

The catalyst raw material mixture may be obtained, for example, by preparing a diluted solution of the catalyst raw material mixture and drying the diluted solution. In the diluted solution of the catalyst raw material mixture, the components (metal precursors and metal compounds) are preferably dispersed or dissolved in the dilution solvent. When the components are dispersed or dissolved in the dilution solvent, it is possible to obtain a catalyst raw material mixture in which the components are uniformly mixed.

As the dilution solvent used to dilute the catalyst raw material mixture, water and an organic solvent can be used, and water is preferable. In addition, as the dilution solvent, a mixed solvent of an organic solvent and water may be used. In addition, acid components such as hydrochloric acid, nitric acid, sulfuric acid, acetic acid, citric acid, and lauric acid, and base components such as ammonia may be appropriately added to the dilution solvent. The concentration of the diluted solution of the catalyst raw material mixture is not particularly limited, and the amount of the metal precursor, is for example, 0.01 to 25 g/L, and preferably 0.1 to 5 g/L.

The second catalyst 64 may be contained in the reaction chamber 71. In the reaction chamber 71, the second catalyst 64 may be dispersed in the electrolytic solution 63 or may be loaded in the form of a layer. When the second catalyst 64 is loaded in the form of a layer, it may be loaded on a support such as a tray or mesh, but a support may not be provided.

In addition, when the second catalyst 64 is dispersed inside the reaction chamber 71, it may be dispersed by flowing it by convection F or the like, but it may be dispersed by a dispersion means other than convection F. For example, dispersion may be performed by bubbling with a gas supplied from the cathode compartment 60Y or by bubbling with a gas other than the gas supplied from the cathode compartment 60Y, or a stirring device such as a stirring blade may be provided inside the anode compartment 60X for stirring.

The content of the second catalyst in the reaction chamber 71 is not particularly limited, and may be, for example, about 0.1 to 200 g/L, and preferably about 1 to 100 g/L. The content here is the amount of the second catalyst per 1 L of the electrolytic solution (that is, reaction solution) contained in the reaction chamber 71.

### [Electrolytic solution]

In the present embodiment, as described above, the anode compartment 60X and the reaction chamber 71 are filled with the electrolytic solution 63. The electrolytic solution 63 contains a redox species. The redox species in the electrolytic solution 63 may be an electrolyte. The redox species may be dissolved in the reactant or in a mixture of the reactant and a solvent to be described below.

### (Redox species (redox substance))

As the redox species, for example, those having a molecule or ion size smaller than that of a reactant such as an alcohol compound to be described below and having redox activity can be used. Specific examples of electrolytes serving as redox species include halide salts, organic redox, and complex redox. Among these, halide salts are preferable in order to increase the Faraday efficiency and productivity.

In the present embodiment, when the electrolytic solution contains a redox species as an electrolyte, a redox mediator (oxidized product such as a halogen) is produced at the anode 61, and the redox mediator allows a carbonyl compound to be produced more efficiently from carbon monoxide and a reactant in the presence of the second catalyst 64. In addition, when the redox mediator comes into contact with the first catalyst 65, it inhibits a reduction reaction of carbon dioxide; however, in the present embodiment, when the electrolytic solution 63 is caused to flow by convection F, the redox mediator is less likely to come into contact with the first catalyst 65, and is less likely to inhibit the reduction reaction of carbon dioxide.

Examples of halide salts include metal halides. Specific examples of metal halides include lithium halides such as lithium chloride, lithium bromide, and lithium iodide, sodium halides such as sodium chloride, sodium bromide, and sodium iodide, potassium halides such as potassium chloride, potassium bromide, and potassium iodide, and cesium halides such as cesium chloride, cesium bromide, and cesium iodide. In addition, examples of halide salts include ammonium halides such as ammonium chloride, ammonium bromide, and ammonium iodide.

In addition, examples of organic redoxes include TEMPO-based radical compounds such as 2,2,6,6-tetramethylpiperidine-1-oxyl (TEMPO) and 4-methoxy-2,2,6,6-tetramethylpiperidine-1-oxyl (MeO-TEMPO), and azaadamantane-N-oxyl (AZADO).

In addition, examples of complex redoxes include palladium-based complexes such as palladium acetylacetonate (Pd(OAc)₂), and tetrakis(triphenylphosphine)palladium (Pd(PPh₃)₄ complex), and cobalt-based complexes such as tris(2,2'-bipyridine)cobalt (Co(bpy)₃ complex), and tris[1,3-bis(4-pyridyl)propane]cobalt (Co(bpp)₃ complex).

Among the above examples, in order to increase the selectivity for carbonyl compounds, the redox species is preferably a metal halide, and among these, metal chloride salts and metal bromide salts are more preferable, and metal bromide salts are still more preferable.

Therefore, the electrolytic solution contains, as redox ions, halogen ions such as chlorine ions and bromine ions, and particularly preferably contains bromine ions.

Preferable specific examples of metal chloride salts include lithium chloride, potassium chloride, and sodium chloride, and among these, sodium chloride is preferable in consideration of availability. Preferable specific examples of metal bromide salts include lithium bromide, potassium bromide, and sodium bromide, and among these, in order to increase the selectivity for carbonyl compounds, lithium chloride and lithium bromide are preferable, and lithium bromide is particularly preferable. The redox species may be used alone or two or more thereof may be used in combination.

The concentration of the redox species in the electrolytic solution is not particularly limited, and may be adjusted to a level at which the synthesis of an oxygen-containing organic substance such as a carbonyl compound proceeds appropriately. A specific concentration of the redox species is, for example, 0.001 M or more and 5.0 M or less, preferably 0.01 M or more and 1.0 M or less, and more preferably 0.05 M or more and 0.5 M or less.

### (Reactant)

The reactant is a compound that serves as a raw material for a carbonyl compound. As the reactant, in the present embodiment, an alcohol compound may be used. When an alcohol compound is used as a reactant, it is possible to easily produce either or both of an organic carbonate and an organic oxalate from carbon monoxide in the presence of an oxidized product of a redox species and a second catalyst.

### (Alcohol compound)

The alcohol compound is a reactant that reacts with carbon monoxide in the electrochemical system (in the present embodiment, the reaction chamber 71) to produce either or both of an organic carbonate and an organic oxalate.

The alcohol compound may be a solid, liquid or gas in an environment in which an electrochemical reaction is performed in the electrochemical system, and is preferably a liquid. The reaction chamber 71, the anode compartment 60X and the like can be easily filled with the alcohol compound that is liquid even without using a solvent to be described below. The details of the alcohol compound and the product are the same as those in the first embodiment, and the description thereof will be omitted.

### (Solvent)

If the reactant is a solid or gas or if it is necessary to enhance the solubility of the redox species or in case of the others, the electrolytic solution 63 may further contain a solvent. In this case, the reaction chamber 71 and the anode compartment 60X may be filled with the reactant as a solution mixed with a solvent. Of course, even if the reactant is a liquid, they may be filled with the reactant as a solution mixed with a solvent.

As the solvent, solvents generally used in the electrochemical reaction can be appropriately selected, and for example, the solvents listed above as reaction solvents can be appropriately selected, designated and used. The solvents may be used alone or two or more thereof may be used in combination.

Here, in the electrolytic solution 63, as described above, a redox species is used as the electrolyte, but the electrolyte may include, in addition to the redox species, electrolytes other than the redox species. Examples of electrolytes other than the redox species include perchlorates such as sodium perchlorate (NaClO₄), zinc perchlorate, barium perchlorate, lithium perchlorate, and ammonium perchlorate, and sodium sulfate, potassium sulfate, and ammonium sulfate. The electrolytes other than these redox species may be used alone or two or more thereof may be used in combination.

### [Anode]

In the anode compartment 60X, as described above, at the anode 61, the redox species is oxidized, and an oxidized product (for example, a redox mediator such as a halogen), which is an active intermediate species, is produced. In the anode compartment 60X, the anode 61 may be disposed at a position where it comes into contact with the electrolytic solution 63 with which the anode compartment 60X is filled. Here, in the electrochemical cell 60 (for example, an anode compartment 61), a reference electrode or the like may be provided.

Here, the anode 61 preferably does not contain a catalyst. In order to incorporate the catalyst into the anode 61, a process of supporting the catalyst on the electrode by applying a catalyst-containing coating solution to an electrode substrate or immersing an electrode substrate in a catalyst-containing immersion solution is necessary. However, when the anode does not contain the catalyst, such a process becomes unnecessary. Therefore, it is possible to synthesize a carbonyl compound with a simple configuration. In addition, at the anode 61, an oxidized product can be produced even if no catalyst is contained.

Here, the catalyst not contained in the anode 61 is a carbonyl compound synthesis catalyst such as a second catalyst that catalyzes an electrochemical reaction in which either or both of an organic carbonate and an organic oxalate are synthesized from carbon monoxide. Therefore, it is preferable that a carbonyl compound synthesis catalyst such as a second catalyst be not supported on the anode 61.

However, for example, as in an eleventh embodiment to be described below, when the anode 61 comes into contact with an electrolytic solution containing a catalyst (second catalyst) (catalyst-containing electrolytic solution), the catalyst contained in the catalyst-containing electrolytic solution may adhere to the anode 61. However, the mode in which the catalyst contained in the catalyst-containing electrolytic solution adheres to the anode 61 is not included in the mode in which the "anode (electrode) contains a catalyst" in this specification.

The anode 61 is constituted of, for example, an electrode substrate. The details of the electrode substrate are as described above in the first embodiment, but in the present embodiment, a carbon substrate is preferable, and porous carbon is more preferable. Specific examples of porous carbon include carbon nonwoven fabrics.

Here, Fig. 9 shows a configuration in which the anode 61 and the cathode 62 are disposed at positions away from the isolating membrane 75, but the anode 61 and the cathode 62 may be disposed at positions in contact with the isolating membrane 75. Specifically, the anode 61 may form a laminate together with the isolating membrane 75 constituted of an ion exchange membrane to be described below or the like, and a first electrode (cathode). The laminate may be a laminate including the anode 61, the isolating membrane 75 such as an ion exchange membrane, and the cathode 62 in that order. The laminate may be a membrane-electrode assembly in which the anode 61 and the cathode 62 are bonded with, for example, an ion exchange membrane therebetween.

### [Isolating membrane]

The isolating membrane 75 may isolate carbon monoxide generated by the first catalyst 65 (at the cathode 62) from an oxidized product generated at the anode 61. The isolating membrane 75 may be any membrane that allows ions to pass through but does not allow the electrolytic solution 63, carbon monoxide, and an oxidized product to pass through, and specifically, an ion exchange membrane is preferable. As the ion exchange membrane, a solid membrane is used, and examples thereof include a cation exchange membrane that allows cations such as protons to pass through and an anion exchange membrane that allows anions such as hydroxide ions to pass through, and in consideration of ion conductivity and cost, a cation exchange membrane is preferable. The details of the cation exchange membrane and the anion exchange membrane are as described above.

As described above, the electrochemical system 70 according to the ninth embodiment produces a carbonyl compound from carbon monoxide using a redox species. By using the second catalyst 64 for producing a carbonyl compound, which contains a catalyst active species and a metal compound that supports the catalyst active species, it is possible to synthesize a carbonyl compound with high Faraday efficiency. In addition, since the electrolytic solution 63 circulates between the reaction chamber 71 for producing a carbonyl compound and the anode compartment 60X in which the redox species is oxidized, it becomes easier to further enhance the production rate of carbonyl compounds.

### <Tenth embodiment>

Next, an electrochemical system according to a tenth embodiment of the present invention will be described. Fig. 10 shows an electrochemical system 70A according to the tenth embodiment. In the ninth embodiment, the redox species is oxidized to an oxidized product according to a liquid-phase reaction in the anode compartment 60X, and a solution containing the oxidized redox species is supplied to the reaction chamber 71 through the connection path 68A. However, in the tenth embodiment, a gas containing the oxidized redox species in the anode compartment 60X is supplied to the reaction chamber 71 through the connection path 68A.

In addition, in the ninth embodiment, in addition to the connection path 68A, the connection path 68B is also provided, the electrolytic solution is circulated between the anode compartment 60X and the reaction chamber 71, but the connection path 68B is omitted, and the electrolytic solution is not circulated between the anode compartment 60X and the reaction chamber 71. Hereinafter, the tenth embodiment will be described regarding the differences from the ninth embodiment.

In the tenth embodiment, the anode compartment 60X is filled with an electrolytic solution 63A. The electrolytic solution 63A is an electrolytic solution containing a redox species and a solvent, and the redox species may be dissolved in the solvent as an electrolyte.

The details of the redox species are as described above. However, among the redox species, halide salts are preferable because they easily supply an oxidized product as a gas to the reaction chamber 71, and among these, metal chloride salts are preferable. The details and preferable specific examples of metal chloride salts are as described in the ninth embodiment. In the present embodiment, a metal chloride salt is used as the redox species, and thus the produced oxidized product can be chlorine as shown in Fig. 10. Since chlorine is a gas at room temperature (23°C), it is easily supplied as a gas from the anode compartment 60X to the reaction chamber 71. However, as long as it can be supplied as a gas, it does not need to be a metal chloride salt, and other redox species can also be used. For example, when the temperature of the electrolytic solution 63A in the electrochemical cell 60 increases, bromine and the like can be made into a gas, and for example, a metal bromide salt can also be suitably used. The concentration of the redox species in the electrolytic solution 63A is as described in the ninth embodiment.

As described above, the electrolytic solution 63A in the anode compartment 60X may be any solution containing a redox species in a solvent. Specific examples of solvents are as described in the ninth embodiment, but alcohol compounds listed as reactants can be used as solvents.

In addition, the reaction chamber 71 may be filled with a reaction solution 63B. The reaction solution 63B is not particularly limited as long as it contains a reactant, and may be composed of a reactant or may contain a solvent in addition to the reactant. The details of the reactant and the solvent are as described in the ninth embodiment.

However, in the reaction chamber 71, no electrochemical reaction is performed. Therefore, the reaction solution 63B does not need to contain an electrolyte. Therefore, the reaction solution 63B in the reaction chamber 71 may contain an oxidized product of redox species supplied from the anode compartment 60X. However, the reaction chamber 71 does not need to contain an electrolyte such as a redox species other than those supplied from the anode compartment 60X.

In the reaction chamber 71, in addition to the supply port 71A, a supply port 71C may be provided, and for example, a reactant or the like may be supplied from the supply port 71C to the reaction chamber 71.

In the above tenth embodiment, with convection F flow, through the connection path 68A, a gas containing carbon monoxide is supplied from the cathode compartment 60Y and a gas containing an oxidized product of a redox species is supplied from the anode compartment 60X to the reaction chamber 71. In the reaction chamber 71, due to the action of the second catalyst 64, a carbonyl compound is produced from the reactant, carbon monoxide, and the oxidized product of redox species contained in an electrolytic solution 63B in the reaction chamber 71.

In the present embodiment, since the second catalyst 64 containing a catalyst active species and a metal compound that supports the catalyst active species is used, it is possible to synthesize a carbonyl compound in the reaction chamber 71 with high Faraday efficiency. In addition, in the present embodiment, the electrolytic solution (reaction solution) is not circulated, but raw materials (carbon monoxide and oxidized product of redox species) for producing a carbonyl compound are supplied as gases to the reaction chamber 71. Therefore, even if the reaction solution 63B with which the reaction chamber 71 is filled is not discharged, a carbonyl compound can be continuously synthesized over a long period with almost no increase in the volume of the reaction solution 63B. Therefore, in the present embodiment, in the reaction chamber 71, it is possible to further enhance the production rate of carbonyl compounds.

Here, among gases (carbon monoxide and an oxidized product of redox species) supplied from the electrochemical cell 60 to the reaction chamber 71, any excess gas not used in the synthesis of carbonyl compounds may be appropriately discharged from the exhaust port 71B.

In addition, in the present embodiment, carbon dioxide is continuously supplied to the cathode compartment 60Y, and as a result, carbon monoxide and an oxidized product of redox species are also continuously supplied to the reaction chamber 71. Therefore, the produced carbonyl compound accumulates in the reaction chamber 71, and the content of the carbonyl compound increases. In addition, since the oxidized product of redox species is consumed in the carbonyl compound production reaction and converted into a reduced species, the content of the reduced species also increases similarly. Therefore, when the content of the carbonyl compound or the content of the reduced species reaches a certain level or more, the reaction solution 63B may be discharged from the reaction chamber 71.

However, in the tenth embodiment, as described above, the reaction does not need to be performed in a batch process, but may be performed in a continuous process. In the case of a continuous process, for example, a reactant or a mixture of a reactant and a solvent may be continuously supplied from the supply port 71C. The reactant supplied from the supply port 71C may be reacted with carbon monoxide while flowing with convection F to the exhaust port 71B, converted into a carbonyl compound, and discharged from the exhaust port 71B. In this case, the carbonyl compound may be discharged together with the unreacted reactant and redox species (unreacted oxidized products or reduced species after the reaction).

### <Eleventh embodiment>

Next, an electrochemical system according to an eleventh embodiment of the present invention will be described. In the above ninth and tenth embodiments, the reaction chamber 71 separated from the electrochemical cell 60 is provided, and the reaction for producing a carbonyl compound is performed in the reaction chamber 71. However, in an electrochemical system 20B according to the eleventh embodiment, a reaction chamber 21 is not provided, and similarly to the electrochemical cell of the fourth embodiment (Fig. 4), the reaction for producing a carbonyl compound is performed in the electrochemical cell.

Hereinafter, the eleventh embodiment will be described regarding the differences from the ninth embodiment. Here, in the description, the reference symbols in Fig. 9 will be referred to.

In the eleventh embodiment, the anode compartment 60X is filled with the electrolytic solution 63 as in the ninth embodiment. The mode of the electrolytic solution 63 is the same as in the ninth embodiment, and thus the description thereof will be omitted. However, in the eleventh embodiment, the electrolytic solution 63 further contains the second catalyst 64 and forms a catalyst-containing electrolytic solution.

The second catalyst 64 in the anode compartment 60X may be dispersed in the electrolytic solution 63. When the second catalyst 64 is dispersed inside the anode compartment 60X, it may be dispersed by flowing it by convection F or the like, but it may be dispersed by a dispersion means other than convection F. For example, dispersion may be performed by bubbling with a gas supplied from the cathode compartment 60Y or by bubbling with a gas other than the gas supplied from the cathode compartment 60Y, or a stirring device such as a stirring blade may be provided inside the anode compartment 60X for stirring.

The content of the second catalyst 64 in the anode compartment 60X is not particularly limited, and may be, for example, about 0.1 to 200 g/L, and preferably about 1 to 100 g/L. The content here is the amount of the second catalyst 64 per 1 L of the electrolytic solution (that is, reaction solution) contained in the anode compartment 60X.

Here, in the electric cell 60, a third supply port (not shown) may be provided in the anode compartment 60X in addition to the supply ports 66X and 66Y, and for example, a reactant or the like may be supplied to the anode compartment 60X through the third supply port.

In the eleventh embodiment, the supply port 66X of the anode compartment 60X and the exhaust port 67Y of the cathode compartment 60Y are connected through a connection path (not shown). Therefore, the gas containing carbon monoxide produced in the cathode compartment 60Y is supplied to the anode compartment 60X through a connection path (not shown). In addition, in the anode compartment 60X, at the anode 61, the redox species is oxidized to form an oxidized product. Therefore, in the anode compartment 60X, a carbonyl compound is produced from carbon monoxide supplied from the cathode compartment 60Y, the oxidized product, and the reactant contained in the electrolytic solution 63, as in the ninth embodiment.

In the present embodiment, when the supply of carbon monoxide to the anode compartment 60X (that is, the supply of carbon dioxide to the cathode compartment 60Y) is continuous, the produced carbonyl compound accumulates in the anode compartment 60X, and the content of the carbonyl compound increases. Therefore, when the content of the carbonyl compound reaches a certain level or more, the electrolytic solution (reaction solution) 63 may be discharged, for example, from the exhaust port 67X.

However, in the eleventh embodiment, the reaction does not need to be performed in a batch process, but may be performed in a continuous process. In the case of a continuous process, a reactant or a mixture of a reactant and a solvent may be continuously supplied from the supply port (for example, a supply port provided separately from the supply port 66X). In the anode compartment 60X, the reactant supplied from the supply port may be reacted with carbon monoxide while flowing with convection F to the exhaust port 67X, converted into a carbonyl compound, and discharged from the exhaust port 67X. In this case, the carbonyl compound may be discharged together with the unreacted reactant and redox species (unreacted oxidized products or reduced species after the reaction).

In the eleventh embodiment, a carbonyl compound is produced from carbon monoxide using a redox species. By using the second catalyst 64 for producing a carbonyl compound, which contains a catalyst active species and a metal compound that supports the catalyst active species, it is possible to efficiency synthesize a carbonyl compound with high Faraday. In addition, in the present embodiment, there is no need to provide a separate reaction chamber other than the electrochemical cell 60, and thus the device structure of the electrochemical system can be simplified. In addition, since the second catalyst 64 does not significantly inhibit oxidation of redox species, a decrease in reaction efficiency of the carbonyl compound can be prevented, even performing oxidation of redox species and production of carbonyl compounds in the same reaction chamber (the anode compartment 60X).

### <Twelfth embodiment>

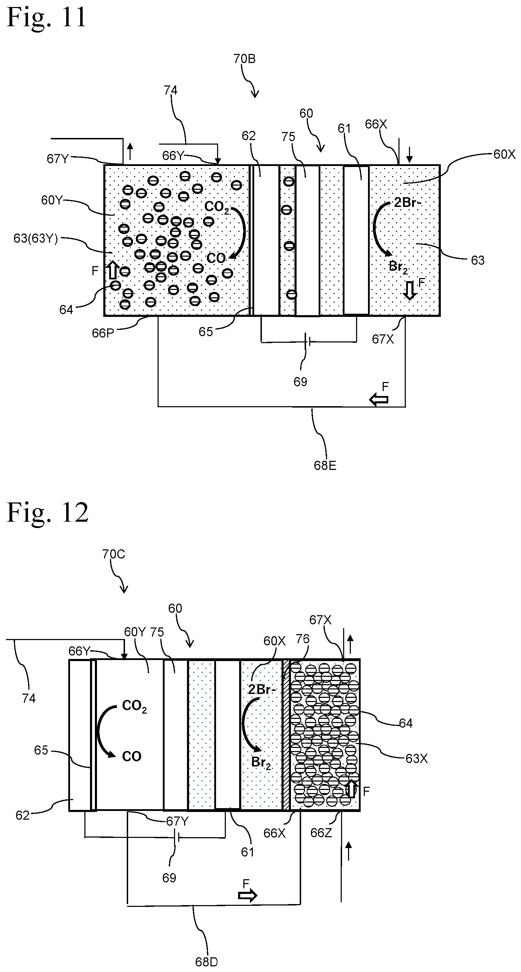

Fig. 11 is a schematic view showing an electrochemical system 70B according to a twelfth embodiment. In the twelfth embodiment, as in the eleventh embodiment, the reaction chamber 71 is not provided, and the reaction for producing a carbonyl compound is performed in the electrochemical cell 60, but the reaction for producing a carbonyl compound is performed in the cathode compartment 60Y. Hereinafter, the twelfth embodiment will be described regarding differences from the ninth embodiment.

In the twelfth embodiment, the anode compartment 60X is filled with the electrolytic solution 63. In addition, the cathode compartment 60Y is also filled with the electrolytic solution 63. The electrolytic solution 63 may contain a redox species and a reactant. In addition, the electrolytic solution 63 may further contain a solvent. The details of the electrolytic solution 63 are the same as those of the electrolytic solution 63 in the ninth embodiment, and the description thereof will be omitted. However, in the cathode compartment 60Y, the electrolytic solution 63 further contains the second catalyst 64 and forms a catalyst-containing electrolytic solution 63Y. In a catalyst-containing electrolytic solution 63Y, the second catalyst 64 may be dispersed by a dispersion means such as bubbling, flowing, or stirring, similar to the above catalyst-containing electrolytic solution.

In the present embodiment, in the anode compartment 60X, as in the ninth embodiment, the supply port 66X and the exhaust port 67X are provided. On the other hand, in the cathode compartment 60Y, a supply port 66P is provided, in addition to the supply port 66Y and the exhaust port 67Y. The supply port 66P of the cathode compartment 60Y and the exhaust port 67X of the anode compartment 60X are connected through a connection path 68E. In addition, as in the ninth embodiment, the supply port 66Y is connected to a carbon dioxide source through the supply path 74, and carbon dioxide is supplied from the supply port 66Y.

In addition, the cathode 62 contains the first catalyst 65, but the anode 61 does not need to contain a catalyst.

In the electrochemical system 70B having the above configuration, in the anode compartment 60X, as in the ninth embodiment, the redox species is oxidized at the anode 61 to produce an oxidized product. The electrolytic solution 63 containing an oxidized product is supplied from the anode compartment 60X to the cathode compartment 60Y through the connection path 68E with convection F. In addition, carbon dioxide supplied from the supply port 66Y through the supply path 74 is reduced to carbon monoxide at the cathode 62.

Thus, in the cathode compartment 60Y, a carbonyl compound is synthesized from carbon monoxide produced at the cathode 62, the reactant contained in the electrolytic solution 63, and the oxidized product of redox species supplied from the anode compartment 60X due to the action of the second catalyst 64.

In the present embodiment, for example, a reactant (or a mixture of a reactant and a solvent) is continuously supplied from the supply port 66X of the anode compartment 60X, and thus convection F is formed, and an oxidized product of redox species is continuously supplied to the cathode compartment 60Y. Additionally, carbon dioxide is continuously supplied from the supply port 66Y of the cathode compartment 60Y so that carbon monoxide is continuously produced, and as a result, a carbonyl compound is continuously produced in the cathode compartment 60Y. Here, an electrolytic solution 13 flows with convection F from the supply port 66P to the exhaust port 67Y while the reactant is converted into a carbonyl compound due to the action of the second catalyst 64, and after a certain proportion of the reactant has been converted into a carbonyl compound, the electrolytic solution may be discharged to the outside from an exhaust port 67Y. As described above, in the present embodiment, the reaction may be performed in a continuous process or the reaction may be performed in a batch process.

### <Modified example>

The electrochemical systems in the embodiments (the ninth to twelfth embodiments) according to the second aspect described above are only examples, and the present invention is not limited to the systems described above, and may be appropriately modified without departing from the spirit and scope of the present invention.

For example, in the eleventh embodiment, the form in which, in the anode compartment 60X, the second catalyst 64 is dispersed in the electrolytic solution 63 is exemplified, but a layered form as shown in Fig. 9, or other forms may be used.

In addition, for example, as in the electrochemical system 70C shown in Fig. 12, in the anode compartment 60X, a isolating membrane 76 (second isolating membrane) is additionally provided, and the anode compartment 60X may be divided by the isolating membrane 76. The configuration of the electrochemical system 70C according to this modified example can be said to be a form in which a second electrolysis section and a first reaction section 63X are connected with the isolating membrane 76 therebetween.

Specifically, as shown in Fig. 12, it may be isolated into a first region (second electrolysis section) where the anode 61 is provided and a second region (the first reaction section 63X) where no anode is provided, and the second catalyst 64 may be loaded into the second region where no anode is provided. The isolating membrane 76 may be any membrane that allows the electrolytic solution 63 to pass through and does not allow the second catalyst 14 to pass through, and may be, for example, a mesh filter. With such a configuration, the region where the redox species is oxidized and the region where the carbonyl compound is produced can be isolated, and thus the decrease of side reactions can be expected.

Similarly, in the twelfth embodiment, the second catalyst 64 may be provided in a layered form in the cathode compartment 60Y as shown in Fig. 9, or in other forms. In addition, similar to the configuration shown in Fig. 12, the cathode compartment 60Y may be divided by a isolating membrane into a first region where the cathode 62 is provided and a second region where no cathode is provided, and t the second catalyst 64 may be loaded into the second region where no cathode is provided. That is, the first electrolysis section and the first reaction section may be connected with an isolating membrane therebetween. In addition, for example, the reactant may be supplied to the reaction section 63X from a supply port 66Z, reacted with carbon monoxide while flowing with convection F to the exhaust port 67X, converted into a carbonyl compound, and discharged from the exhaust port 67X.

In addition, in the ninth to eleventh embodiments, in the cathode compartment 60Y, carbon dioxide is converted into carbon monoxide according to a gas-phase reaction, but it may be converted into carbon monoxide according to a liquid-phase reaction. In this case, the cathode compartment 60Y may also be filled with an electrolytic solution. That is, carbon dioxide is at least partially dissolved in the electrolytic solution, and comes into contact with the cathode together with the electrolytic solution, and may be converted into carbon monoxide.

In this case, the produced carbon monoxide may be supplied as a gas to the anode compartment 60X or the reaction chamber 71, or for example, it may be at least partially dissolved in the electrolytic solution and supplied to the anode compartment 60X or the reaction chamber 71 together with the electrolytic solution.

In addition, in the above embodiments (the ninth to twelfth embodiments) a mode in which the electrochemical cell 60 is isolated by the isolating membrane 75 into the anode compartment 60X and the cathode compartment 60Y is shown, but in the present invention, the isolating membrane 75 that isolates the anode compartment 60X from the cathode compartment 60Y may be omitted. In this case, for example, in the ninth and tenth embodiments, the electrochemical cell is filled with the electrolytic solution, and both the production of carbon monoxide and the oxidation of redox species may be performed in the liquid-phase reaction.

The above embodiments (the ninth to twelfth embodiments) have been described with reference to an example in which carbon dioxide is reduced to carbon monoxide in the cathode compartment 60Y, and a carbonyl compound is synthesized using carbon monoxide produced in the cathode compartment 60Y. However, in the embodiments, it is not necessarily required to produce carbon monoxide in the cathode compartment 60Y.

In this case, for example, reducible material other than carbon dioxide is supplied to the cathode compartment 60Y, and the reducible material may be appropriately reduced at the cathode. The reducible material is not particularly limited, and examples thereof include water, CO, N₂ and protons. In this case, the cathode compartment 60Y may or may not be filled with an electrolytic solution.

In addition, the cathode 62 is not particularly limited as long as it contains a reduction catalyst that catalyzes reduction, and for example, it may contain a reduction catalyst in the electrode substrate.

When carbon monoxide is not produced in the cathode compartment 60Y, for example, in the ninth and tenth embodiments, carbon monoxide may be supplied to the reaction chamber 61 through the supply port 71A from a carbon monoxide supply source (not shown), and in the eleventh embodiment, carbon monoxide may be supplied to the anode compartment 60X through the supply port 66X. In this case, in the ninth to eleventh embodiments, except that carbon monoxide is supplied from a carbon monoxide supply source in place of being produced in the cathode compartment 60Y, the other features are the same, and thus the description thereof will be omitted.

In addition, the second catalyst described in the second aspect may also be used as the second catalyst in other aspects, and may be used as the second catalyst in the embodiments of the first aspect described above. In addition, it may also be used as the second catalyst of embodiments of a third aspect to be described below.

In addition, in the ninth to twelfth embodiments, the second catalyst does not need to be the second catalyst described in the second aspect, and the second catalyst used in the first aspect may be used.

Hereinafter, an electrochemical reaction device and a method for producing a carbonyl compound using an electrochemical reaction device according to a third aspect of the present invention will be described using embodiments with reference to the drawings. Here, in the following description, elements having the same configuration will be denoted with the same reference numerals. In addition, the electrochemical reaction device according to the third aspect may also be referred to as an electrochemical system or a carbon dioxide reduction device.

### <Thirteenth embodiment>

An electrochemical reaction device 90 according to a thirteenth embodiment of the present invention is constituted of an electrochemical cell 80. The electrochemical cell 80 includes a cathode 81, an anode 82, and an electrolytic solution 83. The electrolytic solution 83 contains a reactant and an electrolyte, and the electrochemical cell 80 is filled with the electrolytic solution 83. The electrolyte may be any substance that can serve as a redox species, and is preferably a halide salt. The electrolyte will be described in detail below.

The electrochemical cell 80 according to the thirteenth embodiment contains a first catalyst 84 that allows carbon dioxide to be reduced to carbon monoxide and a second catalyst 85 that allows a carbonyl compound to be synthesized from carbon monoxide and a reactant. In the electrochemical cell 80, the first catalyst 84 is contained in the cathode 81.

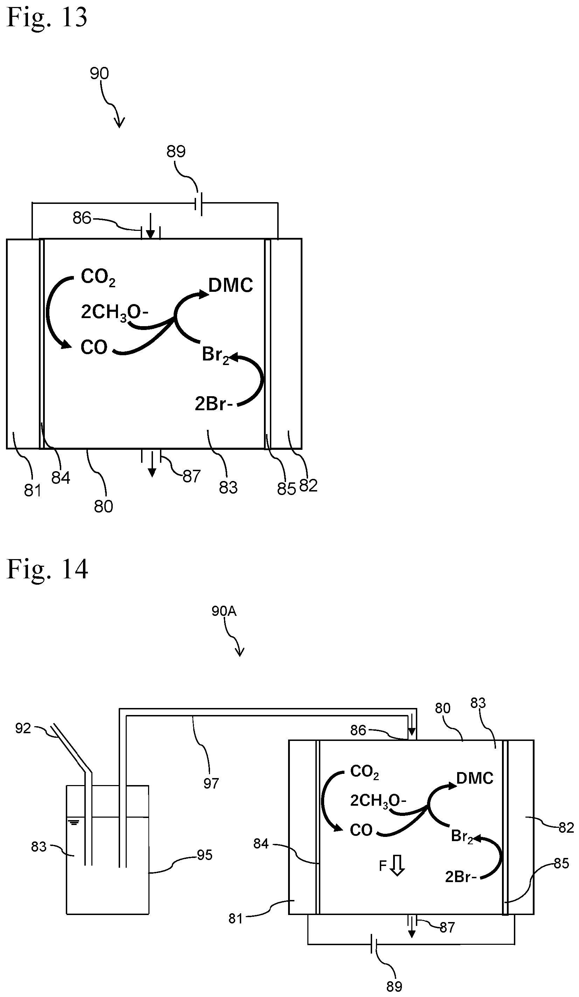

The electrochemical cell 80 according to the present embodiment may be a one-compartment type electrochemical cell (first electrolysis section). That is, the electrochemical cell 80 is not demarcated into an anode compartment and a cathode compartment by an isolating layer such as an ion exchange membrane, but is constituted of a single electrolysis compartment, and the electrolysis compartment in which both the cathode 81 and the anode 82 are provided is filled with the electrolytic solution 83. As shown in Fig. 13, the cathode 81 and the anode 82 may be disposed in any manner as long as they are in contact with the electrolytic solution 83. In addition, in the present embodiment, the second catalyst 85 is contained in the anode 82.

A voltage is applied between the cathode 81 and the anode 82 by a power source 89. When a voltage is applied, carbon dioxide supplied into the electrochemical cell 80 is reduced by the first catalyst at the cathode 81, and carbon monoxide is produced. The produced carbon monoxide may be diffused in the electrolytic solution 83. On the other hand, when a voltage is applied, at the anode 82, the redox species (redox substance) constituted of the electrolyte is converted from the reduced species (the reductant A) into an oxidized product (for example, a redox mediator, an oxidant B). Thus, the produced oxidized product and the second catalyst 85 allow a carbonyl compound to be synthesized from carbon monoxide and a reactant inside the electrolytic solution 83.

Here, when a carbonyl compound is synthesized, the oxidized product is converted into a reduced species. The converted reduced species may be converted into an oxidized product again at the anode 82. When the redox species is a halide salt, the reduced species is a halogen ion, and the oxidized product is a halogen.

Here, although not particularly limited, Fig. 13 shows an example of a reaction in which the reactant is methanol, and the electrolyte is a brominated salt. When the reactant is methanol, and the electrolyte is a brominated salt, bromide ions as the reduced species are converted into bromine as the oxidized product at the anode 82. Then, in the presence of bromine and the second catalyst, carbon monoxide and methanol (methoxide ions) are reacted to produce dimethyl carbonate (DMC).

In the electrochemical cell 80, a supply port 86 through which carbon dioxide, an electrolytic solution or the like is supplied into the electrochemical cell 80 may be provided. A supply path (not shown) may be connected to the supply port 86. The supply path is a line for supplying carbon dioxide, electrolytic solution or the like to the supply port 86, and may be constituted of a conduit or the like. Similarly, other supply paths, connection paths, discharge paths and the like to be described below may be constituted of a conduit or the like.

The electrolytic solution containing carbon dioxide may be supplied to the electrochemical cell 80 through the supply port 86, but the electrolytic solution and carbon dioxide may be supplied separately to the electrochemical cell 80. In addition, in the electrochemical cell 80, an exhaust port 87 may be provided. Carbon dioxide and the carbonyl compound produced from the reactant may be discharged through the exhaust port 87.

In the third aspect of the present invention, the electrolyte concentration in the electrolytic solution contained in the electrochemical cell 80 is 0.3 M or less, and the density of a current flowing through the electrochemical cell 80 is 20 mA/cm² or more. As described above, when both the electrolyte concentration and the current density are within predetermined ranges, it is possible to increase the selectivity when a desired product is produced with high productivity.

In the electrical reaction of an electrochemical cell, when the current density increases, the production rate is enhanced, but the selectivity cannot be increased, and as a result, additional effort is required for subsequent processes such as separation and purification, and the production cost increases. On the other hand, in the present invention, surprisingly, when the electrolyte concentration is a certain level or less, even if the current density increases, the selectivity can increase, and the production cost can be reduced.

The current density is preferably 30 mA/cm² or more, and more preferably 40 mA/cm² or more. In addition, when the current density is a certain level or less, it is possible to control the redox potential by a catalyst within an appropriate range, and enhance the selectivity for desired products, and the current density is, for example, 100 mA/cm² or less, preferably 80 mA/cm² or less, and more preferably 60 mA/cm² or less.

In order to increase the selectivity, the electrolyte concentration is preferably 0.24 M or less, and more preferably 0.14 M or less. In addition, in order to increase the amount of desired products produced, the electrolyte concentration is, for example, 0.02 M or more, preferably 0.05 M or more, and more preferably 0.08 M or more. When the electrolyte concentration is equal to or larger than the lower limit value, it is possible to prevent a voltage applied to the electrochemical cell from increasing and reduce power required to produce desired products.

The distance between the cathode 81 and the anode 82 in the electrochemical cell 80, that is, the distance between the electrodes, may be set to a certain distance or less in order to enhance productivity by achieving a high electrode density with a low voltage, and specifically, the distance is preferably 50 mm or less, more preferably 45 mm or less, and still more preferably 40 mm or less. In addition, the distance between the electrodes is not particularly limited, and is preferably 5 mm or more, more preferably 10 mm or more, and still more preferably 15 mm or more. When the distance between the electrodes is a certain level or more, it is possible to prevent the cathode and the anode from becoming electrically connected, and production of carbon monoxide and conversion of redox species into an oxidized product occur in different regions. Here, regarding the distance between the electrodes, the shortest distance between the cathode 81 and the anode 82 may be within the above range.

The halogen concentration in the electrochemical cell 80 is preferably 4.5 mM or less, more preferably 4.0 mM or less, and still more preferably 3.2 mM or less. When the halogen concentration in the electrochemical cell 80 is a certain level or less, the generation of by-products caused by halogens can be minimized and the selectivity for desired substances can be prevented from decreasing. In addition, when the halogen concentration is reduced, it is possible to prevent the electrical resistance from increasing and prevent power consumption from increasing.

Here, the halogen concentration is the concentration of the halogen contained in the electrolytic solution 83. The halogen contained in the electrolytic solution 83 may be a halogen that is supplied to the electrolytic solution 83 in advance as a raw material or may be a halogen that is generated during an electrochemical reaction in the electrochemical cell 80.

As described above, in the electrolytic solution, it is preferable to use a halide salt. When the halide salt is used, a halogen is produced as an oxidized product at the anode 82. Thus, when the halogen concentration increases over time, as described above, the selectivity for desired substances might decrease and power consumption may increase; however, when the halogen concentration in the electrochemical cell 80 is reduced to a certain level or less as described above, the selectivity for desired substances can be prevented from decreasing and power consumption can also be reduced.

When there is a halogen in the electrochemical cell 80, the oxidation reaction of carbon monoxide and the reactant proceeds appropriately. Therefore, in order for the oxidation reaction to proceed appropriately, the halogen concentration may be a certain level or more, and is preferably 0.1 mM or more, more preferably 0.5 mM or more, and still more preferably 1.0 mM or more.

Here, as will be described below, it is preferable to use a brominated salt as a halide salt, and the halogen contained in the electrochemical cell 80 is also preferably bromine. Therefore, the bromine concentration in the electrolytic solution 83 of the electrochemical cell 80 is preferably 4.5 mM or less, more preferably 4.0 mM or less, and still more preferably 3.2 mM or less, and may be 0 mM or more, and is preferably 0.1 mM or more, more preferably 0.5 mM or more, and still more preferably 1.0 mM or more.

The concentration of carbon dioxide in the electrolytic solution 83 of the electrochemical cell 80 is not particularly limited, and is preferably 5 to 20 g/L, and more preferably 7 to 10 g/L.

Hereinafter, components used in the present embodiment will be described in more detail.

### [Electrolytic solution]

In the present embodiment, the electrolytic solution contains a reactant and an electrolyte.

### (Electrolyte)

The electrolytic solution 83 may contain a redox species as an electrolyte. The electrolyte may be dissolved in the electrolytic solution. As the electrolytes serving as redox species, those having a molecule or ion size smaller than that of a reactant such as an alcohol compound to be described below and having redox activity can be used. Specific examples of electrolytes include halide salts, organic redox, and complex redox. Among these, a halide salt is preferable in order to enhance the selectivity and productivity.

In the present embodiment, when the electrolytic solution 83 contains a redox species as an electrolyte, an oxidized product is produced at the anode 82, and the oxidized product allows a carbonyl compound to be produced from carbon monoxide and a reactant more efficiently in the presence of the second catalyst 85.

The details of the halide salts, organic redox, and complex redox are as described in the ninth embodiment.

Among the above examples, in order to increase the selectivity for carbonyl compounds, the electrolyte is preferably a halide salt, and among these, a chlorinated salt and a brominated salt are more preferable, and a brominated salt is still more preferable. Therefore, the electrolytic solution contains, as redox ions, halogen ions such as chlorine ions and bromine ions, and particularly preferably contains bromine ions. Thus, at the anode, a halogen such as chlorine or bromine may be produced as an oxidized product.

In addition, the cation type of the halide salt is preferably lithium, sodium, or potassium.

Specific examples of chlorinated salts (metal chloride salts) include those described in the ninth embodiment, and among these, sodium chloride is preferable in consideration of availability. Preferable specific examples of brominated salts (metal bromide salts) include those described in the ninth embodiment, preferable examples thereof include lithium bromide, potassium bromide, and sodium bromide, and among these, in order to increase the selectivity for carbonyl compounds, lithium bromide and sodium bromide are more preferable, and among these, sodium bromide is still more preferable.

The electrolytes may be used alone or two or more thereof may be used in combination.

As described above, it is preferable to use a halide salt as the electrolyte, and when a halide salt is used, the electrolyte may consist of a halide salt alone, or may contain an electrolyte other than the halide salt as long as the effects of the present invention are not impaired. The content of the halide salt in the electrolytic solution contained in the electrochemical cell 80 with respect to a total amount of the electrolyte is preferably 50 mass% or more and 100 mass% or less, more preferably 70 mass% or more and 100 mass% or less, and still more preferably 90 mass% or more and 100 mass% or less.

### (Reactant)

The reactant is a compound that serves as a raw material for a carbonyl compound. The reactant varies depending on the type of the desired product to be produced. For example, when either or both of an organic carbonate and an organic oxalate are produced, an alcohol compound may be used as the reactant. In addition, when a urea compound is produced, an amine compound may be used as the reactant. Among the above examples, it is preferable to use an alcohol compound as the reactant. Here, the details of the alcohol compounds, amine compounds, and carbonyl compounds obtained therefrom are as described in the first embodiment.

As in the first embodiment, the electrolytic solution may further contain a solvent for an electrolytic solution. The solvent for an electrolytic solution and the electrolytic solution containing the solvent for an electrolytic solution are as described above.

### [Cathode]

As described above, the cathode (first electrode) 81 is disposed inside the electrochemical cell 80, and contains the first catalyst 84. The cathode 81 is an electrode used when a reductant such as carbon monoxide is electrochemically synthesized from carbon dioxide. The first catalyst is a reduction catalyst that allows carbon dioxide to be reduced to a reductant such as carbon monoxide. The cathode 81 may include an electrode substrate (current collector). The details of the first catalyst and the cathode (first electrode) are as described in the first embodiment, and the description thereof will be omitted.

### [Anode]

As described above, the anode 82 is an electrode disposed inside the electrochemical cell 80. The anode 82 may include an electrode substrate (current collector). The details of the electrode substrate (current collector) are the same as those of the cathode, and the description thereof will be omitted. Here, the current collector of the anode 82 may be made of the same material as the current collector of the cathode, or may be made of a different material. In the present embodiment, the anode 82 contains the second catalyst 85.

### (Second catalyst)

The second catalyst used in the present invention is not particularly limited as long as it catalyzes a chemical reaction for synthesizing a carbonyl compound from carbon monoxide and a reactant, and may contain metal elements, and the details thereof are as described in the first embodiment.

In the present embodiment, the second catalyst 85 may be contained in the anode by being supported on an electrode substrate. In addition, the second catalyst 85 may also be supported on an electrode substrate together with a catalyst additive or the like. The method for supporting the second catalyst or the second catalyst and the catalyst additive (catalyst composition) on the electrode substrate is not particularly limited, but is the same as the method for supporting the first catalyst on the electrode substrate, and therefore the description thereof will be omitted.

As shown in Fig. 13, the cathode 81 and the anode 82 may be disposed to face each other. In addition, the first catalyst 84 may be disposed between the cathode 81 and the anode 82, and therefore, the first catalyst 84 contained in the cathode 81 may be supported on at least the surface that faces the anode 82. Similarly, the second catalyst 85 may be disposed between the cathode 81 and the anode 82. Therefore, the second catalyst 85 contained in the anode 82 may be supported on the surface that faces the cathode 81. When the first and second catalysts 84 and 85 are disposed as described above, a carbonate compound can be more efficiently produced from carbon monoxide produced at the cathode 81 and the oxidized product produced at the anode 82.

However, in the present embodiment, the second catalyst 85 does not need to be contained in the anode 82, and it may be contained in the electrolytic solution 83 or may be contained in both the anode 82 and the electrolytic solution 83. When the second catalyst 85 is contained in the electrolytic solution 83, it may be dissolved in the electrolytic solution 83, but it may be generally dispersed in the electrolytic solution 83 without being dissolved. In addition, when the second catalyst 85 is contained in the electrolytic solution 83, a stirring means or the like may be provided so that the second catalyst 85 can be dispersed in the electrolytic solution 83. Here, when the electrolytic solution 83 contains the second catalyst 85, a filter may be attached to the exhaust port 87 and the supply port 86, and the second catalyst 85 may be prevented from being discharged to the outside from the electrochemical cell 80 together with the electrolytic solution 83.

The electrochemical reaction device 90 according to the above thirteenth embodiment may produce a carbonyl compound according to a so-called batch process. In the thirteenth embodiment, first, the electrochemical cell 80, in which the cathode 81 containing the first catalyst 84 and the anode 82 containing the second catalyst 85 are disposed for example, is prepared.

Next, the electrochemical cell 80 is filled with, for example, the electrolytic solution 83 containing carbon dioxide. In this case, an electrolytic solution containing carbon dioxide may be supplied to the electrochemical cell 80, an electrolytic solution and carbon dioxide may be supplied separately to the electrochemical cell 80, and for example, an electrolytic solution may be supplied, and carbon dioxide may be then introduced into the supplied electrolytic solution.

Then, a voltage may be applied from the electrode 89 to cause an electrochemical reaction. The voltage application is continued, and when a certain amount of a carbonyl compound is produced, the electrolytic solution 83 containing a carbonyl compound may be discharged from the exhaust port 87. In addition, after the electrolytic solution 83 is discharged, the electrochemical cell 80 may be filled again with the electrolytic solution 83 containing carbon dioxide, and the electrochemical reaction may be performed similarly. On the other hand, the discharged electrolytic solution containing a carbonyl compound may be then subjected to separation, purification or the like as necessary using a separation device, a distillation device or the like.

However, the production of carbonyl compounds does not need to be performed in a batch process, but may be performed in a flow process. Hereinafter, an example in which a carbonyl compound is produced in a flow process using an electrochemical reaction device 90A according to a fourteenth embodiment shown in Fig. 14 will be described in detail. Here, in the following description, configurations that are not particularly described are the same as those in the thirteenth embodiment.

### <Fourteenth embodiment>

An electrochemical reaction device 90A according to a fourteenth embodiment further includes a storage unit 95 in addition to the same electrochemical cell 80 as in the thirteenth embodiment. In addition, the electrochemical reaction device 90A includes a supply path 97 that connects the storage unit 95 and the supply port 86. The storage unit 95 is constituted of a tank that stores the electrolytic solution 83 therein. Here, the electrolytic solution 83 stored in the storage unit 95 is as described in the thirteenth embodiment, and contains at least a reactant and an electrolyte.

The electrolytic solution 83 stored in the storage unit 95 further contains carbon dioxide. For example, a carbon dioxide supply source (not shown) is connected to the storage unit 95 through an inlet path 92. Carbon dioxide supplied to the storage unit 95 through the inlet path 92 is introduced into the electrolytic solution 83 stored in the storage unit 95 by bubbling or the like, and thereby carbon dioxide may be incorporated into the electrolytic solution 83. The carbon dioxide supply source is as described above.

The electrolytic solution 83 containing carbon dioxide stored in the storage unit 95 is supplied from the supply port 86 into the electrochemical cell 80 through the supply path 97. As in the thirteenth embodiment, the electrolytic solution 83 is supplied from the supply port 86 into the electrochemical cell 80, and in the electrochemical cell 80, carbon dioxide contained in the electrolytic solution 83 is converted into carbon monoxide, and then into a carbonyl compound. Then, the electrolytic solution 83 containing a carbonyl compound may be discharged from the exhaust port 87. When the supply and discharge of the electrolytic solution 83 are continuously performed in this manner, convection F flow is formed so that the electrolytic solution 83 flows through the electrochemical cell 80 in one direction (from top to bottom in Fig. 14), and a carbonyl compound can be continuously produced. Here, the supply and discharge of the electrolytic solution 83 may be performed intermittently or continuously.

### <Fifteenth embodiment>

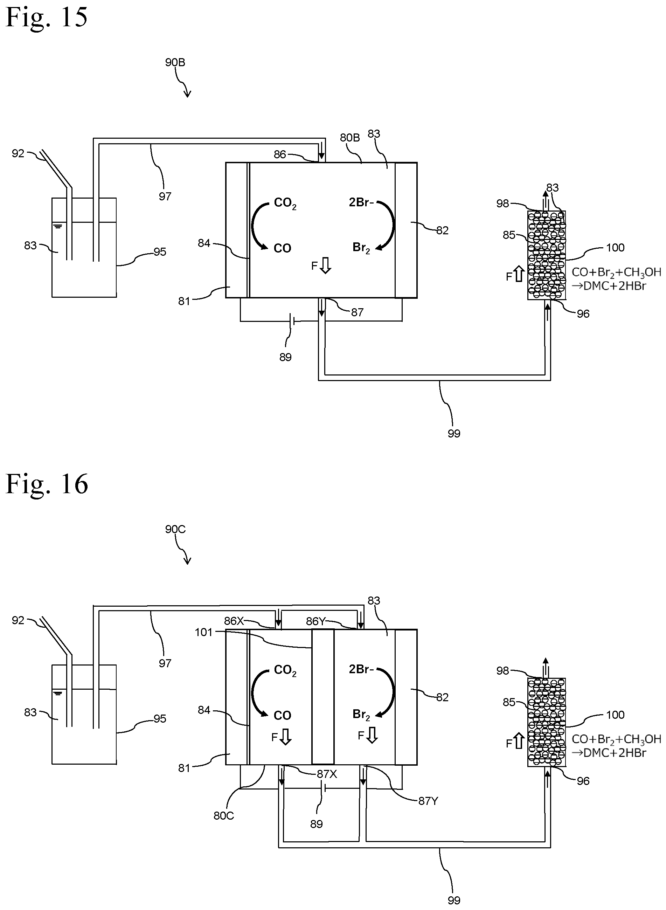

Next, a fifteenth embodiment of the present invention will be described. Fig. 15 shows an electrochemical reaction device 90B according to the fifteenth embodiment. The electrochemical reaction device 90B further includes a reaction section (first reaction section) 100 in addition to an electrochemical cell 80B and the storage unit 95. The reaction section 100 constitutes a reaction chamber separated from the electrolysis compartment constituted by the electrochemical cell 80B.

In the thirteenth and fourteenth embodiments, the second catalyst 85 is contained in the electrochemical cell, but in the present embodiment, the second catalyst 85 is not contained in the electrochemical cell but is contained in the reaction section 100 (reaction chamber).

That is, the electrochemical cell 80B may be the same as those of the thirteenth and fourteenth embodiments except that the second catalyst 85 is not contained. The storage unit 95 may be the same as in the fourteenth embodiment. On the other hand, the second catalyst 85 may be loaded in the reaction section 100. In addition, the reaction section 100 is additionally filled with the electrolytic solution 83.

In the reaction section 100, the second catalyst 85 is not particularly limited, and it may be loaded in the form of a layer inside the reaction section 100 as a catalyst layer. The catalyst layer may be loaded on a support such as a tray or mesh in the reaction section 100, but a support may not be provided. However, the second catalyst 85 does not need to constitute a catalyst layer in the reaction section 100, and may be dispersed in the electrolytic solution 83 inside the reaction section 100.

When the second catalyst 85 is dispersed in the electrolytic solution 83 inside the reaction section 100, a filter is attached to a reaction section supply port 96 and a reaction section exhaust port 98 to be described below, and the second catalyst 85 may be prevented from being discharged to the outside from the reaction section 100 together with the electrolytic solution 83.

The reaction section 100 includes the reaction section supply port 96 and the reaction section exhaust port 98. In addition, the electrochemical reaction device 90B includes a connection path 99 that connects the reaction section supply port 96 and the exhaust port 87 of the electrochemical cell 80B.

With the above configuration, in the electrochemical reaction device 90B, the electrochemical cell 80B including the cathode 81 containing the first catalyst 84, and the anode 82, and the reaction section 100 including the second catalyst 85 are provided. Thus, the electrolytic solution 83 containing carbon dioxide passes through the electrochemical cell 80B from the supply port 86 of the electrochemical cell 80B and flows toward the exhaust port 87, and the electrolytic solution 83 discharged from the exhaust port 87 is supplied from the reaction section supply port 96 to the reaction section 100 through the connection path 99. Next, the electrolytic solution 83 passes through the reaction section 100 and is discharged from the reaction section exhaust port 98.

In the present embodiment, when the electrolytic solution 83 flows as described above, the electrolytic solution 83 has convection F flow that flows through the first electrochemical cell 80B and the reaction section 100 in that order. Then, at the cathode 81, the first catalyst 84 catalyzes reduction of carbon dioxide, and carbon monoxide is produced. On the other hand, at the anode 82, an oxidized product (for example, a halogen such as bromine, or an oxidant B), which is an active intermediate species, is produced from an electrolyte. Carbon monoxide and the oxidized product produced in the electrochemical cell 80B are supplied to the reaction section 100 together with the electrolytic solution 83 by convection F. Thus, in the reaction section 100, due to the action of the second catalyst 85, a carbonyl compound is produced from carbon monoxide, an oxidized product, and a reactant. In addition, in the reaction section 100, by-product such as hydrogen halide is also produced from the oxidized product.

Here, although not particularly limited, Fig. 15 shows an example of a reaction in which the reactant is methanol, and the electrolyte is a brominated salt. When the reactant is methanol, and the electrolyte is a brominated salt, bromide ions as the reduced species are converted into bromine as the oxidized product at the anode 82. Then, in the reaction section 100, due to the actions of the second catalyst 85 and bromine, dimethyl carbonate (DMC) is produced from carbon monoxide and methanol.

In the present embodiment, as in the thirteenth embodiment, when the electrolyte concentration contained in the electrochemical cell 80B and the current density are within the above predetermined ranges, it is possible to efficiently produce carbon monoxide and an oxidized product (oxidant B). Therefore, it is possible to increase the selectivity when a desired product is produced with high productivity.

Here, the oxidized product such as a halogen produced in the electrochemical cell 80B is sent to the reaction section 100 without being consumed in the electrochemical cell 80B.

Further, in the present embodiment, if a carbonyl compound is produced in the electrochemical cell, and in this case, a halogen is converted into halogen ions inside the electrochemical cell, the production efficiency thus decreases; therefore, as described above, it is preferable to set the halogen concentration to a certain level or less.

### <Sixteenth embodiment>

Next, an example using an electrochemical reaction device according to a sixteenth embodiment will be described. The sixteenth embodiment differs from the fifteenth embodiment in that an electrochemical cell 80C has a isolating layer 101, first and second supply ports 86X and 86Y are provided as supply ports of the electrochemical cell 80C, and first and second exhaust ports 87X and 87Y are provided as exhaust ports.

The isolating layer 101 is disposed between the cathode 81 and the anode 82, and is provided to isolate the region (cathode compartment) on the side of the cathode 81 from the region (anode compartment) on the side of the anode 82. The isolating layer 101 is also called an isolating membrane. The isolating layer 101 may isolate carbon monoxide generated on the side of the cathode 81 from the oxidized product (oxidant B) generated on the side of the anode 82. In addition, the isolating layer 101 may be any layer that allows ions to pass through but does not allow a reactant, a solvent for an electrolytic solution, carbon monoxide, and an oxidized product to pass through, and specifically, an ion exchange membrane is preferable. The isolating layer 101 does not allow the electrolytic solution 83 to pass through but allows ions to pass through. Therefore, in the present embodiment, when a voltage is applied between the cathode 81 and the anode 82, an electrochemical reaction occurs at the cathode 81 and the anode 82.

Examples of ion exchange membranes include a cation exchange membrane and an anion exchange membrane, and in consideration of ion conductivity and cost, a cation exchange membrane is preferable. The details of the cation exchange membrane and the anion exchange membrane are as described above.

The first supply port 86X and the first exhaust port 87X are provided in the cathode compartment, and allow an electrolytic solution containing carbon dioxide to be supplied to the cathode compartment and an electrolytic solution to be discharged from the cathode compartment, respectively. The second supply port 86Y and the second exhaust port 87Y are provided in the anode compartment, and allow an electrolytic solution to be supplied to the anode compartment, and an electrolytic solution to be discharged from the anode compartment, respectively. Here, the electrolytic solution containing carbon dioxide may be supplied from the storage unit 95 through the supply path 97.

In the present embodiment, with the above configuration, the electrolytic solution 83 containing carbon dioxide is supplied from the first supply port 86X, and in the region on the side of the cathode 81, carbon dioxide is reduced to carbon monoxide, and the electrolytic solution 83 containing the reduced carbon monoxide is supplied to the reaction section 100 through the connection path 99. In addition, the electrolytic solution 83 is also supplied to the region on the side of the anode 82 from the second supply port 86Y, the electrolyte contained in the electrolytic solution 83 is converted into an oxidized product (for example, a halogen such as bromine), which is an active intermediate species, and the oxidized product-containing electrolytic solution is supplied to the reaction section 100 through the connection path 99.

Thus, in the reaction section 100, due to the action of the second catalyst 85 and an oxidized product, a carbonyl compound is produced from carbon monoxide and the reactant. In addition, by-product such as hydrogen halide is produced from the oxidized product.

In the present embodiment, as in the thirteenth embodiment, when the electrolyte concentration and the current density in the electrochemical cell 80C are within the above predetermined ranges, it is possible to efficiently produce carbon monoxide and an oxidized product. Therefore, it is possible to achieve high productivity and to increase the selectivity when a desired product is produced. Here, in the present embodiment, in the electrochemical cell 80C, the electrolyte concentration in at least the anode compartment should be within the above range. However, the electrolyte concentrations in both the anode compartment and the cathode compartment are preferably within the above range.

On the other hand, in the present embodiment, the oxidized product such as a halogen produced in the electrochemical cell 80C (anode compartment) is sent to the reaction section 100 without being consumed in the electrochemical cell 80C. Therefore, when a halide salt is used, the halogen concentration (or the bromine concentration) in the anode compartment becomes high. Therefore, in the present embodiment, it is not necessary to set the halogen concentration (or the bromine concentration) in the anode compartment to a certain level or less. However, in the present embodiment, as will be described below, when the electrochemical cell (preferably the anode compartment, and more preferably the anode) contains a second catalyst, a halogen is converted into halogen ions inside the electrochemical cell as a carbonyl compound is produced; therefore, as described above, the halogen concentration may be set to a certain level or less.

On the other hand, since the isolating layer 101 is provided, the halogen produced in the anode compartment is not substantially supplied to the cathode compartment. Therefore, the halogen concentration in the cathode compartment is substantially 0 mM. Here, the term "substantially 0 mM" means a concentration of 0 mM or close to 0 mM, and if the concentration is, for example, about 0.1 mM or less, it can be considered substantially 0 mM.

In addition, the isolating layer 101 does not allow carbon monoxide produced in the region (cathode compartment) on the side of the cathode 81 to pass through the region (anode compartment) on the side of the anode 82 and does not allow the oxidized product (a halogen such as bromine) generated on the side of the anode 82 to pass through the region on the side of the cathode 81. Therefore, on the side of the cathode 81, the inhabitation of the reaction caused by the oxidized product, and the generation of by-products caused by the oxidized product are prevented. Similarly, on the side of the anode 82, the inhabitation of the reaction for producing an oxidized product and the generation of by-products caused by carbon monoxide are also prevented, and in the electrochemical reaction device 90C of the present embodiment, it is possible to produce a carbonate compound more efficiently.

Here, in the present embodiment, a mode in which an electrolytic solution containing carbon dioxide is supplied to both the cathode compartment and the anode compartment is shown, but an electrolytic solution containing no carbon dioxide may be supplied to the anode compartment.

The electrochemical reaction devices according to the above fourteenth to sixteenth embodiments have been described above in detail using an example in which a carbonyl compound is produced in a flow process. However, these electrochemical reaction devices are not necessarily required to produce a carbonyl compound in a flow process, and a carbonyl compound may be produced in a batch process. In this case, in the fourteenth embodiment, as described in the thirteenth embodiment, the electrolytic solution 83 containing carbon dioxide is supplied from the storage unit 95 to the electrochemical cell 80, the supply of the electrolytic solution 83 is then stopped and the electrochemical reaction is performed, and next, after the electrochemical reaction is finished, the electrolytic solution 83 may be discharged from the electrochemical cell 80. As in the fifteenth and sixteenth embodiments, a carbonyl compound may be produced in a batch process.

### <Seventeenth embodiment>

In the present invention, a carbonyl compound may be produced in a circulation mode. When a carbonyl compound is produced in a circulation mode, the electrochemical reaction device may have a circulation mechanism in which the electrolytic solution discharged from the electrochemical cell is circulated and supplied to the electrochemical cell again. Here, the electrolytic solution discharged from the electrochemical cell has a low concentration of carbon dioxide because carbon dioxide is converted into a carbonyl compound in the electrochemical cell. Therefore, the electrochemical reaction device may have a carbon dioxide supply mechanism that introduces carbon dioxide into the electrolytic solution discharged from the electrochemical cell and increases the concentration of carbon dioxide in the electrolytic solution.

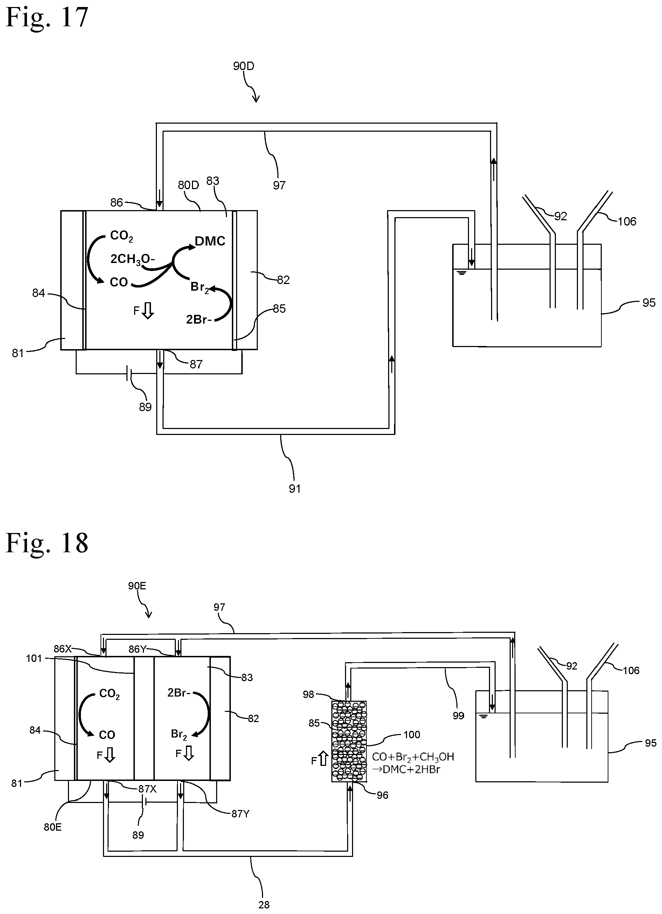

Hereinafter, an example in which a carbonyl compound is produced in a circulation mode will be described using an electrochemical reaction device 90D according to the following seventeenth embodiment with reference to Fig. 17. The following will mainly focus on the differences from the electrochemical reaction device 90A according to the fourteenth embodiment. Here, in the following electrochemical reaction device 90D, as will be described below, the supply path 97, a discharge path 91, and the storage unit 95 may constitute a circulation mechanism, and the storage unit 95 may constitute a carbon dioxide supply mechanism.

Similar to the fourteenth to sixteenth embodiments, the electrochemical reaction device 90D according to the seventeenth embodiment includes the storage unit 95 in which the electrolytic solution 83 containing carbon dioxide is stored. In the storage unit 95, as in the fourteenth embodiment, the inlet path 92 through which carbon dioxide is introduced into the electrolytic solution 83 is provided. In addition, in addition to the inlet path 92, an exhaust path 106 may be provided. In the exhaust path 106, an inlet port of the exhaust path 106 may be disposed inside the electrolytic solution 83 stored in the storage unit 95. When carbon dioxide is introduced into the electrolytic solution 12 through the inlet path 92, gas components containing carbon dioxide contained in the electrolytic solution 83 may become excessive and be released from the electrolytic solution 83, and the exhaust path 106 serves as a path through which such gas components are discharged from the storage unit 95. In the storage unit 95, carbon dioxide is introduced, the gas components in the electrolytic solution 83 are discharged, and thus it is possible to enhance the concentration of carbon dioxide in the electrolytic solution 83.

In the present embodiment, as in the fourteenth embodiment, the electrolytic solution 83 containing carbon dioxide is supplied to an electrochemical cell 80D from the storage unit 95 through the supply path 97, and a carbonyl compound is synthesized in the electrochemical cell 80D. Thus, the electrolytic solution 83 containing a carbonyl compound is sent to the storage unit 95 through the discharge path 91. The electrolytic solution 83 sent to the storage unit 95 is supplied again to the electrochemical cell 80D through the supply path 97 after the concentration of carbon dioxide has been increased as described above. In this manner, in the present embodiment, the electrolytic solution 83 is circulated through the supply path 97, the discharge path 91, and the storage unit 95 so that carbon dioxide contained in the electrolytic solution 83 can be efficiently converted into a carbonyl compound in the electrochemical cell 80D, making the device suitable for mass production. The circulation of the electrolytic solution 83 may be performed repeatedly and continuously. In addition, in the present embodiment, the circulating electrolytic solution 83 has an increased concentration of carbon dioxide in the storage unit 95, which can further enhance productivity.

### <Eighteenth embodiment>

An electrochemical reaction device according to another aspect that can be applied to a circulation mode will be described below as an electrochemical reaction device 90E according to an eighteenth embodiment.

In the fifth embodiment, the second catalyst 85 is contained in an electrochemical cell 80E, and a carbonyl compound is synthesized in the electrochemical cell 80E. However, in the eighteenth embodiment, as in the sixteenth embodiment, the reaction section 100 separated from the electrochemical cell 80E is provided. Thus, as in the sixteenth embodiment, carbon monoxide produced at the cathode 81 and the oxidized product (for example, a halogen such as bromine) produced at the anode 82 may be supplied to the reaction section 100 through the connection path 99, and a carbonyl compound may be produced in the reaction section 100.

The electrolytic solution 83 containing a carbonyl compound in the reaction section 100 is sent to the storage unit 95 as in the seventeenth embodiment, and then supplied to the electrochemical cell 80E through the supply path 97, and thus the electrolytic solution 83 may be circulated as in the seventeenth embodiment. In addition, in the storage unit 95, carbon dioxide is introduced, and the concentration of carbon dioxide in the electrolytic solution 83 may be enhanced.

Here, in the electrochemical cell 80E according to the present embodiment, a mode in which it has the isolating layer 101 is shown, similar to the electrochemical cell 80C according to the sixteenth embodiment, but it may also have a mode in which the isolating layer 101 is not provided in the electrochemical cell 80E, as in the fifteenth embodiment.

### (Other embodiments)

In the above description, as in the fifteenth, sixteenth and eighteenth embodiments, a mode in which, when the reaction section containing a second catalyst is provided, the electrochemical cell does not contain the second catalyst is shown. However, even when the reaction section containing a second catalyst is provided, the electrochemical cell may contain the second catalyst. In this case, the second catalyst is preferably contained on the anode as described in the thirteenth embodiment, but it may be contained in the electrolytic solution (for example, in the anode compartment).

Here, in the fifteenth, sixteenth and eighteenth embodiments, when the electrochemical cell contains a second catalyst, at the anode, in the presence of a second catalyst and an oxidized product, a carbonyl compound is produced from carbon monoxide and a reactant. That is, in addition to the reaction section, a carbonyl compound is produced on the anode.

In the embodiments of the above third aspect, the electrochemical reaction device may include a measurement device that measures the halogen concentration in the electrolytic solution. This is particularly effective in a circulation-type electrochemical reaction device such as those in the seventeenth and eighteenth embodiments because the halogen resulting from the reaction on the anode tends to remain without being used in the reaction with the carbonyl compound. Specific examples of measurement devices include an absorbance measurement device that measures the absorbance based on a halogen-specific absorption peak. As will be described below, when the halogen concentration is measured, it becomes easier to set the halogen concentration of the electrolytic solution in the electrochemical cell in the electrochemical reaction device to a certain level or less. Here, as described above, a brominated salt is preferably used as the electrolyte, and thus the measurement device that measures the bromine concentration is more preferable.

Particularly, when the halogen concentration (preferably, the bromine concentration) is measured in a circulation-type electrochemical reaction device such as those in the seventeenth and eighteenth embodiments, the halogen concentration (preferably, the bromine concentration) of the electrochemical cell 80 may be appropriately adjusted according to the measured halogen concentration so that it falls within the above specified range.

Here, it is effective to measure the halogen concentration (preferably, the bromine concentration) in the electrochemical cell and adjust the halogen concentration (preferably, the bromine concentration) according to the measurement results. In the electrochemical cell of the circulation-type, the halogen concentration of the electrolytic solution in the electrochemical cell is measured, the halogen concentration is adjusted to be within the above predetermined range, and thus the generation of by-products caused by the halogen at the cathode can be minimized and the selectivity for desired substances can be prevented from decreasing.

Here, as shown in the eighteenth embodiment, in the two-compartment type electrochemical cell in which the isolating layer is provided, when the electrolytic solution is circulated, the halogen produced at the anode is also circulated to the cathode compartment. Therefore, it is preferable to measure the halogen concentration in either or both of the anode compartment and the cathode compartment and adjust the halogen concentration in either or both of the anode compartment and the cathode compartment as described above. More preferably, in order to enhance the selectivity, it is more preferable to measure the halogen concentration in the cathode compartment and adjust the halogen concentration in the cathode compartment as described above.

The means for adjusting the halogen concentration is not particularly limited, and it is preferable to adjust the halogen concentration by promoting or inhibiting the reaction for converting a halogen into halogen ions or the reaction for converting halogen ions into a halogen. Specifically, a dehalogenation mechanism is provided to reduce a halogen into a halogen ion, and thus the halogen concentration may be adjusted.

The dehalogenation mechanism may add an additive for reducing a halogen to the electrolytic solution or perform electrical reduction. Examples of additives for reduction include sodium thiosulfate. In a two-compartment type electrochemical cell in which the isolating layer is provided as shown in the eighteenth embodiment, the additive for reducing a halogen may be added to either the cathode compartment or the anode compartment, but is preferably added to the cathode compartment.

In addition, as in the sixteenth and eighteenth embodiments, a mode in which, when the isolating layer is provided, carbon monoxide is produced in the cathode compartment, an oxidized product such as a halogen is produced in the anode compartment, these are sent to a separate reaction section, and a carbonyl compound is produced in the reaction section is shown. However, even when the isolating layer is provided, the reaction section may not be provided, and a carbonyl compound may be produced in the electrochemical cell.

In this case, the anode compartment may contain a second catalyst, and preferably the anode may contain a second catalyst. In addition, a connection path that connects the anode compartment and the cathode compartment may be provided. Thus, an electrolytic solution containing carbon dioxide is supplied to the cathode compartment, carbon monoxide is produced in the cathode compartment, and an electrolytic solution containing carbon monoxide is sent to the anode compartment through the connection path. In the anode compartment, at the anode, the electrolyte (for example, a halide salt) contained in the electrolytic solution is converted from a reduced species into an oxidized product (for example, a halogen), and a carbonyl compound is produced from the carbon monoxide sent from the cathode compartment, the reactant contained in the electrolytic solution, and the oxidized product derived from the electrolyte in the presence of a second catalyst. The produced carbonyl compound may be discharged from the electrochemical cell together with the electrolytic solution. In addition, as shown in the eighteenth embodiment, the electrolytic solution discharged from the electrochemical cell may be circulated and supplied again to the cathode compartment in a circulation mode. In addition, in the circulation mode, the electrolytic solution may be supplied again to the cathode compartment after the concentration of carbon dioxide in the electrolytic solution is increased in the storage unit or the like, as shown in the eighteenth embodiment.

In addition, the configuration of the electrochemical cell described in the third aspect can also be applied to other aspects. Specifically, in the first and second aspects, the configuration of the electrolytic solution inside the electrochemical cell, the distance between the electrodes, the current density and the like may be the same as those described in the third aspect. For example, in the first and second aspects, when the electrochemical cell is a one-compartment type electrochemical cell that is not demarcated by a isolating membrane (ion exchange membrane), the electrolytic solution with which the one-compartment type electrochemical cell is filled may have the configuration described in the third aspect (for example, the thirteenth embodiment). In addition, when the electrochemical cell is demarcated into an anode compartment and a cathode compartment by a isolating membrane (ion exchange membrane), as described in the sixteenth embodiment, the electrolytic solution in at least the anode compartment may have the same configuration as described in the third aspect.

### Examples

The present invention will be described in more detail with reference to examples, but the present invention is not limited to these examples.

The following Examples 1A to 4A were examples corresponding to the first aspect of the present invention.

### [Example 1A]

### (Preparation of catalyst)

38.0 mg of poly(4-vinylpyridine) (P4VP, a weight average molecular weight of 60,000) was dispersed in 50 ml of ethanol to obtain a P4VP dispersion solution. 1.8 ml ethanol solution of a 20 mM Co(II)(NO₃)₂ (6.5 mg, Co=2 mg) and 54 mg of ketjen black ("ECP600JD," commercially available from Lion Specialty Chemicals Co., Ltd.) were mixed with the P4VP dispersion solution and dried to obtain a powder (first catalyst raw material mixture). The cobalt content in the first catalyst raw material mixture was 2 mass%. The obtained powder was sintered in an argon atmosphere at 300°C for 3 hours to obtain a first catalyst.

In addition, 30 mg of PdCl₂ (commercially available from Aldrich CO. Ltd.) and 30 mg of ketchen black were dispersed in 50 ml of ethanol, the solvent was removed using an evaporator, and the mixture was dried at 150°C for 30 minutes to obtain a second catalyst.

### (Preparation of membrane-electrode assembly)

2 mg of the first catalyst and 10 µl of a dispersion solution containing a 30 mass% catalyst additive (Nafion) were dispersed in isopropanol and applied onto carbon paper. This was heated and dried at 80°C for 1 hour to obtain a first electrode. Using carbon paper as the second electrode, the obtained first electrode and second electrode were laminated on an ion transport membrane made of Nafion (trade name) and heated and pressed at 59 MPa and 413 K to prepare a membrane-electrode assembly having the first electrode 11 and the second electrode 12 on both surfaces of the first ion exchange membrane 15.

### (Preparation of carbon dioxide reduction device)

Next, the membrane-electrode assembly was set in the center of the cell, and as shown in Fig. 4, an electrochemical cell constituted of a two-compartment type diaphragm cell that was demarcated into the first electrolysis section 21 and the second electrolysis section (electrolysis and reaction section) 22A by the first ion exchange membrane 15 was obtained. In the electrochemical cell, the first electrolysis section 21 and the electrolysis and reaction section 22A were connected with a Teflon (registered trademark) tube to form the first connection path 41A, and thereby the carbon dioxide reduction device 10D according to the fourth embodiment was obtained.

### (Synthesis of organic substance)

The electrolysis and reaction section 22A was filled with methanol (reactant) containing 0.2 mol/L of LiBr (commercially available from Aldrich CO. Ltd.) as a redox substance, and 1 g/L of the second catalyst was additionally mixed therein. While CO₂ (1 atm) was flowed in the first electrolysis section 21, a current of 10 mA was applied between the first electrode and the second electrode at 273K, and the product generated in the first electrolysis section 21 was introduced into the electrolysis and reaction section 22A through the first connection path 41A by bubbling. When the products in the first electrolysis section 21 and the electrolysis and reaction section 22A were analyzed through gas chromatography (GC), it was confirmed that carbon monoxide was produced in the first electrolysis section 21 and dimethyl carbonate was produced in the electrolysis and reaction section 22A.

### [Example 2A]

First and second catalysts and a membrane-electrode assembly were prepared in the same manner as in Example 1A. In addition, in the same manner as in Example 1A, the membrane-electrode assembly was set in the center of the cell, and as shown in Fig. 1, an electrochemical cell constituted of a two-compartment type diaphragm cell that was isolated into the first electrolysis section 21 and the second electrolysis section 22 by the first ion exchange membrane 15 was obtained. In addition, a reactor constituting the reaction section 31 was prepared separately from the electrochemical cell. The first electrolysis section 21 and the reaction section 31, and the second electrolysis section 22 and the reaction section 31 were connected with a Teflon (registered trademark) tube to form the first connection path 41 and the second connection path 42, and thereby the carbon dioxide reduction device 10 according to the first embodiment (refer to Fig. 1) was obtained.

The second electrolysis section 21 was filled with an aqueous electrolytic solution in which 0.2 M LiCl was dissolved, and the reaction section 31 was filled with methanol in which 1 g/L of the second catalyst was dispersed. CO₂ (1 atm) was flowed in the first electrolysis section 21, a current of 10 mA was applied between the first electrode and the second electrode at 273K, and the products generated in the first electrolysis section 21 and the second electrolysis section 22 were introduced into the reaction section 31 through the first connection path 41 and the second connection path 42 by gas bubbling. When the products in the first electrolysis section 21 and the first reaction section 31 were analyzed through gas chromatography (GC), it was confirmed that carbon monoxide was produced in the first electrolysis section 21 and dimethyl carbonate was produced in the reaction section 31.

### [Example 3A]

First and second catalysts and a membrane-electrode assembly were prepared in the same manner as in Example 1A. A three-compartment type diaphragm cell was used in place of the two-compartment type diaphragm cell, the first compartment, the second compartment, and the third compartment were designated as the first electrolysis section 21, the second electrolysis section 22, and the reaction section 31, the membrane-electrode assembly was inserted between the first compartment and the second compartment, and the Nafion membrane (the second ion exchange membrane 25) was inserted between the second compartment and the third compartment. The first compartment and the third compartment, and the second compartment and the third compartment were connected with a Teflon (registered trademark) tube to form the first connection path 41 and the second connection path 42, and thereby the carbon dioxide reduction device 10B (refer to Fig. 2) according to the second embodiment was obtained.

The second electrolysis section 22 was filled with an aqueous electrolytic solution in which 0.2 M LiCl was dissolved, and the reaction section 31 was filled with methanol in which 1 g/L of the second catalyst was dispersed. CO₂ (1 atm) was flowed in the first electrolysis section 21, a current of 10 mA was applied between the first electrode and the second electrode at 273K, and the products generated in the first electrolysis section 21 and the second electrolysis section 22 were introduced into the reaction section 31 through the first connection path 41 and the second connection path 42 by bubbling. When the products in the first electrolysis section 21 and the reaction section 31 were analyzed through gas chromatography (GC), it was confirmed that carbon monoxide was produced in the first electrolysis section 21 and dimethyl carbonate was produced in the reaction section 31.

### [Example 4A]

In Example 2A, in the reaction section 31, 0.2 M Na₂CO₃ was mixed, and the carbon dioxide reduction device 10C (refer to Fig. 3) according to the third embodiment was prepared. CO₂ (1 atm) was flowed in the first electrolysis section 21, a current of 10 mA was applied between the first electrode and the second electrode at 273K, and the products generated in the first electrolysis section 21 and the second electrolysis section 22 were introduced into the reaction section 31 through the first connection path 41 and the second connection path 42 by bubbling. After a predetermined time had passed, the reaction solution obtained in the reaction section 31 was circulated and subjected to solid-liquid separation, and the obtained solid was introduced into the second electrolysis section 22.

Then, CO₂ (1 atm) was continuously flowed in the first electrolysis section 21, and a current of 10 mA was continuously applied between the first electrode and the second electrode at 273 K, and the products in the first electrolysis section 21 and the first reaction section 31 were analyzed through gas chromatography (GC). It was confirmed that carbon monoxide was produced in the first electrolysis section 21 and dimethyl carbonate was produced in the reaction section 31.

The following Examples 1B to 30B were examples corresponding to the second aspect of the present invention.

### [Example 1B]

### (Preparation of second catalyst)

140 mg of PdCl₂ (commercially available from Aldrich CO. Ltd.) was dissolved in 50 ml of an ammonium aqueous solution (26 wt%, commercially available from Wako). 20 g of silica was dispersed in the obtained solution as a metal compound, and the solvent was then evaporated using an evaporator. The obtained solid was heat-treated at 200°C for 3 hours in an air atmosphere to obtain a second catalyst.

### (Preparation of electrochemical system)

In the anode compartment of a two-compartment type diaphragm electrolysis cell, an electrode (anode) made of carbon paper (product name "Sigracet 29 BC," commercially available from SGL Carbon) and a reference electrode made of Ag/AgCl were disposed, an electrode (cathode) made of Pt was set in the cathode compartment, and the anode compartment and the cathode compartment was divided by a Nafion ion exchange membrane.

Then, 2 g of the second catalyst was loaded into the anode compartment, and the anode compartment was filled with, as an electrolytic solution, 30 ml of a methanol solution in which 0.2 M LiBr was dissolved as a redox species. The cathode compartment was filled with 30 ml of a 0.2 M LiBr methanol solution.

In a room temperature (23°C) environment, CO (1 atm) was supplied to the anode compartment, a voltage of +1 V was applied between the electrodes to cause a reaction, the components of the reaction solution were then analyzed through gas chromatography, and the Faraday efficiency was calculated by comparing the results with the current value. The Faraday efficiencies of the organic carbonate and the organic oxalate were calculated. The results are shown in Table 1. However, in Table 1, compounds produced in the largest amount on a molar basis are listed as desired compounds, and the Faraday efficiencies of the desired compounds are shown. The Faraday efficiency 1 minute after CO supply started and the Faraday efficiency 30 minutes after CO supply started are shown.

### [Examples 2B to 12B]

Second catalysts were produced in the same manner as in Example 1 except that the type of the metal compound serving as a support was changed as shown in Table 1.

### [Examples 13B to 15B]

Second catalysts were produced in the same manner as in Example 1 except that HAuCl₄ (commercially available from Aldrich CO. Ltd.) was used as a metal precursor in place of PdCl₂, and the type of the metal compound serving as a support was changed as shown in Table 1.

### [Example 16B]

The same procedure as in Example 1 was performed except that a reaction chamber was prepared separately from the electrochemical cell, 2 g of the second catalyst was loaded into the reaction chamber in place of the anode compartment, the reaction chamber and the anode compartment were connected, and the electrolytic solution was circulated between the reaction chamber and the anode compartment using a diaphragm pump.

### [Examples 17B and 18B]

Second catalysts were produced in the same manner as in Example 16 except that the type of the metal compound serving as a support was changed as shown in Table 1.

### [Example 19B]

The same procedure as in Example 1 was performed except that a reaction chamber was prepared separately from the electrochemical cell, 2 g of the second catalyst was loaded thereinto and the reaction chamber was filled with 30 ml of methanol, LiCl was used in place of LiBr as the redox species, the reaction chamber and the anode compartment were connected, and a gas generated from the anode compartment was supplied to the reaction chamber.

### [Examples 20B and 21B]

Second catalysts were produced in the same manner as in Example 16B except that the type of the metal compound serving as a support was changed as shown in Table 1.

### [Example 22B]

A second catalyst was produced in the same manner as in Example 16B except that the metal compound shown in Table 1 was used, and the obtained second catalyst was additionally subjected to a reduction treatment using H₂ gas at room temperature (23°C).

### [Example 23B]

A second catalyst was produced in the same manner as in Example 16B except that the metal compound shown in Table 1 was used, and the obtained second catalyst was additionally subjected to a reduction treatment using CO gas at room temperature (23°C).

### [Example 24B]

A second catalyst was produced in the same manner as in Example 16B except that the metal compound shown in Table 1 was used, and the obtained second catalyst was additionally subjected to a reduction treatment using H₂ gas at 150°C.

### [Example 25B]

A second catalyst was produced in the same manner as in Example 16 except that the metal compound (silica) shown in Table 1 was pretreated using lithium nitrate. The pretreatment was performed by adding 5.3g of lithium nitrate to 20 g of silica, mixing them, and heating the mixture at 500°C before the metal compound was added to a PdCl₂ solution.

### [Example 26B]

A second catalyst was produced in the same manner as in Example 16B except that the metal compound (silica) shown in Table 1 was pretreated with magnesium nitrate. Here, the pretreatment was performed in the same manner as in Example 25B except that magnesium nitrate was used in place of lithium nitrate.

### [Example 27B]

A second catalyst was produced in the same manner as in Example 16B except that the metal compound (silica) shown in Table 1 was pretreated with sodium nitrate. Here, the pretreatment was performed in the same manner as in Example 25B except that sodium nitrate was used in place of lithium nitrate.

### [Example 28B]

A second catalyst was produced in the same manner as in Example 18B except that the metal compound (alumina) shown in Table 1 was pretreated using lithium nitrate. Here, the pretreatment was performed in the same manner as in Example 25B except that the metal compound was changed.

### [Example 29B]

A second catalyst was produced in the same manner as in Example 18B except that the metal compound (alumina) shown in Table 1 was pretreated with magnesium nitrate. Here, the pretreatment was performed in the same manner as in Example 28B except that magnesium nitrate was used in place of lithium nitrate.

### [Example 30B]

A second catalyst was produced in the same manner as in Example 18B except that the metal compound (alumina) shown in Table 1 was pretreated with sodium nitrate. Here, the pretreatment was performed in the same manner as in Example 28B except that sodium nitrate was used in place of lithium nitrate.

### [Comparative Example 1B]

A second catalyst was produced in the same manner as in Example 1B except that no metal compound was added.

### [Comparative Example 2B]

A second catalyst was produced in the same manner as in Example 1B except that 20 g of ketjen black was used in place of 20 g of silica.

### [Comparative Example 3B]

A second catalyst was produced in the same manner as in Example 1B except that 20 g of ketjen black was used in place of 20 g of silica, and HAuCl₄ (commercially available from Aldrich CO. Ltd.) was used in place of PdCl₂ as a metal precursor.

**[Table 1]**

| | Catalyst active species | Metal compound (support) | Second metal | System structure | Redox species | Desired compound | Reduction treatment | FE (%) after 1 minute | FE (%) after 30 minutes |
|---|---|---|---|---|---|---|---|---|---|
| Example1 B | Pd | Silica | None | Eleventh emboiment | LiBr | DMC | None | 23 | 85 |
| Example 2B | Pd | Magnesia | None | Eleventh embodiment | LiBr | DMC | None | 21 | 76 |
| Example3B | Pd | Titanium oxide | None | Eleventh embodiment | LiBr | DMC | None | 23 | 78 |
| Example4B | Pd | Zirconia | None | Eleventh embodiment | LiBr | DMC | None | 21 | 84 |
| Example5B | Pd | Alumina | None | Eleventh embodiment | LiBr | DMC | None | 25 | 86 |
| Example6B | Pd | Cerium oxide | None | Eleventh embodiment | LiBr | DMC | None | 18 | 77 |
| Example7B | Pd | Niobium oxide | None | Eleventh embodiment | LiBr | DMC | None | 19 | 73 |
| Example8B | Pd | Silica alumina | None | Eleventh embodiment | LiBr | DMC | None | 21 | 89 |
| Example9B | Pd | Silica magnesia | None | Eleventh embodiment | LiBr | DMC | None | 18 | 80 |
| Example10B | Pd | Zirconium tungstate | None | Eleventh embodiment | LiBr | DMC | None | 14 | 81 |
| Example11B | Pd | Zeolite | None | Eleventh embodiment | LiBr | DMC | None | 22 | 83 |
| Example12B | Pd | Sulfated zirconia | None | Eleventh embodiment | LiBr | DMC | None | 17 | 82 |
| Example13B | Au | Silica | None | Eleventh embodiment | LiBr | DMO | None | 13 | 65 |
| Example14B | Au | Alumina | None | Eleventh embodiment | LiBr | DMO | None | 11 | 57 |
| Example15B | Au | Silica alumina | None | Eleventh embodiment | LiBr | DMO | None | 10 | 45 |
| Example16B | Pd | Silica | None | Ninth embodiment | LiBr | DMC | None | 24 | 84 |
| Example17B | Pd | Magnesia | None | Ninth embodiment | LiBr | DMC | None | 19 | 82 |
| Example18B | Pd | Alumina | None | Ninth embodiment | LiBr | DMC | None | 20 | 88 |
| Example19B | Pd | Silica | None | Tenth embodiment | LiCl | DMC | None | 17 | 81 |
| Example20B | Pd | Magnesia | None | Tenth embodiment | LiCl | DMC | None | 24 | 80 |
| Example21B | Pd | Alumina | None | Tenth embodiment | LiCl | DMC | None | 21 | 86 |
| Example22B | Pd | Silica | None | Ninth embodiment | LiCl | DMC | H2 gas reduction at room temperature | 25 | 91 |
| Example23B | Pd | Silica | None | Ninth embodiment | LiCl | DMC | CO gas reduction at room temperature | 26 | 92 |
| Example24B | Pd | Silica | None | Ninth embodiment | LiCl | DMC | H2 gas reduction at 150°C | 31 | 97 |
| Example25B | Pd | Silica | Li | Ninth embodiment | LiCl | DMC | None | 50 | 97 |
| Example26B | Pd | Silica | Mg | Ninth embodiment | LiCl | DMC | None | 65 | 97 |
| Example27B | Pd | Silica | Na | Ninth embodiment | LiCl | DMC | None | 70 | 97 |
| Example28B | Pd | Alumina | Li | Ninth embodiment | LiCl | DMC | None | 55 | 97 |
| Example29B | Pd | Alumina | Mg | Ninth embodiment | LiCl | DMC | None | 68 | 97 |
| Example30B | Pd | Alumina | Na | Ninth embodiment | LiCl | DMC | None | 72 | 97 |
| Comparative Example 1B | Pd | None | | Eleventh embodiment | LiBr | DMC | None | - | 40 |
| Comparative Example 2B | Pd | Carbon | | Eleventh embodiment | LiBr | DMC | None | - | 52 |
| Comparative Example 3B | Au | Carbon | | Eleventh embodiment | LiBr | DMO | None | - | 30 |

| | | | | | | | | | |
|---|---|---|---|---|---|---|---|---|---|
| DMC is dimethyl carbonate. DMO is dimethyl oxalate. | | | | | | | | | |

In the examples, it was possible to synthesize a carbonyl compound with high selectivity because, in a system that produces a carbonyl compound from carbon monoxide using a redox species, a catalyst containing a catalyst active species and a metal compound that supports the catalyst active species was used as a second catalyst for producing a carbonyl compound. On the other hand, in the comparative examples, it was not possible to synthesize a carbonyl compound with high selectivity because the second catalyst did not contain a support or a component other than the metal compound was used as a support.

The following Examples 1C to 11C were examples corresponding to the third aspect of the present invention.

### [Example 1C]

### (Preparation of catalyst)

A first catalyst was obtained in the same manner as in Example 1A.

60 mg of Pd(NO3)2·2H2O (commercially available from Aldrich CO. Ltd.) and 60 mg of ketchen black (product name "EC-300J" (Fuel Cell Store), a BET specific surface area of 800 m²/g, and an average primary particle size of 40 nm) were dispersed in 50 ml of deionized water and then dried, and next, heated at 300°C for 1 hour to obtain a second catalyst (Pd-C).

### (Preparation of electrode)

24 mg of the first catalyst was mixed with 120 µl of a dispersion solution containing a 10 mass% catalyst additive (Nafion), and the mixture was dispersed in 4,800 µl of acetone, spray-coated on carbon paper, and dried to obtain a cathode. 24 mg of the second catalyst was mixed with 120 µl of a dispersion solution containing a 10 mass% catalyst additive (PTFE), and the mixture was dispersed in 4,800 µl of acetone, spray-coated on carbon paper, and dried to obtain an anode.

### (Electrolytic solution)

A 0.1 M NaBr methanol solution was prepared and used as an electrolytic solution.

### (Preparation of cell)

A 4 mm-thick frame (made of ABS) with tube holes (a supply port and an exhaust port) was prepared and inserted between the cathode and the anode, which were arranged to face each other, through a 0.5 mm-thick Teflon (registered trademark) sheet (packing) cut to the same size as the frame and the assembly was sealed using an epoxy resin to prepare an electrochemical cell shown in Fig. 13. In the electrochemical cell, the distance between the electrodes was 35 mm.

### (Evaluation of electrochemical cell)

50 ml of the electrolytic solution was put into a solvent bottle, carbon dioxide was bubbled under conditions of 50 mL/min for 15 minutes to prepare an electrolytic solution in which carbon dioxide was dissolved at a concentration of 7.9 g/L. A current of 20 mA/cm² was applied between the cathode and the anode to cause an electrochemical reaction. The obtained electrolytic solution was analyzed through gas chromatography to obtain the selectivity for desired substances.

### (Examples 2C to 6C and Comparative Example 1C)

The same procedure as in Example 1 was performed except that the current density and the electrolyte concentration were changed as shown in Table 2.

### (Comparative Example 2C)

The same procedure as in Example 1C was performed except that LiBr was used in place of NaBr as the electrolyte, and the electrolyte concentration was changed as shown in Table 2.

### (Examples 7C and 8C, and Comparative Example 3C)

The same procedure as in Example 1C was performed except that the electrolytic solution was changed to a LiBr ethanol solution, and the current density and the electrolyte concentration were changed as shown in Table 2.

### (Examples 9C to 11C)

The same procedure as in Example 3C was performed except that bromine was mixed into the NaBr methanol solution to reach the concentration shown in Table 3.

**[Table 2]**

| | Current density | Electrolytic solution | | | Evaluation results | | |
|---|---|---|---|---|---|---|---|
| | (mA/cm²) | Reactant | Electrolyte | Electrolyte concentration | Desired substance | Selectivity | Determination |
| Example 1C | 20 | MeOH | NaBr | 0.1M | DMC | 44% | A |
| Example 2C | 50 | MeOH | NaBr | 0.1M | DMC | 40% | A |
| Example 3C | 20 | MeOH | NaBr | 0.2M | DMC | 40% | A |
| Example4C | 50 | MeOH | NaBr | 0.2M | DMC | 39% | B |
| Example 5C | 20 | MeOH | NaBr | 0.3M | DMC | 33% | B |
| Example 6C | 50 | MeOH | NaBr | 0.3M | DMC | 31% | B |
| Example 7C | 20 | EtOH | LiBr | 0.3M | DEC | 35% | B |
| Example 8C | 50 | EtOH | LiBr | 0.3M | DEC | 33% | B |
| Comparative Example 1C | 20 | MeOH | NaBr | 0.5M | DMC | 26% | C |
| Comparative Example 2C | 20 | MeOH | LiBr | 0.5M | DMC | 20% | C |
| Comparative Example 3C | 50 | EtOH | LiBr | 0.5M | DEC | 26% | C |

Examples 1C to 11C, and Comparative Examples 1A to 1C were evaluated according to the selectivity based on the following determination criteria.

### [Determination criteria]

A: a selectivity of 40% or more
B: a selectivity of 30 to 39%
C: a selectivity of less than 30%

The results of Examples 1C to 8C and Comparative Examples 1A to 1C are shown in Table 2. As shown in Table 2, in the examples in which the electrolyte concentration was 0.3 M or less, and the current density was 20 mA/cm² or more, carbonyl compounds could be produced with high selectivity. On the other hand, in Comparative Examples 1C to 3C in which the electrolyte concentration was higher than 0.3 M, carbonyl compounds could not be produced with high selectivity.

**[Table 3]**

| | **Current density** | **Electrolytic solution** | | | | **Evaluation results** | | |
|---|---|---|---|---|---|---|---|---|
| | **(mA/cm²)** | **Reactant** | **Electrolyte** | **Electrolyte concentration** | **Br concentration** | **Desired substance** | **Selectivity** | **Determination** |
| **Example 2C** | **50** | **MeOH** | **NaBr** | **0.1M** | **0mM** | **DMC** | **40%** | **A** |
| **Example 9C** | **50** | **MeOH** | **NaBr** | **0.1M** | **1.4mM** | **DMC** | **42%** | **A** |
| **Example 10C** | **50** | **MeOH** | **NaBr** | **0.1M** | **3.0mM** | **DMC** | **40%** | **A** |
| **Example 11C** | **50** | **MeOH** | **NaBr** | **0.1M** | **4.3mM** | **DMC** | **35%** | **B** |

Table 3 shows the results of Examples 2C, and 9C to 11C in which all conditions except for the bromine concentration were the same. As shown in Table 3, in the examples in which the electrolyte concentration was 0.3 M or less and the current density was 20 mA/cm² or more, it can be understood that, when the halogen concentration (bromine concentration) was a certain value or less, it was possible to increase the selectivity when a desired substance was obtained.

### Reference Signs List

10, 10B to 10H Carbon dioxide reduction device (electrochemical reaction device)
11, 11B, 62, 81 First electrode (cathode)
12, 12B, 61, 82 Second electrode (anode)
15 First ion exchange membrane
19, 69, 89 Power source
21, 21A, 21B First electrolysis section
22 Second electrolysis section
22A Electrolysis and reaction section (second electrolysis section)
25 Second ion exchange membrane
31, 63X, 100 Reaction section
32, 32A Purification device
36 Supply path (supply mechanism)
41, 41A, 41B First connection path
42 Second connection path
45 Separation mechanism
60, 80, 80A to 80E Electrochemical cell
60X Anode compartment (second electrolysis section)
60Y Cathode compartment (first electrolysis section)
63, 63A, 93 Electrolytic solution
63B Reaction solution
65, 84 First catalyst
64, 85 Second catalyst
70, 70A to 70C Electrochemical system (electrochemical reaction device)
71 Reaction chamber (first reaction section)
75, 76 Isolating membrane
90, 90A to 90E Electrochemical reaction device
95 Storage unit
101 Isolating layer (isolating membrane)
F Convection

## Claims

1. A electrochemical reaction device comprising: a first electrode, a second electrode, a first electrolysis section comprising the first electrode, a reaction section, and a first connection path that connects the first electrolysis section and the reaction section,
the first electrode comprising a first catalyst that catalyzes a reaction of reducing carbon dioxide to a first reductant,
the second electrode oxidizing a reductant A of a redox substance to an oxidant B,
the first connection path allowing the first reductant produced in the first electrolysis section to be discharged to the reaction section,
the reaction section comprising a second catalyst that allows an organic substance to be produced from the first reductant and the oxidant B.

2. The electrochemical reaction device according to claim 1, comprising a first ion exchange membrane between the first electrode and the second electrode.

3. The electrochemical reaction device according to claim 1 or 2, comprising a second electrolysis section comprising the second electrode,
wherein the oxidant B produced in the second electrolysis section is allowed to be supplied to the reaction section.

4. The electrochemical reaction device according to claim 3, further comprising a second connection path connecting the second electrolysis section and the reaction section,
wherein the second connection path allows the oxidant B to be discharged to the reaction section.

5. The electrochemical reaction device according to claim 3 or 4, comprising a second ion exchange membrane that isolates the second electrolysis section from the reaction section.

6. The electrochemical reaction device according to any one of claims 3 to 5, comprising a supply mechanism that supplies a by-product produced in the reaction section to the second electrolysis section.

7. The electrochemical reaction device according to any one of claims 3 to 6, wherein the redox substance is contained in the second electrolysis section.

8. The electrochemical reaction device according to any one of claims 1 to 7, wherein the first reductant comprises carbon monoxide, and the first connection path is provided with a separation mechanism that separates carbon dioxide and carbon monoxide.

9. The electrochemical reaction device according to any one of claims 1 to 8 wherein the reaction section comprises a reactant that is at least one selected from the group consisting of an alcohol compound and an amine compound.

10. The electrochemical reaction device according to any one of claims 1 to 9, wherein the organic substance is at least one selected from the group consisting of a carbonate compound, an oxalate compound, a urea compound, and an isocyanate compound.

11. The electrochemical reaction device according to any one of claims 1 to 10, wherein the first catalyst comprises a nitrogen element and at least one of metal elements selected from the group consisting of elements of Groups 7 to 12.

12. The electrochemical reaction device according to any one of claims 1 to 11, wherein the first connection path allows the first reductant to be discharged to the reaction section as a gas and the second connection path allows the oxidant B to be discharged to the reaction section as a gas.

13. The electrochemical reaction device according to claim 12, wherein the first reductant is carbon monoxide and the oxidant B is a halogen.

14. The electrochemical reaction device according to any one of claims 1 to 13, wherein the second catalyst comprises a catalyst active species and a metal compound that supports the catalyst active species.

15. The electrochemical reaction device according to any one of claims 1 to 14, comprising an electrochemical cell comprising the first electrolysis section, the electrochemical cell comprising an electrolytic solution comprising a reactant and the redox substance as an electrolyte,
wherein an electrolyte concentration of the electrolytic solution is 0.3 M or less, and a density of a current flowing through the electrochemical cell is 20 mA/cm² or more.

16. A method of producing an organic substance, comprising using the electrochemical reaction device according to any one of claims 1 to 15, the method comprising:
reducing carbon dioxide to a first reductant at the first electrode;
oxidizing a reductant A of a redox substance to an oxidant B at the second electrode;
discharging the first reductant produced at the first electrode to the reaction section through the first connection path; and
producing an organic substance from the first reductant and the oxidant B in the reaction section.

17. An electrochemical reaction device that electrochemically synthesizes at least one carbonyl compound selected from the group consisting of an organic carbonate and an organic oxalate from carbon monoxide,
the device comprising:
a second electrode, a redox substance that causes an oxidation reaction at the second electrode, and a second catalyst that allows the carbonyl compound to be produced,
the second catalyst comprising a catalyst active species and a metal compound that supports the catalyst active species.

18. The electrochemical reaction device according to any one of claims 1 to 15 and 17, wherein the second catalyst comprises at least one metal element selected from the group consisting of elements of Groups 8 to 11 as the catalyst active species.

19. The electrochemical reaction device according to any one of claims 14, 17 and 18, wherein the metal compound is at least one selected from the group consisting of alumina, silica, magnesia, titanium oxide, zirconia, cerium oxide, niobium oxide, silica alumina, silica magnesia, zirconium tungstate, and zeolite.

20. The electrochemical reaction device according to any one of claims 14 and 17 to 19, wherein the redox substance is at least one selected from the group consisting of metal halide, organic redox, and complex redox.

21. The electrochemical reaction device according to any one of claims 14 and 17 to 20, wherein the second electrode comprises no catalyst.

22. The electrochemical reaction device according to any one of claims 17 to 21, comprising a cathode compartment where a reduction reaction occurs and an anode compartment where an oxidation reaction occurs, wherein the anode compartment comprises the second electrode.

23. The electrochemical reaction device according to claim 22, wherein the anode compartment comprises the second catalyst.

24. The electrochemical reaction device according to claim 22 or 23, further comprising a reaction chamber, the reaction chamber comprising the second catalyst, wherein the anode compartment and the reaction chamber are connected so that the redox species is supplied from the anode compartment to the reaction chamber.

25. The electrochemical reaction device according to claim 24, wherein the anode compartment and the reaction chamber are connected so that a gas containing the redox species is supplied from the anode compartment to the reaction chamber.

26. The electrochemical reaction device according to claim 24, wherein the anode compartment and the reaction chamber are connected so that a liquid containing the redox species is supplied from the anode compartment to the reaction chamber.

27. The electrochemical reaction device according to any one of claims 24 to 26, wherein the reaction chamber is filled with a reaction solution containing a reactant.

28. The electrochemical reaction device according to claim 27, wherein the reactant is an alcohol compound.

29. The electrochemical reaction device according to any one of claims 17 to 28, comprising an anode compartment which the second electrode is disposed in and contains an electrolytic solution comprising a reactant and a redox substance therein, and a supply port that supplies carbon monoxide to the anode compartment, wherein the electrolytic solution further comprises the second catalyst.

30. The electrochemical reaction device according to claim 29, wherein the reactant is an alcohol compound.

31. The electrochemical reaction device according to claim 29 or 30, comprising a dispersion means that disperses at least the catalyst in the electrolytic solution with bubbling, flowing or stirring.

32. The electrochemical reaction device according to any one of claims 22 to 31, wherein the cathode compartment comprises a first catalyst that allows carbon dioxide to be reduced to carbon monoxide and the carbon dioxide is supplied to the cathode compartment.

33. The electrochemical reaction device according to any one of claims 1 to 15 and 32, wherein the carbon dioxide is obtained from an exhaust gas discharged from any of a power plant, a steel plant, a cement plant, and a waste incineration plant.

34. A method of producing a carbonyl compound, comprising electrochemically synthesizing at least one carbonyl compound selected from the group consisting of an organic carbonate and an organic oxalate from carbon monoxide in the electrochemical reaction device according to any one of claims 1 to 15 and 17 to 34.

35. The method of producing a carbonyl compound according to claim 34, comprising reducing carbon dioxide to carbon monoxide, wherein the carbonyl compound is electrochemically synthesized from the carbon monoxide obtained by the reducing.

36. An electrochemical reaction device, comprising:
an electrochemical cell comprising a cathode containing a first catalyst that allows carbon dioxide to be reduced to carbon monoxide, an anode, and an electrolytic solution containing a reactant and an electrolyte; and
a second catalyst that allows a carbonyl compound to be synthesized from carbon monoxide and the reactant,
an electrolyte concentration of the electrolytic solution in the electrochemical cell being 0.3 M or less, a density of a current flowing through the electrochemical cell being 20 mA/cm² or more.

37. The electrochemical reaction device according to claim 15 or 36, wherein the electrolyte is a halide salt.

38. The electrochemical reaction device according to claim 37, wherein a cation type of the halide salt is at least one selected from the group consisting of lithium, sodium, and potassium.

39. The electrochemical reaction device according to any one of claims 15 and 36 to 38, wherein a halogen concentration in the electrolytic solution is 4.5 mM or less.

40. The electrochemical reaction device according to any one of claims 15 and 36 to 39, comprising a measurement device that measures a halogen concentration in the electrolytic solution.

41. The electrochemical reaction device according to any one of claims 15 and 36 to 40, comprising a mechanism that reduces a halogen in the electrolytic solution into a halogen ion.

42. The electrochemical reaction device according to any one of claims 15 and 36 to 41, wherein the second catalyst is contained in the electrochemical cell.

43. A method of producing a carbonyl compound in the electrochemical reaction device according to any one of claims 15 and 36 to 42, comprising:
reducing carbon dioxide to carbon monoxide with the first catalyst, and synthesizing the carbonyl compound from the obtained carbon monoxide and the reactant.
